Europäisches Patentamt

European Patent Office

Office européen des brevets

(19)

(11) **EP 1 542 086 A2**

(12) **EUROPEAN PATENT APPLICATION**

(43) Date of publication:
**15.06.2005 Bulletin 2005/24**

(51) Int Cl.⁷: **G03G 15/00**, H04N 1/00

(21) Application number: **04029438.1**

(22) Date of filing: **13.12.2004**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **15.12.2003 JP 2003416453**<br> **23.01.2004 JP 2004015995**<br> **27.02.2004 JP 2004054283**<br> **30.11.2004 JP 2004347041**<br> **11.12.2003 JP 2003413015**<br><br>(71) Applicant: **Ricoh Company, Ltd.**<br>**Tokyo 143-8555 (JP)** | (72) Inventors:<br> • **Shimokawa, Katsumi**<br>  **Atsugi-shi Kanagawa (JP)**<br> • **Nagai, Keiji**<br>  **Kawasaki-shi Kanagawa (JP)**<br> • **Niwa, Yuichi**<br>  **Fujisawa-shi Kanagawa (JP)**<br><br>(74) Representative: **Schwabe - Sandmair - Marx**<br>**Stuntzstrasse 16**<br>**81677 München (DE)** |

(54) **Information- and image- processing apparatus and method and printer driver**

(57) In an information-processing apparatus which functions as a client terminal for an image-forming apparatus which functions as a scanner, a display unit displays a setting option screen for setting scanning conditions when requesting an image-forming apparatus to perform a scan processing. A selection unit performs automatic selection of an image-forming apparatus which is capable of performing the scan processing under the scanning conditions specified in the setting option screen. A control unit causes the image-forming apparatus chosen by the automatic selection of the selection unit, to perform the scan processing under the scanning conditions specified in the setting option screen.

FIG.1

**Description**

BACKGROUND OF THE INVENTION

1. Field of The Invention

The present invention relates to the image-forming apparatuses, such as scanner/printer/copier/facsimile/compound machine/multi-function peripheral, the information-processing apparatuses, such as storage device, personal computer and server computer, and the image-processing apparatuses, and further relates to the information-processing apparatus and method, the information-processing program, its recording medium, the image-processing apparatus, the image-processing method, the printer driver, and its recording medium.

2. Description of The Related Art

In OA (office automation) devices, the document processing (image formation processing) is performed in various forms. For example, in the scanner document data (image data) is read from the original document, in the printer the document data is printed to the recording sheet, in the copier document data (image data) is read from the original document and printed to the recording sheet, and in the facsimile the document data is transmited and received through the telephone line.

The document data (image data) printed to the recording sheet by the printer is, for example, created by the document application software, such as the word processor software or the spreadsheet software.

In recent years, the network of the OA devices progresses quickly. In order to cope with it suitably in such situations, "BMLinkS" is advocated as the standard specification concerning the integrated interface of OA devices.

In BMLinkS, the search method (discovery) of OA device, the data format in which the data is delivered and received between OA devices, the control method (job/device control) of OA device, etc. are standardized.

In BMLinkS, the function of OA device is modeled as office service. The scanning function of OA device is modeled as the scan service, the print function of OA device is modeled as the print service, the facsimile input function of OA device is modeled as the facsimile in service, the facsimile output function of OA device is modeled as the facsimile out service, and the storage function of OA device is modeled as the storage service.

Therefore, usually, for the scanner the scanning service exists, for the printer the print service exists, for the copier the copy service exists, for the facsimile the facsimile in service and the facsimile out service exist, and for the storage device the storage service exists.

With respect to the scanning service or the print service, the commands, such as the create_job command (job creation request) and the list_jobs command (job list request), are specified. With respect to the storage service, the commands, such as the create_file command (file creation request/data storing request), the list_files command (file list request/data list request), the read_data command (data read-out request), and the write_data command (data write request), are specified. In addition, in BMLinkS, the HTTP-SOAP is used as the network protocol.

Usually, at the client terminal for OA device which functions as the scanner, setting operation of the scanning conditions, such as the reading size, the reading side and the reading resolution, can be performed when requesting the OA device to perform the scan processing. However, there is the case in which a certain OA device supports only the reading size "A4" while another OA device supports the reading sizes "A4" and "A3", and the supported scanning conditions differ for every OA device.

For this reason, when it is demanded for an OA device to perform the scan processing under the desired scanning conditions, it is necessary to request a selected OA device which supports the scanning conditions to perform the scan processing.

However, usually at the client terminal for OA device which functions as the scanner, the OA device which performs the scan processing is chosen by the manual selection or the default selection, and it does not necessarily support the requested scanning conditions. Therefore, the user who requests the OA device to perform the scan processing under the desired scanning conditions needs to determine by himself the OA device which supports the desired scanning conditions. There has been such a problem in the operability when a series of operations are performed for requesting the OA device to perform the scan processing.

Moreover, usually, at the client terminal for OA device which functions as the printer, setting operation of the printing conditions, such as the printing size, the printing side and the printing resolution, can be performed at the time of requesting the OA device to perform the print processing. However, there is the case in which a certain OA device supports only the printing size "A4" while another OA device supports the printing sizes "A4" and "A3", and the supported printing conditions differ for every OA device.

For this reason, when it is demanded for an OA device to perform the print processing under the desired printing conditions, it is necessary to request a selected OA device which supports the printing conditions to perform the print processing.

However, usually at the client terminal for OA device which functions as the printer, the OA device which performs the print processing is chosen by the manual selection or the default selection, and it does not necessarily support the requested printing conditions.

Therefore, the user who requests the OA device to perform the print processing needs to determine by himself the OA device which supports the desired print conditions. There has been such a problem in the operability when a series of operations are performed for requesting the OA device to perform the print processing.

By the way, it would be convenient to the user if the user who requests the OA device to perform the scan processing can subsequently request the OA device to perform the print processing of image data produced by the scan processing concerned. However, in such a case, as is clearly apparent from the above explanation, not only the selection processing of OA device and the setting processing of the scanning conditions under which the scan processing is performed, but also the selection processing of OA device and the setting processing of the printing conditions under which the print processing is performed must be performed.

Similarly, it would be convenient to the user if the user who requests the OA device to perform the scan processing can subsequently request the OA device to perform the storage processing of image data produced by the scan processing.

Furthermore, the management of the security of OA devices is becoming another subject accompanied with the network of OA devices. Therefore, when the client for OA device accesses the OA device, it is desirable to perform authentication processing in order to keep the security of the OA device.

In such a case, what must be taken into accoint are how authentication information is acquired, how authentication information is delivered and received between the devices, and how the demand of accessing freely the OA devices and the demand of maintaining the security of the OA devices should be made compatible with each other.

Especially, in BMLinkS, what must be taken into accoint are the conformity with the concept of BMLinkS of canable of being always connectable anywhere, the compatibility with the standard specifications of BMLinkS, etc.

Moreover, there is the proposed method related to the printing system in which printing image data are skipped according to the classification of object and the contents of object, for the purpose of saving the ink and the toner (for example, see Japanese Laid-Open Patent Application No. 07-314783).

In double-sided printing, especially during a double-sided printing mode of an ink jet printer, the ink (the black ink: pigment, the color ink: dye) is absorbed by the recording sheet, and in many cases the printed image becomes back projection or an strike-through image which causes the degradation of image quality. Actually, in practical case, the setting of the printer is made so that the double-sided printing is not performed. Especially when the document image contains the solidly shaded image etc., the back projection will become remarkable.

In the case of the proposed method of Japanese Laid-Open Patent Application No. 07-314783, the density of printing dots becomes thin by saving the printing material, and it is conceivable that it is possible to make the quantity of back projection be reduced by the application to the double-sided printing as a result.

However, regardless of the difference of single side and double side printings, the skipping of printing image data is carried out in the case of Japanese Laid-Open Patent Application No. 07-314783. The amount of information which the original image contains is reduced greatly, and the printed image will have a large difference in sense of incongruity from the original image.

Simultaneously, the printed image differs from the original image by the skipping of printing image data, and the small characters, the dot image, etc. according to the contents of the image data are not the target for application and there are many restrictions.

Conversely, in the case of Japanese Laid-Open Patent Application No. 07-314783, the processing is changed on an object basis but it is directed to saving the printing material by reducing the amount of information contained in the original image, and it cannot necessarily be said that the proposed method is the suitable saving method.

Moreover, in the recent office environment in which the OA devices are widely spread, there is the increasing demand for creating the color document using the PC as an office document and printing out the color document using the color printer.

In such situations, it is in the tendency in which the amount of consumption of the ink and the toner of the color printing is increasing to be larger than that of the monochrome printing. If the need of color printing document for the customers is excluded, the need of being the beautiful color printing document as a printout form of the office document is not so high. Rather, the requirement that the information contained in the office document is just recognizable exists surely. There is surely the case in which the saving of the ink, the toner, etc. is more important.

Even in this case, although the saving of the printing material can be aimed at by applying the method of Japanese Laid-Open Patent Application No. 07-314783, the reduction of the amount of information in the original image occurs and it cannot necessarily be said that the proposed method is the suitable saving method.

SUMMARY OF THE INVENTION

An object of the present invention is to provide an improved information-processing apparatus in which the above-described problems are eliminated.

Another object of the present invention is to provide an information-processing apparatus functioning as a client terminal for an OA device functioning as a scanner in which the operability of a series of operations for requesting the OA device to perform the scan processing is raised.

Another object of the present invention is to provide an information-processing apparatus functioning as a client terminal for an OA device functioning as a scanner in which the operability of a series of operations for requesting the OA device to perform the scan processing and subsequently perform the print processing or the storage processing of image data produced by the scan processing is raised.

The above-mentioned objects of the present invention are achieved by a information-processing apparatus which functions as a client terminal for an image-forming apparatus which functions as a scanner, comprising: a display unit displaying a setting option screen for setting scanning conditions when requesting an image-forming apparatus to perform a scan processing; a selection unit performing automatic selection of an image-forming apparatus which is capable of performing the scan processing under the scanning conditions specified in the setting option screen; and a control unit causing the image-forming apparatus chosen by the automatic selection of the selection unit to perform the scan processing under the scanning conditions specified in the setting option screen.

The above-mentioned objects of the present invention are achieved by an information-processing apparatus which functions as a client terminal for an image-forming apparatus which functions as a scanner, comprising: a display unit displaying a screen including a setting option for setting scanning conditions when requesting an image-forming apparatus to perform a scan processing, an input option for inputting an automatic selection for automatically selecting an image-forming apparatus capable of performing the scan processing, and a selection option for manually selecting the image-forming apparatus capable of performing the scan processing; a selection unit performing the automatic selection of the image-forming apparatus capable of performing the scan processing under the scanning conditions specified in the setting option; and a control unit causing the image-forming apparatus, chosen by one of the automatic selection and the manual selection, to perform the scan processing under the scanning conditions specified in the setting option.

The above-mentioned objects of the present invention are achieved by an information-processing apparatus which functions as a client terminal for an image-forming apparatus which functions as a scanner, comprising: a display unit displaying a setting option screen for setting scanning conditions when requesting an image-forming apparatus to perform a scan processing; a scanner selection unit performing automatic selection of an image-forming apparatus capable of performing the scan processing under the scanning conditions specified in the setting option screen; a printer selection unit performing automatic selection of an image-forming apparatus capable of performing a print processing under printing conditions which are derived from the scanning conditions specified in the setting option screen; a scanner control unit causing the image-forming apparatus chosen by the automatic selection of the scanner selection unit to perform the scan processing under the scanning conditions specified in the setting option screen; and a printer control unit causing the image-forming apparatus chosen by the automatic selection of the printer selection unit to perform the print processing of image data produced by the scan processing under the printing conditions drived from the scanning conditions specified in the setting option screen.

The above-mentioned objects of the present invention are achieved by an information-processing apparatus which functions as a client terminal for an image-forming apparatus which functions as a scanner, comprising: a display unit displaying a screen including a setting option for setting scanning conditions when requesting an image-forming apparatus to perform a scan processing, an input option for inputting an automatic selection for automatically selecting an image-forming apparatus capable of performing the scan processing, and a selection option for inputting a manual selection for manually selecting the image-forming apparatus capable of performing the scan processing; a scanner selection unit performing the automatic selection of the image-forming apparatus capable of performing the scan processing under the scanning conditions specified in the setting option of the screen; a printer selection unit performing automatic selection of an image-forming apparatus capable of performing a print processing under printing conditions which are drived from the scanning conditions specified in the setting option of the screen; a scanner control unit causing the image-forming apparatus chosen by one of the automatic selection and the manual selection, to perform the scan processing under the scanning conditions specified in the setting option; and a printer control unit causing the image-forming apparatus chosen by the automatic selection of the printer selection unit to perform the print processing of image data produced by the scan processing under the printing conditions derived from the scanning conditions specified in the setting option.

The above-mentioned objects of the present invention are achieved by an information-processing apparatus which functions as a client terminal for an image-forming apparatus which functions as a scanner, comprising: a display unit displaying a setting option screen for setting scanning conditions when requesting an image-forming apparatus to perform a scan processing; a scanner selection unit performing automatic selection of the image-forming apparatus capable of performing the scan processing under the scanning conditions specified in the setting option screen; a scanner control unit causing the image-forming apparatus, chosen by the automatic selection of the scanner selection unit, to perform the scan processing under the scanning conditions specified in the setting option screen; and a storage control unit causing one of the image-forming apparatus and a storage device to perform a storing processing of image data produced by the scan processing.

The above-mentioned objects of the present invention are achieved by an information-processing apparatus which functions as a client terminal for an image-forming apparatus which functions as a scanner, comprising: a display unit displaying a screen including a setting option for setting scanning conditions when requesting an image-forming apparatus to perform a scan processing, an input option for inputting an automatic selection for automatically selecting an image-forming apparatus capable of performing the scan processing, and a selection option for manually selecting the image-forming apparatus capable of performing the scan processing; a scanner selection unit performing the automatic selection of the image-forming apparatus capable of performing the scan processing under the scanning conditions sepeficied in the setting option; a scanner control unit causing the image-forming apparatus, chosen by the automatic selection, to perform the scan processing under the scanning conditions specified in the setting option; and a storage control unit causing one of the image-forming apparatus and a storage device to perform a storing processing of image data produced by the scan processing.

According to the present invention, it is possible to raise the operability of a series of operations for requesting the OA device to perform the scan processing with respect to the information-processing apparatus which functions as a client terminal for OA device which functions as a scanner. Moreover, according to the present invention, it is possible to raise the operability of a series of operations for requesting the OA device to perform the print processing and the storing processing of image data produced by the scan processing as well as to request the OA device to perform the scan processing with respect to the information-processing apparatus which functions as a client terminal for OA device which functions as a scanner.

Another object of the present invention is to provide a novel and useful authentication technique related to the authentication processing which is performed when the client for OA device accesses the OA device.

The above-mentioned objects of the present invention are achieved by an information-processing apparatus which functions as a client for an image-forming apparatus, comprising: a command output unit outputting a command to one of the image-forming apparatus and a server for the image-forming apparatus; and an authentication information insertion unit inserting authentication information into the command.

The above-mentioned objects of the present invention are achieved by an information-processing apparatus which functions as a proxy server of a client for an image-forming apparatus, the information-processing apparatus comprising: a command transfer unit transmitting a command, which is outputted to one of the image-forming apparatus and a server for the image-forming apparatus by the client for the image-forming apparatus, to one of the image-forming apparatus and the server for the image-forming apparatus; and an authentication information insertion unit inserting authentication information into the command.

The above-mentioned objects of the present invention are achieved by an information-processing apparatus which functions as a proxy server of a client for an image-forming apparatus, the information-processing apparatus comprising: a command transfer unit transmitting a command, which is outputted to one of the image-forming apparatus and a server for the image-forming apparatus by the client for the image-forming apparatus, to one of the image-forming apparatus and the server for the image-forming apparatus; and an authentication information insertion unit inserting authentication information into the command, the command transfer unit being provided to transmit the command under a condition that authenticity is approved by an authentication processing based on the authentication information inserted in the command.

The above-mentioned objects of the present invention are achieved by an information-processing apparatus which functions as a client for a storage device, the information-processing apparatus comprising: a command output unit outputting a command to one of the storage device and a server for the storage device; and an authentication information insertion unit inserting authentication information into the command.

The above-mentioned objects of the present invention are achieved by an information-processing apparatus which functions as a proxy server of a client for a storage device, the information-processing apparatus comprising: a command transfer unit transmitting a command, which is outputted to one of the storage device and a server for the storage device by the client for the storage device, to one of the storage device and the server for the storage device; and an authentication information insertion unit inserting authentication information into the command.

The above-mentioned objects of the present invention are achieved by an information-processing apparatus which functions as a proxy server of a client for a storage device, the information-processing apparatus comprising: a command transfer unit transmitting a command, which is outputted to one of the storage device and a server for the storage device by the client for the storage device, to one of the storage device and the server for the storage device; and an authentication information insertion unit inserting authentication information into the command, the command transfer unit being provided to transmit the command under a condition that authenticity is approved by an authentication processing based on the authentication information inserted in the command.

According to the present invention, it is possible to provide a novel and useful authentication technique related to the authentication processing which is performed when the client for OA device accesses the OA device.

Another object of the present invention is to provide an image-processing apparatus and method and a printer driver which are capable of saving the printing material without avoiding the degradation of the quality of image due to the reduced amount of information as much as possible, and without causing the restriction according to the classification of image data

The above-mentioned objects of the present invention are achieved by a printer driver which is installed in a computer connected to a printer and causes the computer to execute an image-processing method associated with the printer, the image-processing method comprising the steps of: setting selectively a concentration reduction mode in which a printing concentration is reduced according to a classification of an object of image data concerned, in response to a print request having the image data concerned; recognizing the object of the image data and separating the image data from the object; performing a concentration reduction processing to reduce the printing concentration of the separated image data according to a classification of a target object in response to the setting of the concentration reduction mode; and creating a dot image pattern based on the processed image data in which the concentration reduction processing is performed, and outputting the dot pattern image to the printer.

The above-mentioned objects of the present invention are achieved by an image-processing apparatus which is used by connecting the image-processing apparatus to a printer, the image-processing apparatus comprising: a first unit setting selectively a concentration reduction mode in which a printing concentration is reduced according to a classification of an object of image data concerned, in response to a print request having the image data concerned; a second unit recognizing the object of the image data and separating the image data from the object; a third unit performing a concentration reduction processing to reduce the printing concentration of the separated image data according to a classification of a target object in response to the setting of the concentration reduction mode; and a fourth unit creating a dot image pattern based on the processed image data in which the concentration reduction processing is performed, and outputting the dot pattern image to the printer.

The above-mentioned objects of the present invention are achieved by a n image-processing method which is performed by an image-processing apparatus connected to a printer, the image-processing method comprising the steps of: setting selectively a concentration reduction mode in which a printing concentration is reduced according to a classification of an object of image data concerned, in response to a print request having the image data concerned; recognizing the object of the image data and separating the image data from the object; performing a concentration reduction processing to reduce the printing concentration of the separated image data according to a classification of a target object in response to the setting of the concentration reduction mode; creating a dot image pattern based on the processed image data in which the concentration reduction processing is performed; and outputting the dot pattern image to the printer.

According to the present invention, it is possible to save the printing material without avoiding the degradation of the quality of image due to the reduced amount of information as much as possible, and without causing the restriction according to the classification of image data. Especially, it is possible to suitably apply the present invention to office color document printing or double-sided printing applications.

As mentioned above, the present invention makes it possible to solve various problems which may arise with respect to the OA devices and the client for OA devices.

BRIEF DESCRIPTION OF THE DRAWINGS

Other objects, features and advantages of the present invention will be apparent from the following detailed description when reading in conjunction with the accompanying drawings.

FIG. 1 is a block diagram showing the arrangement of scanner-related OA devices to which a PC in the preferred embodiment of the invention is connected.

FIG. 2 is a block diagram showing the arrangement of printer-related OA devices to which a PC in the preferred embodiment of the invention is connected.

FIG. 3 is a block diagram showing the hardware composition of the PC of FIG. 1 or FIG. 2.

FIG. 4 is a block diagram showing the software composition of the PC of FIG. 1 or FIG. 2.

FIG. 5 is a flowchart for explaining the information processing which is performed by the PC of FIG. 1 or FIG. 2.

FIG. 6 is a flowchart for explaining the processing of step J in the information processing of FIG. 5.

FIG. 7 is a flowchart for explaining the processing of step O in the information processing of FIG. 5.

FIG. 8 is a flowchart for explaining the processing of step B in the information processing of FIG. 5.

FIG. 9 is a flowchart for explaining the processing of step C in the information processing of FIG. 5.

FIG. 10 is a flowchart for explaining the registration processing of the logic scanners.

FIG. 11 is a flowchart for explaining the registration processing of the fixed conditions.

FIG. 12A, FIG. 12B and FIG 12C are diagrams showing the data structure of the scanning condition base, the logic scanner, and the fixed conditions.

FIG. 13 is a diagram for explaining the data flow (detailed retrieval level) of the automatic selection of the scanner.

FIG. 14 is a diagram for explaining the data flow (simple retrieval level) of the automatic selection of the scanner.

FIG. 15A, FIG. 15B and FIG. 15C are diagrams showing the data structure of the print condition base, the logic printer, and the fixed conditions.

FIG. 16 is a diagram for explaining the data flow (detailed retrieval level) of the automatic selection of the printer.

FIG. 17 is a diagram for explaining the data flow (simple retrieval level) of the automatic selection of the printer.

FIG. 18 is a diagram for explainng the data flow diagram in the print condition creation processing.

FIG. 19 is a diagram showing the logic scanner registration screen.

FIG. 20 is a diagram showing the fixed condition registration screen.

FIG. 21 is a diagram showing the scanning condition setting UI screen.

FIG. 22 is a diagram showing the scanner selection UI screen.

FIG. 23 is a diagram showing the scanner selection result notice UI screen.

FIG. 24 is a diagram showing the printer selection UI screen.

FIG. 25 is a diagram showing the printer selection result notice UI screen.

FIG. 26 is a block diagram showing the arrangement of OA devices which are connected in the network of the OA devices.

FIG. 27 is a block diagram showing a modification of the arrangement of OA devices which are connected in the network of the OA devices.

FIG. 28 is a block diagram showing the hardware composition of the printer in the device arrangement of FIG.26 or FIG. 27.

FIG. 29 is a block diagram showing the hardware composition of the scanner in the device arrangement of FIG. 26 or FIG. 27.

FIG. 30 is a block diagram showing the hardware composition of the storage device in the device arrangment of FIG. 26 or FIG. 27.

FIG. 31 is a block diagram showing the hardware composition of the PC in the device arrangment of FIG. 26 or FIG. 27.

FIG. 32 is a block diagram showing the hardware composition of the proxy server in the device arrangment of FIG. 26 or FIG. 27.

FIG. 33 is a block diagram showing the hardware composition of the print server in the device arrangement of FIG. 27.

FIG. 34 is a block diagram showing the hardware composition of the scanning server in the device arrangement of FIG. 27.

FIG. 35 is a block diagram showing the hardware composition of the storage server in the device arrangement of FIG. 27.

FIG. 36 is a diagram showing the printer operation screen which is displayed on the display screen of the PC.

FIG. 37 is a diagram showing the authentication information setting screen which is displayed on the display screen of the PC.

FIG. 38 is a diagram showing an example of the script of the command (before the insertion of authentication information) of the job creation request.

FIG. 39 is a diagram showing an example of the script of the command (after the insertion of the authentication information) of the job creation request.

FIG. 40 is a diagram showing an example of the script of the job creation response.

FIG. 41A, FIG. 41B and FIG. 41C are diagrams for explaining the composition of the devices which perform the authentication information insertion processing.

FIG. 42 is a diagram showing an example of the table for managing the authentication information.

FIG. 43 is a flowchart for explaining the authentication information insertion processing which is performed by the printer driver.

FIG. 44 is a flowchart for explainng the authentication information insertion processing which is performed by the proxy service.

FIG. 45 is a flowchart for explaining the authentication information acquisition processing which is performed by the printer driver and the proxy service.

FIG. 46 is a diagram showing an example of the script of the command for requesting the functional information supply.

FIG. 47 is a diagram showing an example of the script of the response to the functional information supply request.

FIG. 48 is a flowchart for explaining the functional information supply processing which is performed by the print service.

FIG. 49 is a diagram showing an example of the script of the authentication request command.

FIG. 50 is a diagram showing an example of the script of the authentication response (when authentication is successful).

FIG. 51 is a diagram showing an example of the script of the authentication response (when authentication is not successful).

FIG. 52 is a diagram showing an example of the ACL.

FIG. 53 is a diagram showing an example of the script of the policy information supply request command.

FIG. 54 is a diagram showing an example of the script of the response to the policy information supply rerequest.

FIG. 55 is a diagram showing an example of the script of the job creation request command before the correction.

FIG. 56 is a diagram showing an example of the script of the job creation request command before the correction.

FIG. 57 is a flowchart for explaining the command-execution processing which is performed by the print service.

FIG. 58 is a flowchart for explaining the command correction processing which is performed by the print service.

FIG. 59 is a flowchart for explaining the command transfer processing which is performed by the proxy service in the proxy server.

FIG. 60 is a flowchart for explaining the command transfer processing which is performed by the proxy service in the proxy server.

FIG. 61 is a block diagram showing the composition of the printing system in the preferred embodiment of the invention.

FIG. 62 is a side view of the ink jet printer showing the sheet conveyance path in the ink jet printer.

FIG. 63 is a block diagram showing the software composition of the ink jet printer and the host system.

FIG. 64 is a block diagram showing the functional composition of the printer driver.

FIG. 65 is a diagram for explaining the object separation processing.

FIG. 66 is a diagram for explaining the object separation processing in the practical example.

FIG. 67A and FIG. 67B are diagrams showing examples of ink drop projection concerning the concentration reduction.

FIG. 68 is a diagram showing an example of the contents setting screen of the concentration reduction mode.

FIG. 69 is a diagram showing an example of the contents of the table indicating the setting of the concentration reduction mode.

FIG. 70 is a flowchart for explaining an example of printing processing control.

FIG. 71A and FIG. 71B are diagrams showing an example of the printout.

FIG. 72A and FIG. 72B are diagrams showing another example of the printout.

## DETAILED DESCRIPTION OF PREFERRED EMBODIMENTS

A description will now be given of the preferred embodiments of the invention with reference to the accompanying drawings.

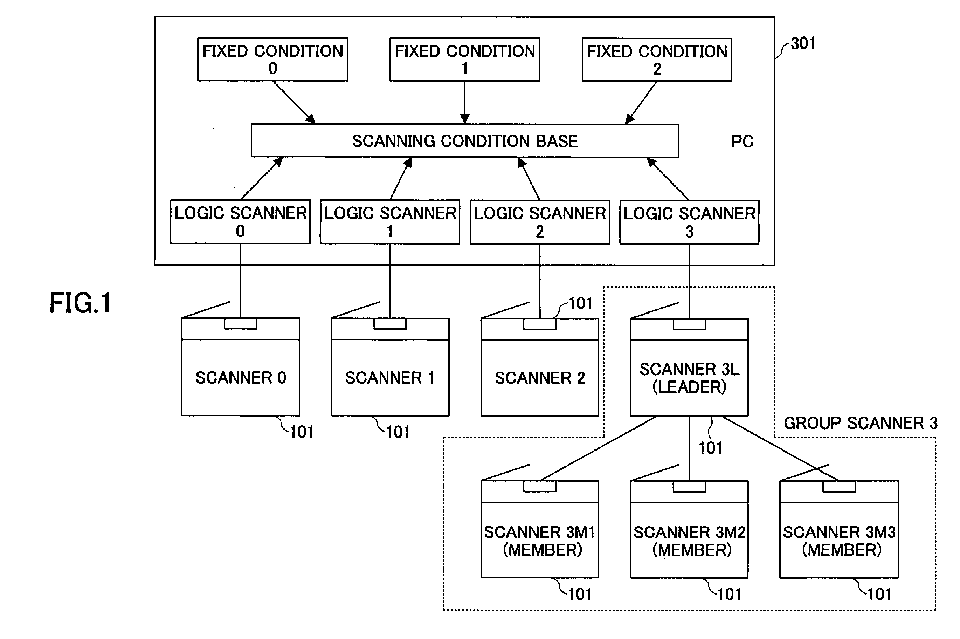

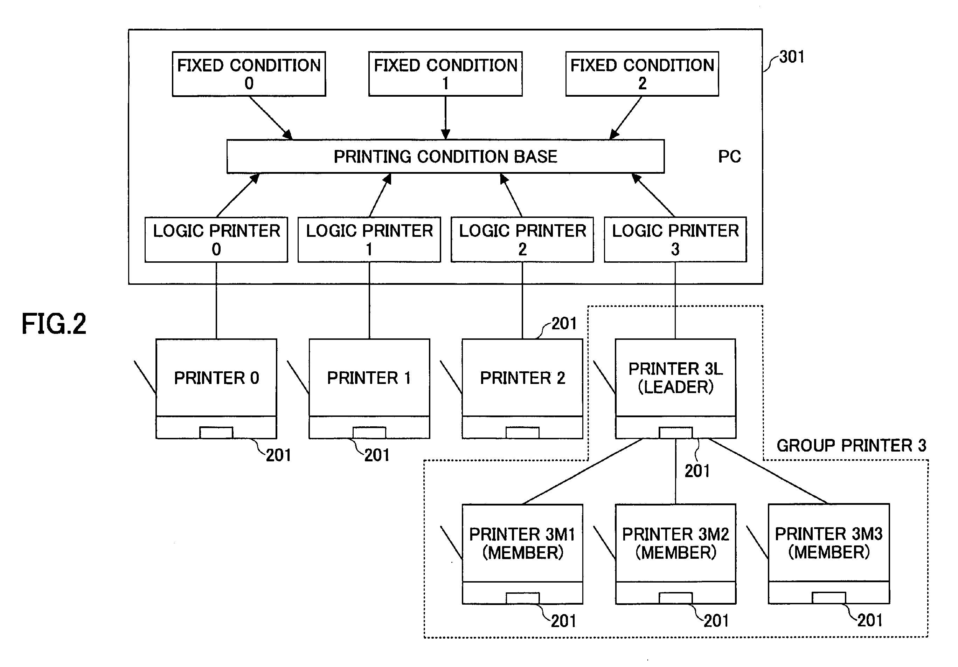

FIG. 1 and FIG. 2 show the arrangement of OA devices to which the PC (personal computer) 301 in the preferred embodiments of the invention is connected.

PC 301 of FIG. 1 and PC 301 of FIG. 2 are the same device, the arrangement of FIG. 1 relates to the plurality of scanners 101 connected with PC 301, and the arrangment of FIG. 2 relates to the plurality of printers 201 connected with PC 301.

The PC 301 of FIG. 1 or FIG. 2 is the information-processing apparatus which functions as a client terminal for each scanner 101 of FIG. 1 or each printer 201 of FIG. 2.

In the device arrangement of FIG. 1, the scanners 0, 1, 2, 3L, 3M1, 3M2, and 3M3 are connected to PC 301. Moreover, in the device arrangement of FIG. 1, the scanners 3L, 3M1, 3M2, and 3M3 constitute the group scanner 3 which includes the scanner 3L as the group leader and the scanners 3M1, 3M2 and 3M3 as the group members, respectively.

PC 301 detects automatically the connection with the scanner 0, the scanner 1, the scanner 2, and the group scanner 3, and creates the logic scanner 0, the logic scanner 1, the logic scanner 2, and the logic scanner 3, respectively.

The logic scanners 0, 1, and 2 are the objects which correspond to the scanners 0, 1, and 2 with the one-to-one correspondence, respectively, and the scanning conditions which supported by the scanners 0, 1, and 2 are managed as the attributes of the logic scanners 0, 1, and 2, respectively.

The logic scanner 3 is the object corresponding to the group scanner 3 with the one-to-one correspondence, and the scanning conditions which are supported by the scanners 3L, 3M1, 3M2, and 3M3 which constitute the group scanner 3, are managed collectively as the attributes of the logic scanner 3, respectively.

PC 301 creates the scanning condition base by using the logic scanners and the fixed conditions, and provides the scanner operation UI (user interface) by using the scanning condition base.

Therefore, the user is made to recognize the scanners 3L, 3M1, 3M2, and 3M3 as a single scanner. By using this, it is possible to increase the operability of the scanner operation UI by making the user recognize the scanners which are installed in close vicinity as being a single scanner.

In addition, the details of the logic scanner, the fixed conditions, and the scanning condition base will be explained later.

In the device arrangement of FIG. 2, the printers 0, 1, 2, and 3L, 3M1, 3M2, and 3M3 are connected to PC 301. Moreover, in the device arrangement of FIG. 2, the printers 3L, 3M1, 3M2, and 3M3 constitute the group printer 3 which includes the printer 3L as the group leader, and the printers 3M1, 3M2, and 3M3 as the group members, respectively.

PC 301 detects automatically the connection with the printer 0, the printer 1, the printer 2, and the group printer 3, and creates the logic printer 0, the logic printer 1, the logic printer 2, and the logic printer 3, respectively. The logic printers 0, 1, and 2 are the objects which correspond to the printers 0, 1, and 2 with the one-to-one correspondence, respectively, and the printing conditions which are supported by the printers 0, 1, and 2 are managed as the attributes of the logic printers 0, 1, and 2, respectively.

The logic printer 3 is the object corresponding to the group printer 3 with the one-to-one correspondence, and the printing conditions which are supported by the printers 3L, 3M1, 3M2, and 3M3 which constitute the group printer 3, are managed collectively as the attributes of the logic printer 3.

PC 301 creates the print condition base by using the logic printers and the fixed conditions, and provides the printer operation UI (user interface) by using the print condition base. Therefore, the user is made to recognize the printers 3L, 3M1, 3M2, and 3M3 as a single printer.

By using this, it is possible to increase the operability of the printer operation UI by making the user recognize the printers which are installed in vicinity, as being a single printer.

In addition, the details of the logic printers, the fixed conditions, and the print condition base will be explained later.

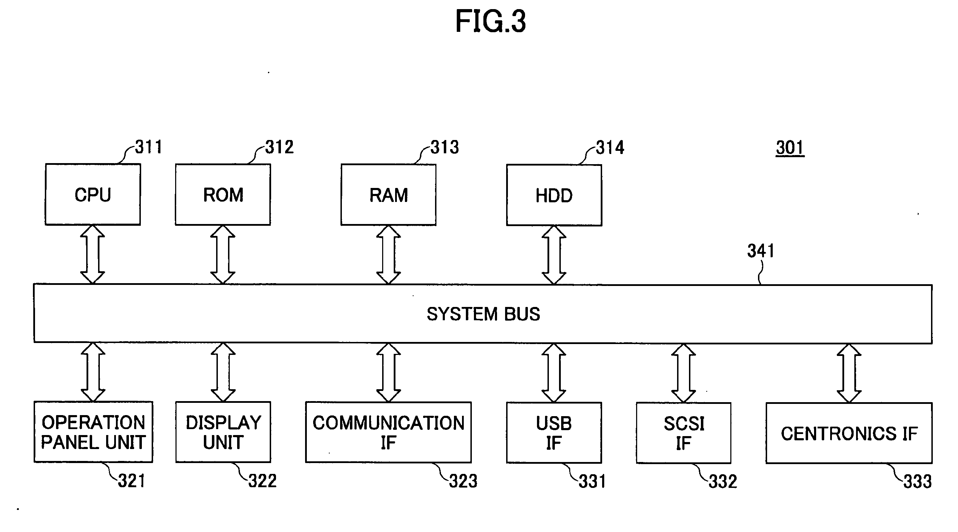

FIG. 3 shows the hardware composition of the PC 301 of FIG. 1 or FIG. 2.

The PC 301 of FIG. 1 or FIG. 2 comprises the CPU 311, the ROM 312, the RAM 313, the HDD (hard disk drive) 314, the operation panel unit 321, the display unit 322, the communication unit 323, the USB interface 331, the SCSI interface 332, and the Centronics interface 333. These hardware components are interconnected by the system bus 341.

CPU 311 is the hardware which performs various information processing. ROM 312 is the hardware in which the information processing program is stored. RAM 313 is the information processing memory. HDD314 is the information processing recording medium, and this is the hardware in which the information processing program is stored.

The operation panel unit 321 is the hardware for the user to input the operational information to PC 301, and this is constituted by the keyboard, the mouse, etc.

The display unit 322 is the hardware for the user to receive the output of PC 301, and this is constituted by the display monitor etc.

The communication unit 323 is the hardware for connecting PC 301 to the network, such as the Ethernet (registered trademark) and the telephone line, and this is constituted by the NIC, the MODEM, etc.

The USB interface 331 is the interface for connecting the cable in conformity with the USB specifications.

The SCSI interface 332 is the interface for connecting the cable in conformity with the SCSI specifications.

The Centronics interface 333 is the interfaces for connecting the cable in conformity with the Centronics specifications.

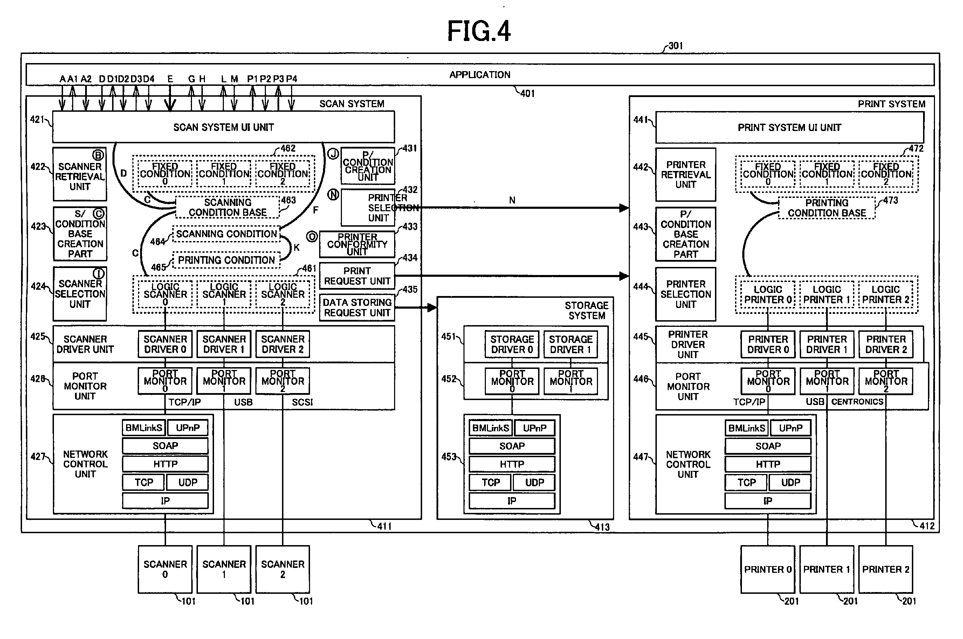

FIG. 4 shows the software composition of the PC 301 of FIG. 1 or FIG. 2.

The PC 301 of FIG. 1 or FIG. 2 comprises the application 401, the scan system 411, the print system 412, and the storage system 413.

The application 401 is, for example, the application program for electronic-filing-document management.

The scan system 411 comprises the functional blocks including the scan system UI unit 421, the scanner retrieval unit 422, the scanning condition base creation unit 423, the scanner selection unit 424, the scanner driver unit 425, the port monitor unit 426, the network control unit 427, the print condition creation unit 431, the printer selection request unit 432, the printer conformity unit 433, the print request unit 434, and the data storing request unit 435.

The scan system UI unit 421 is the functional block which provides the scanner operation UI (user interface). The scanner retrieval unit 422 is the functional block which outputes the scanner retrieval request (broadcasting) and performs scanner retrieval (discovery).

The scanner retrieval unit 422 detects automatically the connection with the scanners 0, 1 and 2, and creates the logic scanners 0, 1 and 2 respectively. The scanning condition base creation unit 423 is the functional block which creates the scanning condition base which is the database containing the correspondence relation between the scanners which support the scanning conditions and the scanning conditions concerned.

The scanning condition base creation unit 423 creates the scanning condition base 463 using the logic scanners 0 and 1 and 2 stored in the logic scanner data area 461, and the fixed conditions 0 and 1 and 2 stored in the fixed condition data area 462.

The scanner selection unit 424 is the functional block which performs automatic selection of the scanners which support the scanning conditions set up by the scanner operation UI.

The scanner driver unit 425 is the functional block which performs control for causing the scanner to perform the scan processing.

The port monitor unit 426 is the functional block which supervises the port where the scanner is connected.

The network control unit 427 is the functional block which performs communication control for performing the scanner and data communication through the network.

The network control unit 427 supports the network protocols, such as BMLinkS, UPnP (Universal Plug and Play), SOAP (Simple Object Access Protocol), HTTP (HyperText Transfer Protocol), TCP (Transmission Control Protocol), UDP (User Datagram Protocol) and IP (Internet Protocol).

The print condition creation unit 431 is the functional block which diverts the scanning conditions set up by the scanner operation UI to the printing conditions, and creates the printing conditions.

In addition, the scanning conditions are stored in the scanning condition data area 464, and the printing conditions are stored in the print condition data area 465.

The printer selection request unit 432 is the functional block which requests to the print system 412 the automatic selection of the printer which supports the printing conditions to which the scanning conditions set up by the scanner operation UI are diverted.

The printer conformity unit 433 will be described later. The print request unit 434 is the functional block which requests the print system 412 to cause the printer to perform the print processing.

The data storing request unit 435 is the functional block which requests the storage system 413 to cause the OA devices, such as the scanner, the printer, and the storage device, to perform the data store processing.

The print system 412 comprises the functional blocks including the print system UI unit 441, the printer retrieval unit 442, the print condition base creation unit 443, the printer selection unit 444, the printer driver unit 445, the port monitor unit 446, and the network control unit 447.

The print system UI unit 441 is the functional block which provides the printer operation UI (user interface). The printer retrieval unit 442 is the functional block which outputes the printer retrieval request (broadcasting) and performs the printer retrieval request (discovery). The printer retrieval unit 442 detects automatically the connection with the printers 0, 1 and 2, and creates the logic printers 0, 1 and 2 respectively.

The print condition base creation unit 443 is the functional block which creates the print condition base which is the database containing the correspondence relation between the printers which support the printing conditions and the printing conditions concerned.

The print condition base creation unit 443 creates the print condition base 473 by using the logic scanners 0 and 1 and 2 stored in the logic printer data area 471, and the fixed conditions 0 and 1 and 2 stored in the fixed condition data area 472.

The printer selection unit 444 is the functional block which performs the automatic selection of the printer which supports the printing conditions to which the scanning conditions set up by the scanner operation UI are diverted, and the printing conditions set up by the printer operation UI.

The printer driver unit 445 is the functional block which performs control for causing the printer to perform the print processing. The port monitor unit 446 is the functional block which supervises the ports where the printers are connected.

The network control unit 447 is the functional block which performs communication control for performing the data communication with the printer through the network.

The network control unit 447 supports the network protocols, such as BMLinkS, UPnP (Universal Plug and Play), SOAP (Simple Object Access Protocol), HTTP (HyperText Transfer Protocol), TCP (Transmission Control Protocol), UDP (User Datagram Protocol) and IP (Internet Protocol).

The storage system 413 comprises the functional blocks including the storage driver unit 451, the port monitor unit 452, and the network control unit 453.

The storage driver unit 451 is the functional block which performs control for causing the OA devices, such as the scanner, the printer, and the storage device, to perform the data storing processing.

The port monitor unit 452 is the functional block which supervises the ports where the OA devices are connected.

The network control unit 453 is the functional block which performs communication control for performing the data communication with the OA device through the network.

The network control unit 453 supports the network protocols, such as BMLinkS, UPnP (Universal Plug and Play), SOAP (Simple Object Access Protocol), HTTP (HyperText Transfer Protocol), TCP (Transmission Control Protocol), UDP (User Datagram Protocol), and IP (Internet Protocol).

Based on the above explanation, the image forming processing which is performed by the devices of FIG. 1 or FIG. 2 will be explained.

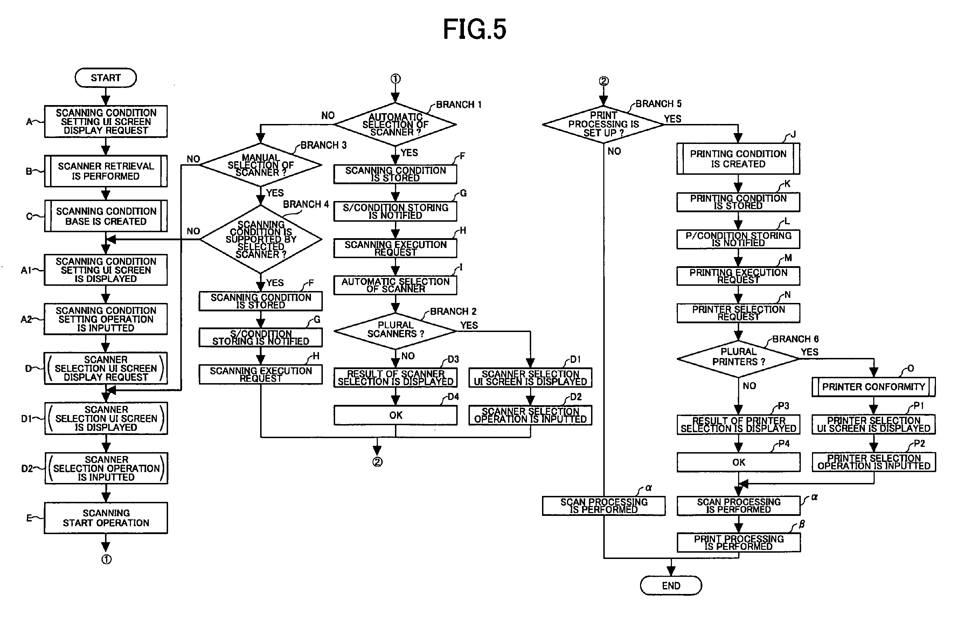

FIG. 5 is a flowchart for explaining the information processing which is performed by the PC 301 of FIG. 1 or FIG. 2.

The reference numerals of the steps A, B, C, etc. in FIG. 5 correspond to the reference numerals A, B, C, etc. in FIG. 4, respectively.

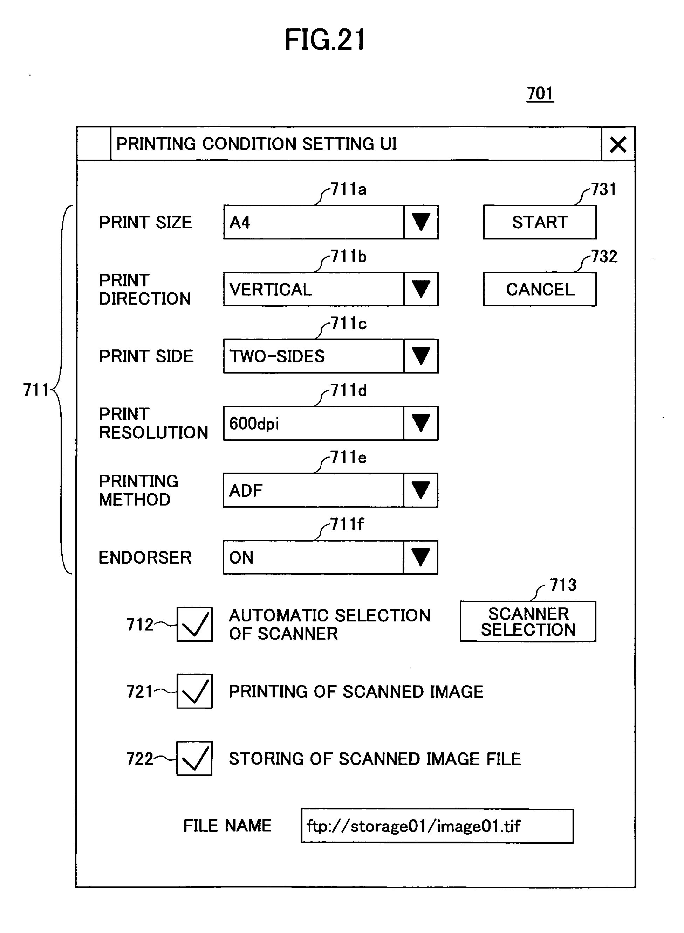

When the scanning condition setting UI screen display request from the application 401 is received by the scan system UI unit 421 in PC 301 (step A), the scanner retrieval is performed by the scanner retrieval unit 422 (step B). And the scanning condition base is created by the scanning condition base creation unit 423 (step C), and the screen display of the scanning condition setting UI (refer to FIG. 21) is performed by the scan system UI unit 421 (step A1). Setting operation of the scanning conditions is inputted by the scanning condition setting UI (step A2).

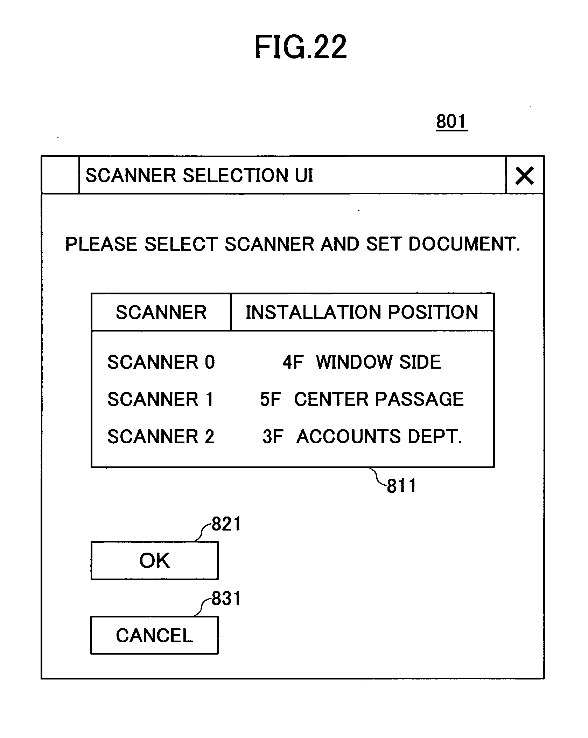

When the scanner selection UI screen display request from the application 401 is received by the scan system UI unit 421 in PC 301 (step D), the screen display of the scanner selection UI (refer to FIG. 22) is performed by the scan system UI unit 421 (step D1). Selection operation of the scanner is inputted by the scanner selection UI (step D2).

Thus, the scanning conditions are set up by the scanning condition setting UI (steps A, A1, and A2), and the scanner is chosen by the manual selection by the scanner selection UI (steps D, D1, and D2).

In addition, when choosing the scanner by the automatic selection, it is not necessary to perform the steps D, D1, and D2.

Subsequently, when the start operation of the scan processing is inputted (step E), the following information processing will be performed.

First, PC 301 makes the preparations for carrying out the scan processing. In PC 301, when the setting which chooses the scanner by the automatic selection is set up (branch 1), the scanning conditions set up by the scanning condition setting UI are stored in the scanning condition data area 464 by the scan system UI unit 421 (step F), and the notice of scanning condition storing is sent from the scan system UI unit 421 to the application 401 (step G).

According to this, in PC 301, the scanning execution request from the application 401 is sent to the scan system UI unit 421 (step H). The automatic selection of the scanner which supports the scanning conditions stored in the scanning condition data area 464 is performed by the scanner selection unit 424 (step I).

PC 301 causes the scanner chosen by the automatic selection, to perform the scan processing under the scanning conditions stored in the scanning condition data area 464.

When the multiple selection of the candidates for the scanners which perform the scan processing is carried out by the automatic selection (i.e., when the multiple selection of the scanners which support the scanning conditions stored in the scanning condition data area 464 is carried out by the automatic selection) (branch 2), the screen display of the scanner selection UI (refer to FIG. 22) is carried out by the scan system UI unit 421 (step D1). Selection operation of the scanner is inputted by the scanner selection UI (step D2).

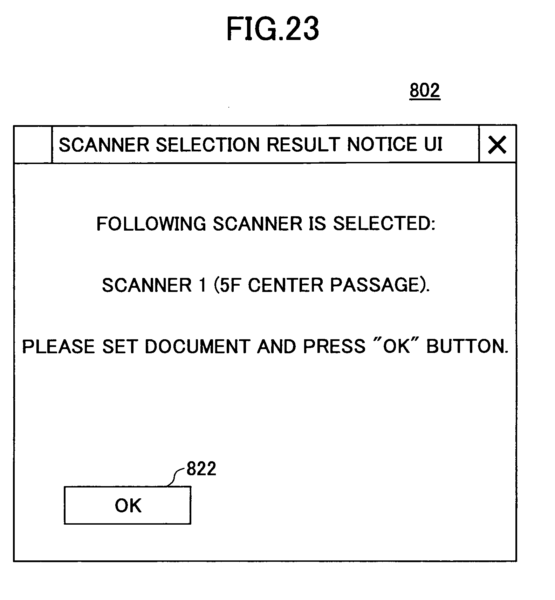

When it is not the multiple selection of the scanners (branch 2), the screen display of the result of the scanner selection (refer to FIG. 23) is carried out by the scan system UI unit 421 (step D3).

In PC 301, when the setting which chooses the scanner by the automatic selection is not set up (branch 1), the scanning conditions set up by the scanning condition setting UI are stored in the scanning condition data area 464 by the scan system UI unit 421 (step F), under conditions that the scanner is chosen by the manual selection by the scanner selection UI (branch 3), and that the scanner chosen by the manual selection by the scanner selection UI supports the scanning conditions which are set up by the scanning condition setting UI (branch 4). And the notice of scanning condition storing (step G) is sent to the application 401 from the scan system UI unit 421.

According to this, in PC 301, the scanning execution request from the application 401 is sent to the scan system UI unit 421 (step H). PC 301 causes the scanner chosen by the manual selection, to perform the scan processing under the scanning conditions stored in the scanning condition data area 464.

Further, PC 301 makes suitably the preparations for carrying out print processing of the image data produced by the scan processing.

When the setting which carries out print processing of the image data produced by the scan processing is set up (branch 5), the printing conditions to which the scanning conditions stored in the scanning condition data area 464 are diverted are created by the print condition creation unit 431 in PC 301 (step J). The created printing conditions are stored in the print condition data area 465 (step K), and the notice of print condition storing is sent to the application 401 from the print system UI unit 421 in PC 301 (step L).

According to this, in PC 301, the print execution request is sent to the scan system UI unit 421 from the application 401 (step M). The automatic selection request of the printer which supports the printing conditions stored in the print condition data area 465 is sent to the print system 412 from the printer selection request unit 432 (step N).

In the print system 412, the automatic selection of the printer which supports the printing conditions concerned is performed, similar to the automatic selection of the scanner performed in the scan system 411. PC 301 causes the printer chosen by the automatic selection, to perform the print processing under the printing conditions stored in the print condition data area 465.

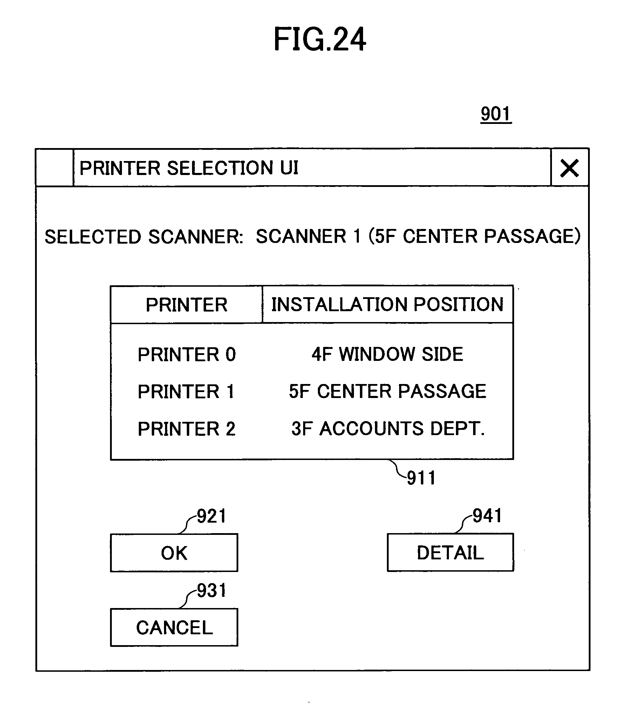

When the multiple selection of the candidates for the printers which perform the print processing is carried out by the automatic selection (i.e., when the multiple selection of the printers which support the printing conditions stored in the print condition data area 465 is carried out by the automatic selection) (branch 6), the printer conformity processing is performed by the printer conformity unit 433 (step O), and the screen display of the printer selection UI (refer to FIG. 24) is carried out by the scan system UI unit 421 (step P1). Selection operation of the printer is inputted by the printer selection UI (step P2).

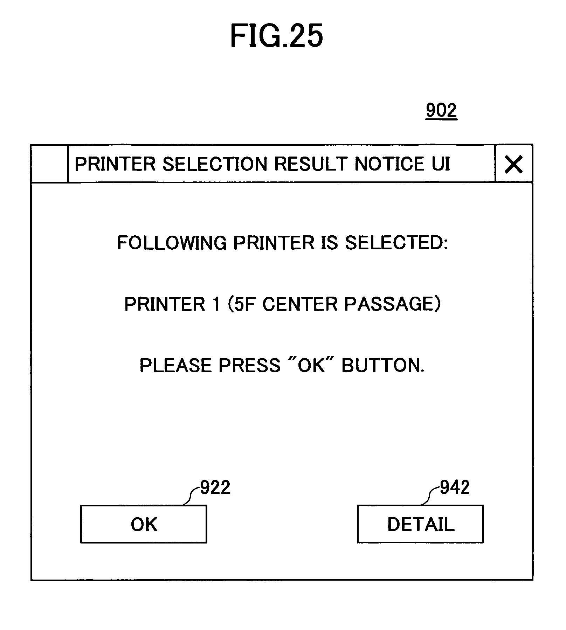

When it is not the multiple selection of the printers (branch 6), the screen display of the result of the printer selection (refer to FIG. 25) is carried out by the scan system UI unit 421 (step P3).

In addition, the information processing of the steps O, P1, and P3 may be performed by the print system 412 instead of the scan system 411.

When the setting which carries out the print processing of the image data produced by the scan processing after all is set up (branch 5), PC 301 causes the scanner to perform the scan processing by the scanner driver 425 (step α), and subsequently causes the printer to perform the print processing by the printer driver 445 according to the print request sent from the print request unit 434 to the print system 412 (step β).

Namely, according to the start operation (step E) of the scan processing, not only the scan processing which reads the image data from the original document is performed (step α), but also the print processing which prints the image data to the recording sheet is performed (step β).

When the setting which carries out print processing of the image data produced by the scan processing is not set up (branch 5), only the scanner is caused to perform the scan processing by the scanner driver 425 (step α) and the processing is terminated.

In addition, it is the same as described above for the case in which the setting which carries out the data store processing of the image data produced by the scan processing is set up.

When the setting which carries out the data store processing of the image data produced by the scan processing is set up, PC 301 causes the scanner to perform the scan processing by the scanner driver 425 and subsequently causes the OA device to perform the data store processing by the storage driver 451 according to the data storing request sent to the storage system 413 from the data storing request unit 435.

Namely, according to the start operation of the scan processing, not only the scan processing which reads the image data from the original document is performed, but also the data store processing which stores the image data in the storage is performed.

When the setting which carries out the data store processing of the image data produced by the scan processing is not set up, the scanner is caused to perform only the scan processing by the scanner driver 425 and the processing is terminated.

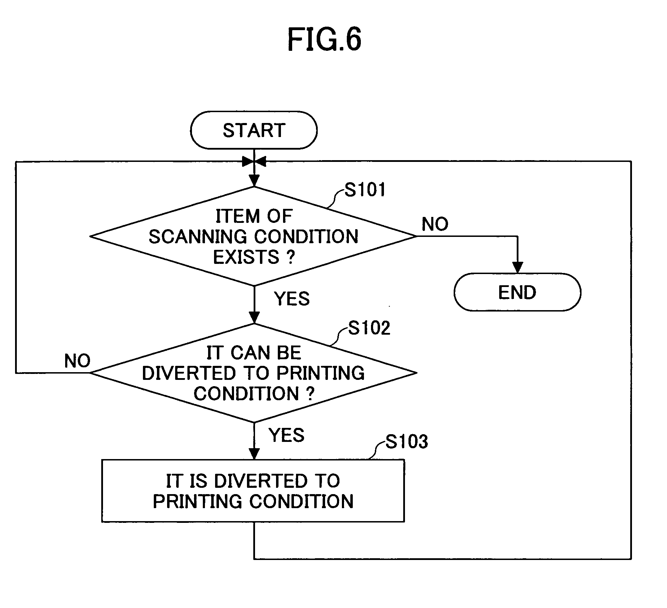

FIG. 6 is a flowchart for explaining the processing of step J of FIG. 5.

The print condition creation unit 431 determines at the step J whether any item of the scanning conditions stored in the scanning condition data area 464 exists (S101). It determine whether the scanning condition item can be diverted to the printing conditions (S102).

With respect to each item of the scanning conditions with which the diversion to the printing conditions is determined as being possible, the print condition creation unit 431 convertes the scanning condition item concerned into the printing condition item that corresponds to the scanning condition item concerned (S 103).

For example, the scanning conditions, such as reading size, the reading direction, the reading side and the reading resolution when performing the scan processing on the scanner, are converted into the corresponding printing conditions, such as the printing size, the printing direction, the printing side and the printing resolution when performing the print processing on the printer.

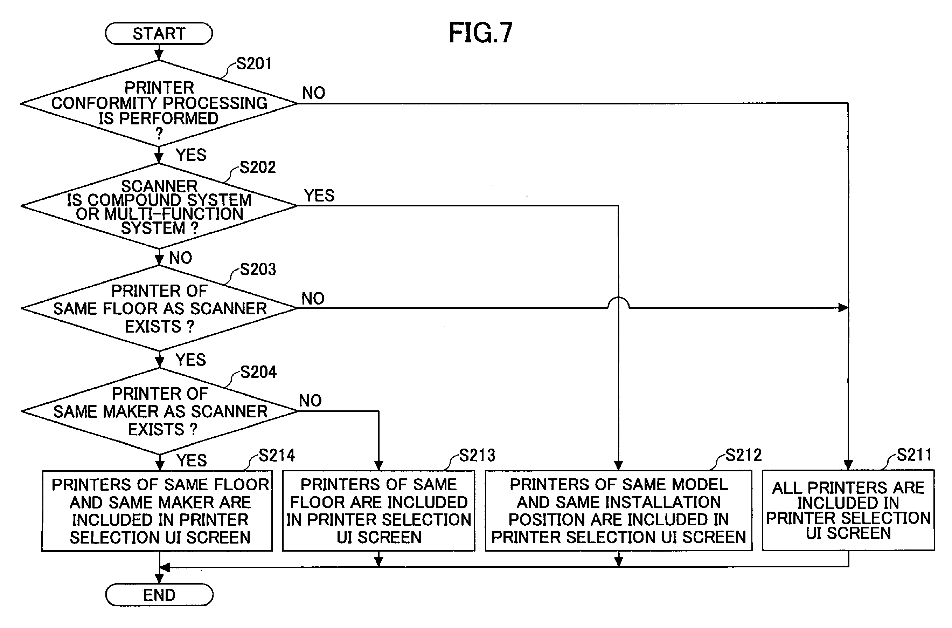

FIG. 7 is a flowchart for explaining the processing of step O of FIG. 5.

In step O, the printer conformity unit 433 carries out the printer conformity processing which selects the printer suitable for carrying out the print processing and the scan processing with the scanner chosen by the automatic selection or manual selection, from the plurality of printers chosen by the automatic selection.

The details of printer conformity processing will be explained with reference to FIG. 7.

When the setting which does not carry out the printer conformity processing is set up (S201), the printer conformity unit 433 terminates the step O and all the printers chosen by the automatic selection are included as a screen-display object of the printer selection UI (S211).

When the setting which carries out the printer conformity processing is set up (S201) and the scanners chosen by the automatic selection or manual selection are the compound system or the multi-function system (S202), the printer conformity unit 433 terminates the step O, and the printers which are of the same model and the same installation position as the scanners chosen by the automatic selection or manual selection among the printers chosen by the automatic selection are include as a screen-display object of the printer selection UI (S212).

When the scanners chosen by the automatic selection or manual selection are not the compound system or the multi-function system (S202) and there is no printer which is installed at the same floor as the scanners chosen by the automatic selection or manual selection (S203), the printer conformity unit 433 terminates the step O, and all the printers chosen by the automatic selection are included as a screen-display object of the printer selection UI (S211).

When any printers are installed at the same floor as the scanners chosen by the automatic selection or manual selection (S203) and there is no printer which is of the same maker as the scanners chosen by the automatic selection or manual selection (S204), the printer conformity unit 433 termiantes the step O, and the printers of the same floor as the scanner chosen by the automatic selection or manual selection among the printers chosen by the automatic selection are included as a screen-display object of the printer selection UI (S213).

When there are any printers which are of the same maker as the scanners chosen by the automatic selection or manual selection (S204), the printer conformity unit 433 terminates the step O and the printers which are of the same maker and installed at the same floor as the scanners chosen by the automatic selection or manual selection among the printers chosen by the automatic selection, are included as a screen-display object of the printer selection UI (S214).

In addition, in the printer conformity processing, when the printers which should be included as the screen-display object of the printer selection UI become a single printer, the steps P3 and P4 are performed following the step O instead of the steps P1 and P2.

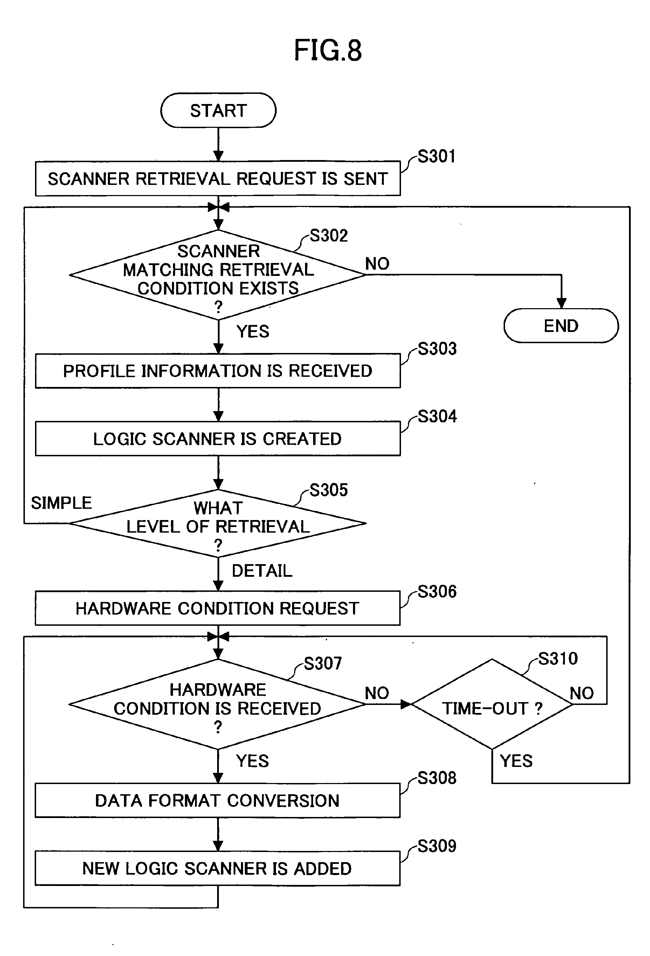

FIG. 8 is a flowchart for explaining the processing of step B of FIG. 5.

At step B, the scanner retrieval unit 422 outputes the scanner retrieval request (broadcasting) first that scanner retrieval (discovery) should be performed (S301).

The scanner retrieval unit 422 performs the scanner's existence check which satisfies retrieval conditions based on the scanner retrieval response outputted from each scanner according to the scanner retrieval request concerned (S302).

About the scanner (S302) with which are satisfied of retrieval conditions, the scanner retrieval unit 422 acquires profile information (S303), and creates the logic scanner (S304).

As retrieval level of scanner retrieval, the "detailed retrieval level" which requires the profile information and the hardware conditions of the scanner, and the "simple retrieval level" which requires only the profile information of the scanner exist.

Profile information is the information on the identification information of the scanner, the network address, etc., and hardware conditions are the information about the conditions which the scanner possesses as hardware composition.

In the above-mentioned scanner retrieval request, although the inquiry of profile information is made also on detailed retrieval level or simple retrieval level, the inquiry of hardware conditions is not made.

Therefore, when retrieval level is detailed retrieval level, the inquiry of hardware conditions will be made.

When the retrieval level is the detailed retrieval level (S305), the scanner retrieval unit 422 requestst the hardware conditions about the scanner with which are satisfied of retrieval conditions (S306).

If the hardware conditions are acquired by the time-out (S307), the scanner retrieval unit 422 changes the data format of the hardware conditions concerned (S308), and adds the hardware conditions concerned to the logic scanner (S309).

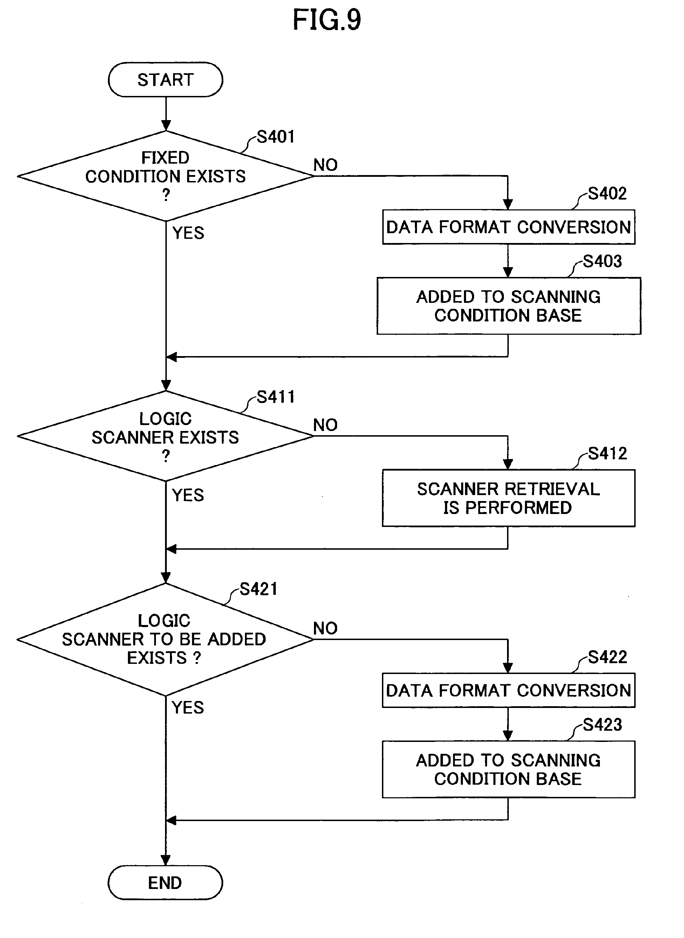

FIG. 9 is a flowchart for explaining the processing of step C of FIG. 5.

At step C, the scanning condition base creation unit 423 judges first whether fixed conditions exist in the fixed condition data area 462 (S401).

When fixed conditions exist in the fixed condition data area 462, the scanning condition base creation unit 423 changes data format of the fixed conditions concerned (S402), and adds the fixed conditions concerned to the scanning condition base 463 (S403).

It judges whether the scanning condition base creation unit 423 continues, and the logic scanner exists in the logic scanner data area 461 (S411).

The scanning condition base creation unit 423 makes the scanner retrieval unit 422 perform scanner retrieval, when the logic scanner does not exist in the logic scanner data area 461 (S412).

It judges whether the scanning condition base creation unit 423 continues, and the logic scanner which serves as the additional object at the logic scanner data area 461 exists (S421).

When the logic scanner used as the additional object exists in the logic scanner data area 461, the scanning condition base creation unit 423 changes data format of the logic scanner concerned (S422), and adds the logic scanner concerned to the scanning condition base 463 (S423).

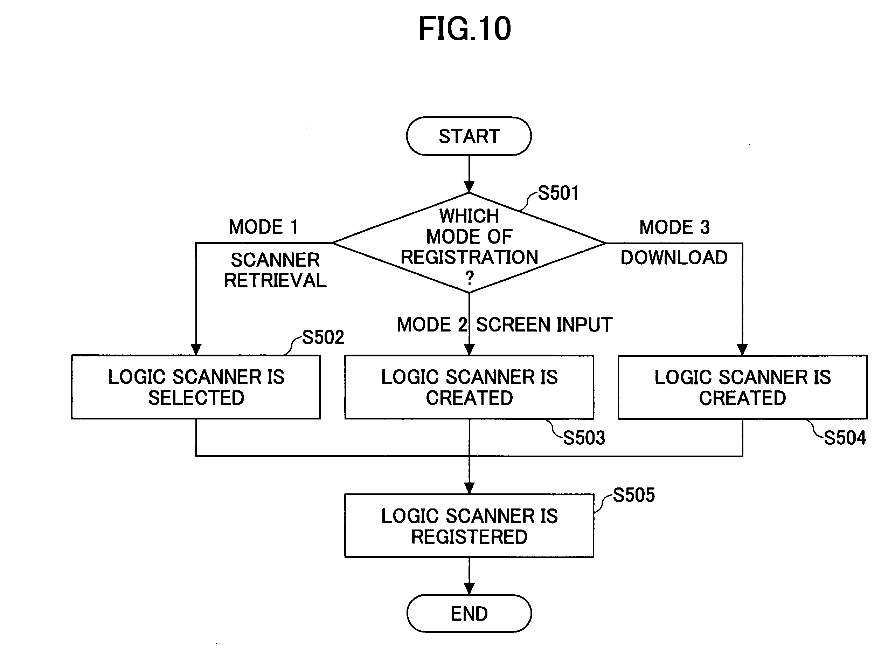

FIG. 10 is a flowchart for explaining the registration processing of the logic scanner.

The logic scanner is registered into the scan system 411 in registration processing of the logic scanner.

There are three modes (S501) of the registration processing of the logic scanner, namely, registration processing (mode 1) of the logic scanner created by scanner retrieval, registration processing (mode 2) of the logic scanner created from the data by which the screen input was carried out, and registration processing (mode 3) of the logic scanner created from the downloaded data exist.

The logic scanner to register is chosen from the logic scanner created by scanner retrieval in the mode 1 (S502).

In the mode 2, the logic scanner to register is created from the data by which the screen input was carried out (S503). In the mode 3, the logic scanner to register is created from the downloaded data (S504).

The storing attributes of these logic scanners are turned ON (the logic scanner is saved even if the corresponding physical scanner does not exist), and they are registered in the scan system 411 (S505).

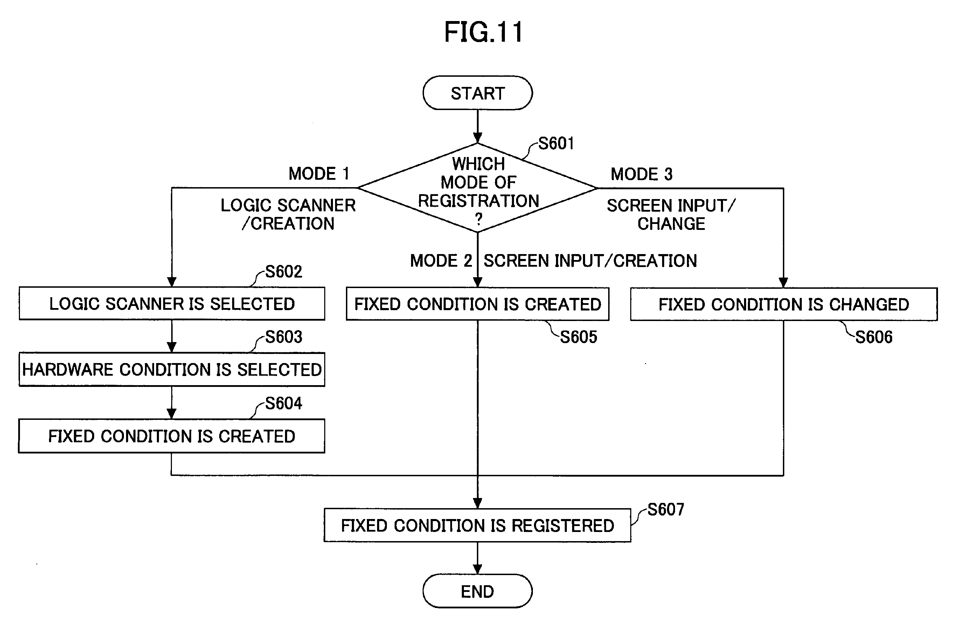

Also about registration processing of the logic printer, it is the same as that of registration processing of the logic scanner. FIG. 11 is a flowchart for explaining the registration processing of fixed conditions.

Fixed conditions are registered in the scan system 411 in registration processing of fixed conditions. The registration processing (mode 1) which creates new fixed conditions from the logic scanner, and registers them as a mode (S601) of registration processing of fixed conditions, the registration processing (mode 2) which creates and registers new fixed conditions from the data by which the screen input was carried out, and the registration processing (mode 3) change by the data by which the screen input was carried out, and re-register registered fixed conditions exist.

In the mode 1, the logic scanner for creating new fixed conditions is chosen (S602), hardware conditions are chosen from the selected logic scanner (S603), and new fixed conditions are generated from the selected hardware conditions (S604).

In the mode 2, new fixed conditions are generated from the data by which the screen input was carried out (S605). In the mode 3, registered fixed conditions are changed with the data by which the screen input was carried out (S606).

These fixed conditions are registered in the scan system 411 (S607).

Also about registration processing of the fixed conditions concerning printing conditions, it is the same as that of registration processing of the fixed conditions concerning the scanning conditions.

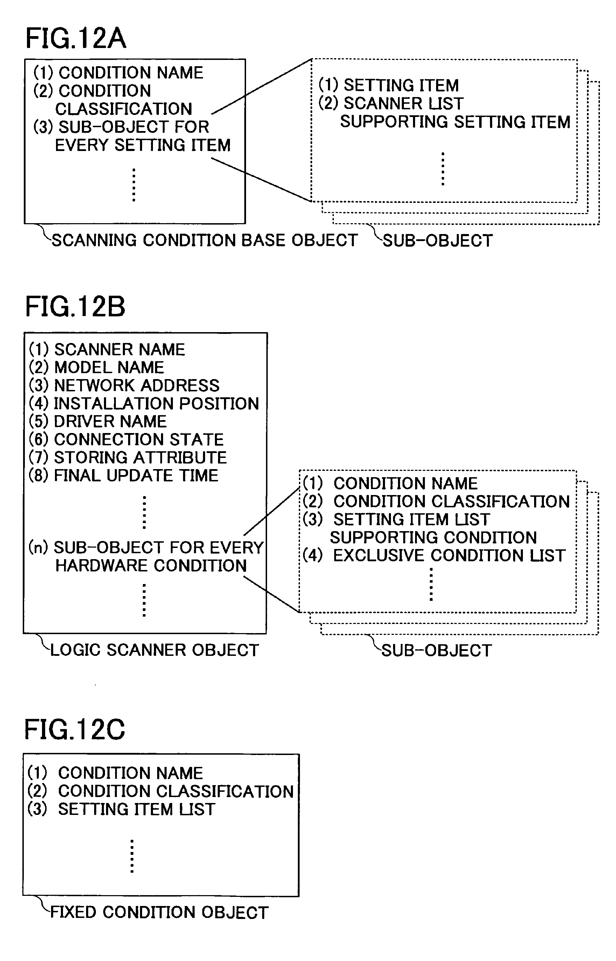

FIG. 12A, FIG. 12B and FIG. 12C respectively show the data structure of the scanning condition base 463 of FIG. 4, the data structure of the logic scanner stored in the logic scanner data area 461 of FIG. 4, and the data structure of the fixed conditions stored in the fixed condition data area 462 of FIG. 4.

The scanning condition base (FIG. 12A) is the database concerning the correspondence relation with the scanner which supports the scanning conditions and the scanning conditions concerned (the scan processing can be performed on the scanning conditions concerned).

The scanning condition base 463 of FIG. 4 is the aggregate of the scanning condition base object (FIG. 12A) which exists for every scanning conditions.

The scanning condition base object of FIG. 12A is the object which carried out instantiation of the class which defines the data structure of the scanning condition base.

As shown in FIG. 12A, the scanning condition base object is constituted by 1) the "condition names", such as the reading size, the reading direction, the reading side, the reading resolution, the reading method, and the endorser, 2) the "condition classification" of the lists (the setting method is the selection from the list) or numerical values (the setting method is the numerical input), and 3) the sub objects for every setting items, etc.

As shown in FIG. 12A, the sub object is constituted by 1) the setting items, such as A4 (reading size), vertical (reading direction), both sides (reading side), 600dpi (reading resolution), ADF (reading method) and ON (endorser), and 2) the list of scanners which support the setting items etc.

The logic scanner (FIG. 12B) is an object which corresponds to the scanner or the group scanner with the one-to-one correspondence.

The logic scanners 0, 1 and 2 stored in the logic scanner data area 461 of FIG. 4 are the objects (the logic scanner objects of FIG. 12B) which are created as the instance of the class which defines the data structure of the logic scanner, respectively.

As shown in FIG. 12B, the logic scanner object is constituted by 1) the "scanner name" such as the scanner 0, the scanner 1, and the scanner 2, 2) the "model name" such as model A, model B and model C, 3) the "network address" such as the IP address, 4) the "installation positions" such as the installation floor and the installation block, 5) the "driver name" such as the driver 0, the driver 1 and the driver 2, 6) the "connection state" such as the online or the off-line, 7) the "storing attribute" indicating whether the logic scanner is stored when the physical scanner does not exist, 8) the last renewal time, and n) the sub object for every hardware conditions, etc.

As shown in FIG. 12B, the sub object is constituted by 1) the "condition name" such as the reading size, the reading direction, the reading side, the reading resolution, the reading method and the endorser, 2) the "condition classification" of the list (the setting method is the selection from the list) or the numerical (the setting method is the numerical input), 3) the list of setting items which are supported, and 4) the exclusion conditions which are uncombinable hardware conditions, etc.

The fixed conditions (FIG. 12C) are the standard scanning conditions which are supported by all the scanners.

The fixed conditions 0 and 1 stored in the fixed condition data area 462 of FIG. 4 and 2 grades are the objects (fixed condition object of FIG. 12C) which carried out instantiation of the class which defines the data structure of fixed conditions, respectively.

As shown in FIG. 12C, the fixed condition object is constituted by 1) the "condition names", such as the reading size, the reading direction, the reading side, the reading resolution, the reading method and the endorser, 2) the "condition classification" of the list (the setting method is the selection from the list) or the numeric value (the setting method is the numerical input), and 3) the list of the setting items, etc.

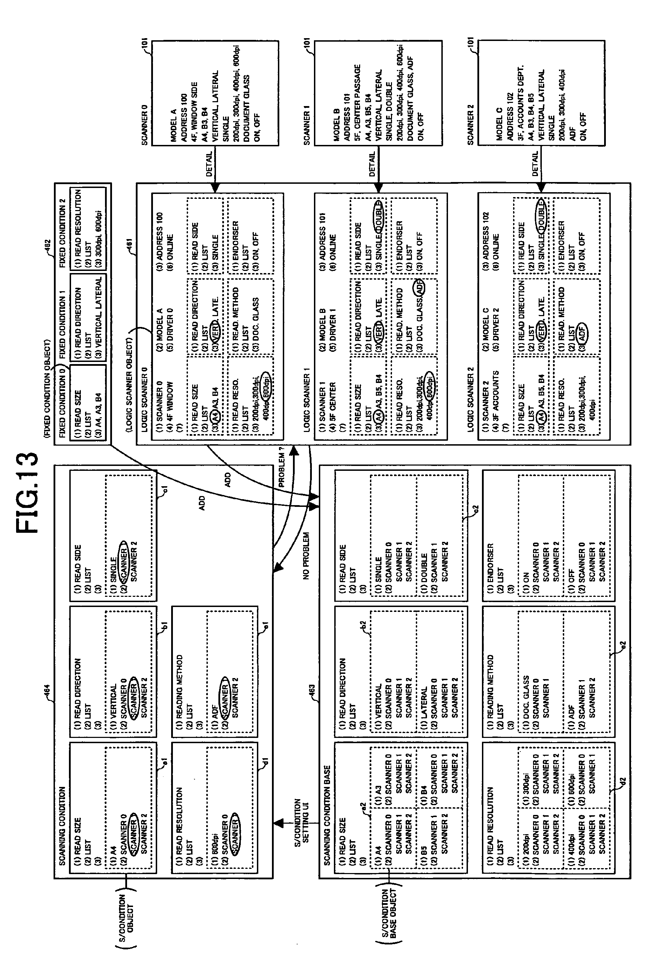

FIG. 13 is a diagram for explaining the data flow of the automatic selection of the scanner which is performed by the scanner selection unit 424 (refer to FIG. 4).

In this example, it is assumed that the scanner retrieval performed by the scanner retrieval unit 422 (refer to FIG. 4) is at the detailed retrieval level (refer to FIG. 8) which requires the profile information and the hardware conditions of the scanner.

In addition, the reference numerals of corresponding steps in FIG. 5 are suitably used in the example of FIG. 13.

The logic scanners 0, 1, and 2 are stored in the logic scanner data area 461. It is characteristic that the sub object for every hardware conditions in the above item n) exists. This is because the scanner retrieval performed by the scanner retrieval unit 422 is at the detailed retrieval level which requests the profile information and the hardware conditions of the scanner.

The fixed conditions 0, 1, and 2 are stored in the fixed condition data area 462. According to the fixed conditions 0, the reading size "A4", "A3", and "B4" become the fixed conditions. According to the fixed conditions 1, the reading directions "vertical" and "horizontal" become the fixed conditions. According to the fixed conditions 2, the reading resolutions "300dpi" and "600dpi" become the fixed conditions.

The scanning condition base creation unit 423 creates the scanning condition base 463 using the logic scanners 0, 1 and 2 stored in the logic scanner data area 461, and the fixed conditions 0, 1 and 2 stored in the fixed condition data area 462, as shown in FIG. 13 (step C).

It is characteristic that the "sub object for every hardware conditions" of the above item n) is reflected in the scanning condition base 463.

The scan system UI unit 421 performs the screen display (step A1) of the scanning condition setting UI using the scanning condition base 463. Setting operation (step A2) of the scanning conditions is inputted by the scanning condition setting UI, and the start operation of the scan processing is inputted (step E).

As shown in FIG. 13, the scan system UI unit 421 stores in the scanning condition data area 464 the scanning conditions set up by the scanning condition setting UI as a scanning condition object (step F).

As shown in FIG. 13, in this example, the scanning conditions of the reading direction "vertical", the reading side "double-sided", the reading resolution "600 dpi", the reading size "A4" and the reading method "ADF" are stored in the scanning condition data area 464 as a scanning condition object.

The scanner selection unit 424 performs the automatic selection (step I) of the scanner which performs the scan processing using the scanning condition base 463, as follows.

First, the scanner selection unit 424 discovers the objects corresponding to the scanning condition objects a1 (reading size: A4), b1 (reading direction: vertical), c1 (reading side: both sides), d1 (reading resolution: 600dpi), and e1 (reading method : ADF) out of the scanning condition base 463. By using this, the sub-objects a2 (reading size : A4), b2 (reading direction: vertical), c2 (reading side: both sides), d2 (reading resolution: 600dpi) and e2 (reading method: ADF) of the scanning condition base object are discovered out of the scanning condition base 463.

Subsequently, the scanner selection unit 424 sets up "the list of the scanners which support the setting items" of sub objects a2, b2, c2, d2, and e2 of the scanning condition base object in the scanning condition objects a1, b1, c1, d1 and e1.

Specifically, the list of the scanners "the scanners 0, 1, and 2" which support the reading size "A4" is set up in a1 (reading size: A4). The list of the scanners "the scanners 0, 1, and 2" which support the reading direction "vertical" is set up in b1 (reading direction: vertical). The list of the scanners "the scanners 1 and 2" which support the reading side "both sides" is set up in c1 (reading side: both sides). The list of the scanners "the scanners 0 and 1" which support the reading resolution "600dpi" is set up in d1 (reading resolution: 600dpi). The list of the scanners "the scanners 1 and 2" which support the reading method "ADF" is set up in e1 (reading method: ADF).

The scanner selection unit 424 continues to discover the scanner which is set up in common in the scanning condition objects a1, b1, c1, d1 and e1. This means the scanner which supports the reading size "A4", the reading direction "vertical", the reading side "both sides", the reading resolution "600dpi" and the reading method "ADF."

In this way, the scanner "the scanner 1" which supports the scanning conditions of the reading direction "vertical", the reading side "double-sided", the reading resolution "600dpi", the reading size "A4" and the reading method "ADF" is discovered.

Finally, if there is no conflict in the setting by taking into consideration the logic scanner 1 corresponding to the scanner 1, the scanner selection unit 424 takes the scanner "the scanner 1" which supports the scanning conditions stored in the scanning condition data area 464, as the selection result of the automatic selection of the scanner which performs the scan processing under the scanning conditions stored in the scanning condition data area 464. Subsequently, the information processing of steps D1 and D2 will be performed.

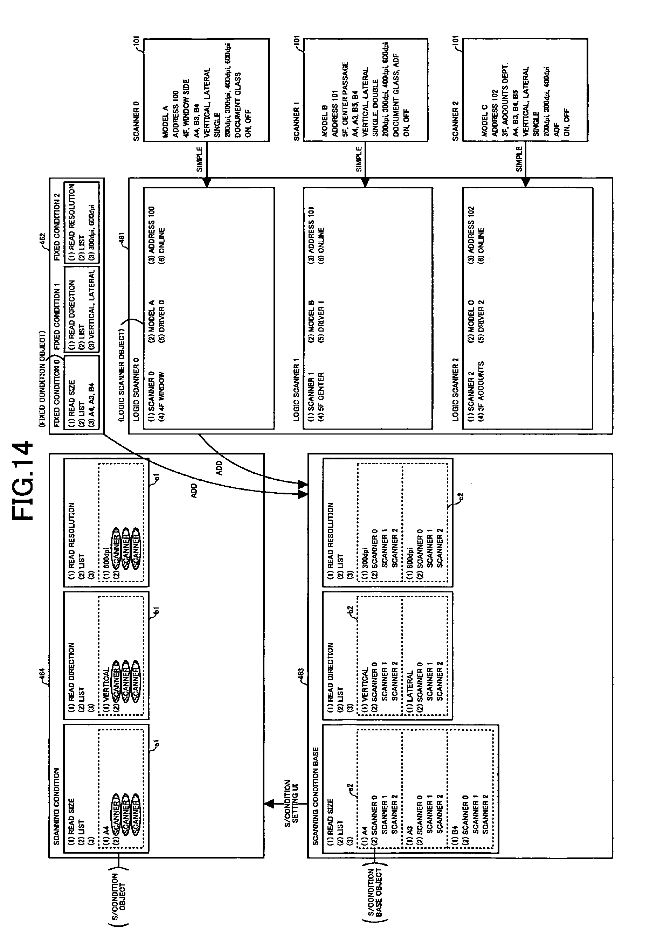

FIG. 14 is a diagram for explaining the data flow of the automatic selection of the scanner which is performed by the scanner selection unit 424 (refer to FIG. 4).

In this example, it is assumed that the scanner retrieval performed by the scanner retrieval unit 422 (refer to FIG. 4) is at the simple retrieval level (refer to FIG. 8) which requests only the profile information of the scanner.

In addition, the reference numerals of the steps in FIG. 5 are suitably used in the example of FIG. 14. The logic scanners 0, 1, and 2 are stored in the logic scanner data area 461. It is characteristic that the sub object for every hardware conditions of the above item n) does not exist. This is because the scanner retrieval performed by the scanner retrieval unit 422 is at the simple retrieval level which requests only the profile information of the scanner.

The fixed conditions 0, 1, and 2 are stored in the fixed condition data area 462. According to the fixed conditions 0, the reading sizes "A4", "A3" and "B4" become the fixed conditions. According to the fixed conditions 1, the reading directions "vertical" and "horizontal" become the fixed conditions. According to the fixed conditions 2, the reading resolutions "300dpi" and "600dpi" become the fixed conditions.

The scanning condition base creation unit 423 creates the scanning condition base 463 using the logic scanners 0, 1 and 2 stored in the logic scanner data area 461, and the fixed conditions 0, 1 and 2 stored in the fixed condition data area 462, as shown in FIG. 14 (step C). It is characteristic that the fixed conditions 0, 1, and 2 are reflected in the scanning condition base 463.

The scan system UI unit 421 performs the screen display (step A1) of the scanning condition setting UI using the scanning condition base 463. Setting operation (step A2) of the scanning conditions is inputted by the scanning condition setting UI concerned, and start operation of the scan processing is inputted (step E). The scan system UI unit 421 stores in the scanning condition data area 464 the scanning conditions set up by the scanning condition setting UI as a scanning condition object, as shown in FIG. 14 (step F).

As shown in FIG. 14, in this example, the scanning conditions of the reading direction "vertical", the reading size "A4", and the reading resolution "600dpi" are stored in the scanning condition data area 464 as a scanning condition object.

The scanner selection unit 424 will perform the automatic selection (step I) of the scanner which performs the scan processing using the scanning condition base 463, follows.

First, the scanner selection unit 424 discovers the objects corresponding to the scanning condition objects a1 (reading size: A4), b1 (reading direction: vertical), and c1 (reading resolution: 600dpi) out of the scanning condition base 463. By using this, the sub-objects a2 (reading size: A4), b2 (reading direction: vertical), and c2 (reading resolution: 600dpi) of the scanning condition base object are discovered out of the scanning condition base 463.

The scanner selection unit 424 continues to set up the list of the scanners which support the setting item of the sub objects a2, b2, and c2 of the scanning condition base object in the scanning condition objects a1, b1 and c1.

Specifically, the list of the scanners "the scanners 0, 1, and 2" which support the reading size "A4" is set up in a1 (reading size: A4). The list of the scanners "the scanners 0, 1, and 2" which support the reading direction "vertical" is set up in b1 (reading direction: vertical). The list of the scanners "the scanners 0, 1, and 2" which support the reading resolution "600dpi" is set up in c1 (reading resolution: 600dpi).

The scanner selection unit 424 continues to discover the scanner set up in common in the scanning condition objects a1, b1 and c1. This means the scanner which supports the reading size "A4", the reading direction "vertical" and the reading resolution "600dpi." In this way, the scanners "the scanners 0, 1, and 2" which support the scanning conditions of the reading direction "vertical", the reading size "A4" and the reading resolution "600dpi" are discovered.

Finally, the scanner selection unit 424 takes the scanners "the scanners 0, 1, and 2" which support the scanning conditions stored in the scanning condition data area 464, as the selection result of the automatic selection of the scanner (candidates) which performs the scan processing under the scanning conditions stored in the scanning condition data area 464. Subsequently, the information processing of steps D3 and D4 will be performed.

In addition, in the automatic selection of the scanners, the "connection state" of the logic scanner object may be taken into consideration. Thereby, the offline scanner is excluded from the object of the automatic selection.

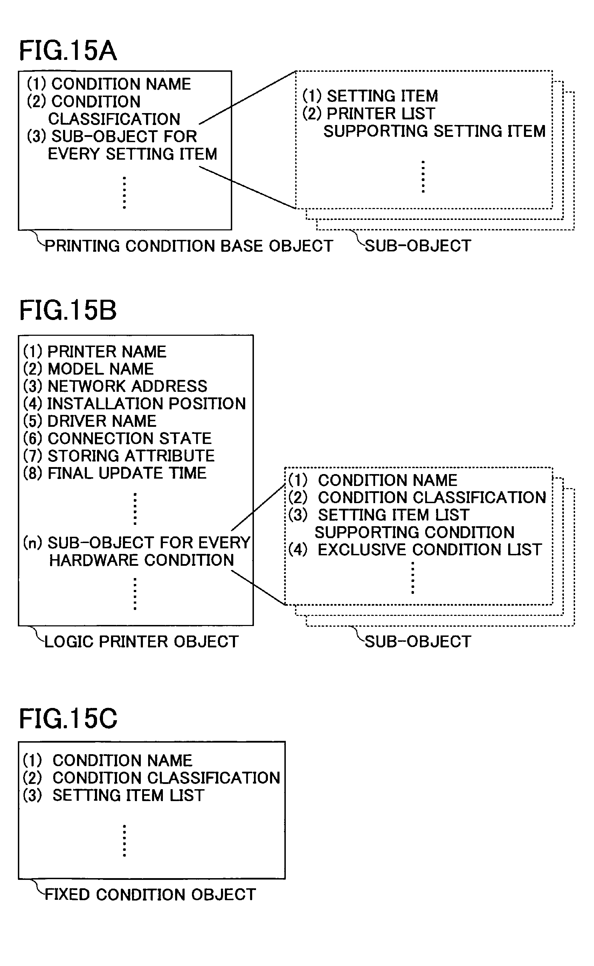

FIG. 15A, FIG. 15B and FIG. 15C respectively show the data structure of the print condition base 473 of FIG. 4, the data structure of the logic printer stored in the logic printer data area 471 of FIG. 4, and the data structure of the fixed conditions stored in the fixed condition data area 472 of FIG. 4.

The print condition base (FIG. 15A) is the database concerning the correspondence relation with the printer which supports printing conditions and the printing conditions concerned (print processing can be performed on the printing conditions concerned).

The print condition base 473 of FIG. 4 is the aggregate of the print condition base object (FIG. 15A) which exists for every printing conditions.

The print condition base object of FIG. 15A is the object which is created as the instance of the class which defines the data structure of the print condition base.

As shown in FIG. 15A, the print condition base object is constituted by 1) the "condition name" such as the printing size, the printing direction, the printing side, the printing resolution, the punch and the staple, 2) the "condition classification" of the list (the setting method is the selection from the list) or the numerical (the setting method is the numerical input), and 3) the sub object for every setting item, etc.

As shown in FIG. 15A, the sub object is constituted by 1) the "setting items" of A4 (printing size), vertical (printing direction), both sides (printing side), 600dpi (printing resolution), double left (punch), left (staple), etc., and 2) the list of printers which support the setting items etc.

The logic printer (FIG. 15B) is an object which corresponds to the printer or the group printer with the one-to-one correspondence. The logic printers 0, 1 and 2 stored in the logic printer data area 471 of FIG. 4 are the objects (logic printer object of FIG. 15B) which are created as the instance of the class which defines the data structure of the logic printer, respectively.

As shown in FIG. 15B, the logic printer object is constituted by 1) the "printer name" such as the printer 0, the printer 1 and the printer 2, 2) the "model name" such as model A, model B, and model C, 3) the "network address" such as the IP address, 4) the "installation position" such as the installation floor and the installation block, 5) the driver name such as the driver 0, the driver 1, and the driver 2, 6) the "connection state" such as the online or the off-line, 7) the "storing attribute" indicating whether the logic printer is stored when the physical printer does not exist, 8) the last renewal time, and n) the sub object for every hardware conditions, etc.

As shown in FIG. 15B, the sub object is constituted by 1) the "condition name" such as the printing size, the printing direction, the printing side, the printing resolution, the punch and the staple, 2) the "condition classification" of the list (the setting method is the selection from the list) and the numerical (the setting method is the numerical input), 3) the list of setting items which are supported, and 4) the list of the exclusion conditions which are uncombinable hardware conditions.

The fixed conditions (FIG. 15C) are the standard printing conditions which are supported by all the printers.

The fixed conditions 0, 1 and 2 stored in the fixed condition data area 472 of FIG. 4 are the objects (the fixed condition object of FIG. 15C) which are created as the instance of the class which defines the data structure of fixed conditions, respectively.

As shown in FIG. 15C, the fixed condition object is constituted by 1) the "condition names" such as the printing size, the printing direction, the printing side, the printing resolution, the punch and the staple, 2) the "condition classification" of the list (the setting method is the selection from the list) or the numerical (the setting method is the numerical input), and 3) the list of setting items.

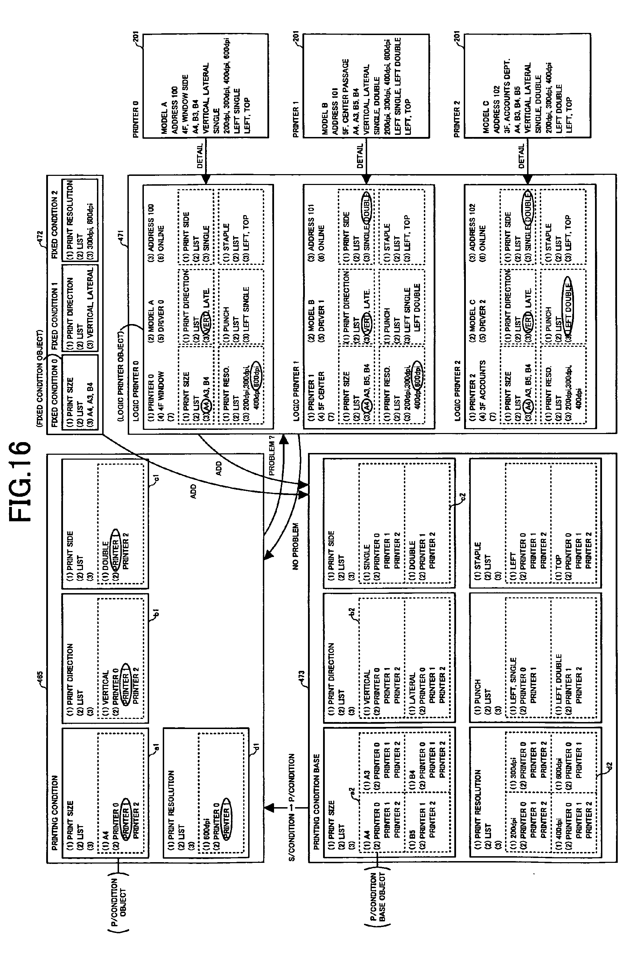

FIG. 16 is a diagram for explaining the data flow of the automatic selection of the printer which is performed by the printer selection unit 444 (refer to FIG. 4).

In this example, it is assumed that the printer retrieval performed by the printer retrieval unit 442 (refer to FIG. 4) is at the detailed retrieval level (refer to FIG. 8) which requires the profile information and the hardware conditions of the printer.

In addition, the reference numerals of the corresponding steps in FIG. 5 are suitably used in the example of FIG. 16.

The logic printers 0, 1, and 2 are stored in the logic printer data area 471. It is characteristic that the "sub object for every hardware conditions" of the above item n) exists. This is because the printer retrieval performed by the printer retrieval unit 442 is at the detailed retrieval level which requires the profile information and the hardware conditions of the printer.

The fixed conditions 0, 1, and 2 are stored in the fixed condition data area 472. According to the fixed conditions 0, the printing size "A4", "A3", and "B4" become the fixed conditions. According to the fixed conditions 1, the printing directions "vertical" and "horizontal" become the fixed conditions. According to the fixed conditions 2, the printing resolutions "300dpi" and "600dpi" become the fixed conditions.

The print condition base creation unit 443 creates the print condition base 473 using the logic printers 0, 1 and 2 stored in the logic printer data area 471, and the fixed conditions 0, 1 and 2 stored in the fixed condition data area 472, as shown in FIG. 16.

It is characteristic that the "sub object for every hardware conditions" of the above item n) is reflected in the print condition base 473.

The print condition creation unit 431 creates the printing conditions to which the scanning conditions stored in the scanning condition data area 464 are diverted (step J).

As shown in FIG. 16, the print condition creation unit 431 stores in the print condition data area 465 the printing conditions to which the scanning conditions stored in the scanning condition data area 464 are diverted, as a print condition object (step K).

As shown in FIG. 16, in this example, the printing conditions of the printing direction "vertical", the printing side "double-sided", the printing size "A4" and the printing resolution "600dpi" are stored in the print condition data area 465 as a print condition object.

The printer selection unit 444 will perform automatic selection of the printer which performs print processing using the print condition base 473 under the automatic selection request (step N) of the printer which supports as follows the printing conditions stored in the print condition data area 465.

The printer selection unit 444 first discovers the objects corresponding to the print condition objects a1 (printing size: A4), b1 (printing direction: vertical), c1 (printing side: both sides) and d1 (printing resolution: 600dpi) out of the print condition base 473.

Thereby, the sub objects a2 (printing size: A4), b2 (printing direction: vertical), c2 (printing side: both sides), and d2 (printing resolution: 600dpi) of the print condition base object are discovered out of the print condition base 473.

Subsequently, the printer selection unit 444 sets up "the list of the scanners which support the setting items" of the sub objects a2, b2, c2, and d2 of the print condition base object in the print condition objects a1, b1, c1 and d1.

Thereby, the list of the printers "the printers 0, 1, and 2" which support the printing size "A4" is set up in a1 (printing size: A4). In b1 (printing direction: vertical), the list of the printers "the printers 0, 1, and 2" which support the printing direction "vertical" is set up. In c1 (printing side: both sides), the list of the printers "the printers 1 and 2" which support the printing side "both sides" is set up. In d1 (printing resolution: 600dpi), the list of the printers "the printers 0 and 1" which support the printing resolution "600dpi" is set up.

The printer selection unit 444 continues to discover the printer set up in common in the print condition objects a1, b1, c1 and d1. This means the printer which supports the printing size "A4", the printing direction "vertical", the printing side "both sides" and the printing resolution "600dpi."

In this way, the printer "the printer 1" which supports the printing conditions of the printing direction "vertical", the printing side "double-sided", the printing size "A4" and the printing resolution "600dpi" is discovered.

Finally, if there is no conflict in the setting by taking into consideration the logic printer 1 corresponding to the printer 1, the printer selection unit 444 takes the printer "the printer 1" which supports the printing conditions stored in the print condition data area 465, as the selection result of the automatic selection of the printer which performs the print processing under the printing conditions stored in the print condition data area 465.

Subsequently, the information processing of steps P1 and P2 will be performed.

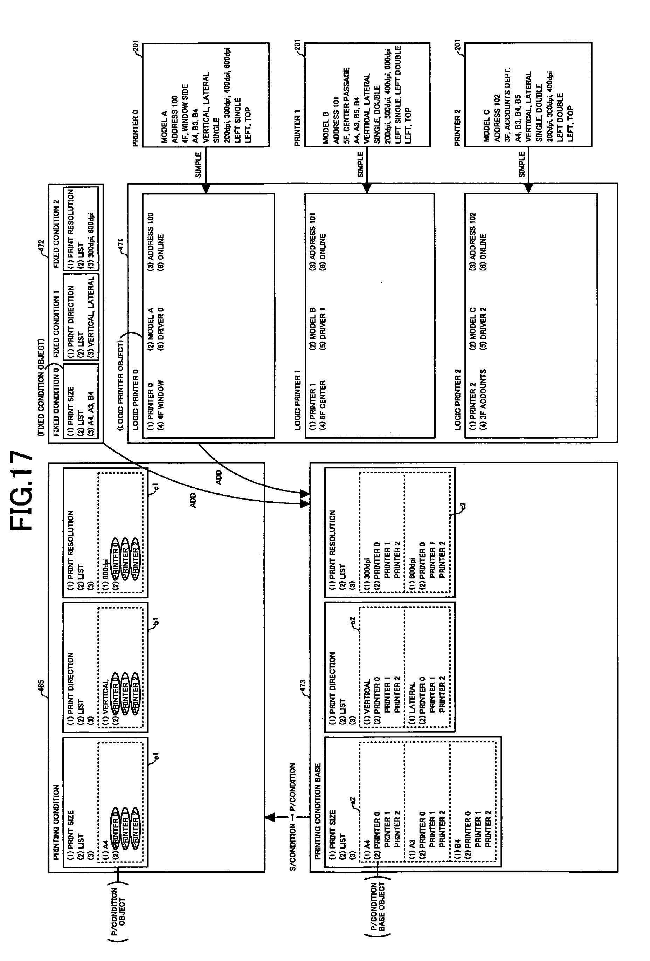

FIG. 17 is a diagram for explaining the data flow of the automatic selection of the printer which is performed by the printer selection unit 444 (refer to FIG. 4).

In this example, it is assumed that the printer retrieval performed by the printer retrieval unit 442 (refer to FIG. 4) is at the simple retrieval level (refer to FIG. 8) which requires only the profile information of the printer.

In addition, the reference numerals of the corresponding steps in FIG. 5 are suitably used in the example of FIG. 17.

The logic printers 0, 1, and 2 are stored in the logic printer data area 471. It is characteristic that the "sub object for every hardware conditions" of the above item n does not exist. This because the printer retrieval performed by the printer retrieval unit 442 is at the simple retrieval level which requires only the profile information of the printer.

The fixed conditions 0, 1, and 2 are stored in the fixed condition data area 472. According to the fixed conditions 0, the printing sizes "A4", "A3", and "B4" become the fixed conditions. According to the fixed conditions 1, the printing directions "vertical" and "horizontal" become the fixed conditions. According to the fixed conditions 2, the printing resolutions "300dpi" and "600dpi" become the fixed conditions.

The print condition base creation unit 443 creates the print condition base 473 using the logic scanners 0, 1 and 2 stored in the logic printer data area 471, and the fixed conditions 0, 1 and 2 stored in the fixed condition data area 472, as shown in FIG. 17.

It is characteristic that the fixed conditions 0, 1, and 2 are reflected in the scanning condition base 473.

The print condition creation unit 431 creates the printing conditions to which the scanning conditions stored in the scanning condition data area 464 are diverted (step J).

The print condition creation unit 431 stores in the print condition data area 465 the printing conditions to which the scanning conditions stored in the scanning condition data area 464 are diverted as shown in FIG. 17 as a print condition object (step K).

As shown in FIG. 17, in this example, the printing conditions of the printing direction "vertical", the printing size "A4", the printing resolution "600dpi" are stored in the print condition data area 465 as a print condition object.

The printer selection unit 444 will perform automatic selection of the printer which performs the print processing using the print condition base 473 under the automatic selection request (step N) of the printer which supports as follows the printing conditions stored in the print condition data area 465.

The printer selection unit 444 first discovers the objects corresponding to the print condition objects a1 (printing size: A4), b1 (printing direction: vertical), c1 (printing resolution: 600dpi) out of the print condition base 473. By using this the sub-objects a2 (printing size: A4), b2 (printing direction: vertical), c2 (printing resolution : 600dpi) of the print condition base object are discovered out of the print condition base 473.

The printer selection unit 444 continues to set up "the list of the scanner which supports the setting item" of sub-objects a2, b2, and c2 of the print condition base object in the print condition objects a1 and bland c1.

By using this, the list of the printers "the printers 0, 1, and 2" which support the printing size "A4" is set up in a1 (printing size: A4). The list of the printers "the printers 0, 1, and 2" which support the printing direction "vertical" is set up in b1 (printing direction: vertical). The list of the printers "the printers 0, 1, and 2" which support the printing resolution "600dpi" is set up in c1 (printing resolution: 600dpi).

The printer selection unit 444 continues to discover the print condition objects a1 and b1 and the printer set up in common in c1. This means the printer which supports the printing size "A4", the printing direction "vertical" and the printing resolution "600dpi."

In this way, the printers "the printers 0, 1, and 2" which support the printing conditions of the printing direction "vertical", the printing size "A4" and the printing resolution "600dpi" are discovered.

The printer selection unit 444 finally stores the printers "the printers 0, 1, and 2" which support the printing conditions into the print condition data area 465 as the selection result of the automatic selection of the printer (candidate) which performs print processing on the printing conditions stored in the print condition data area 465.

Subsequently, the information processing of steps P3 and P4 will be performed.

In addition, in the automatic selection of the printer, the "connection state" of the logic printer object may be taken into consideration. Thereby, the off-line printers (the printer in which the toner runs out or the printer in which the jam occurs) are excluded from the object of automatic selection.

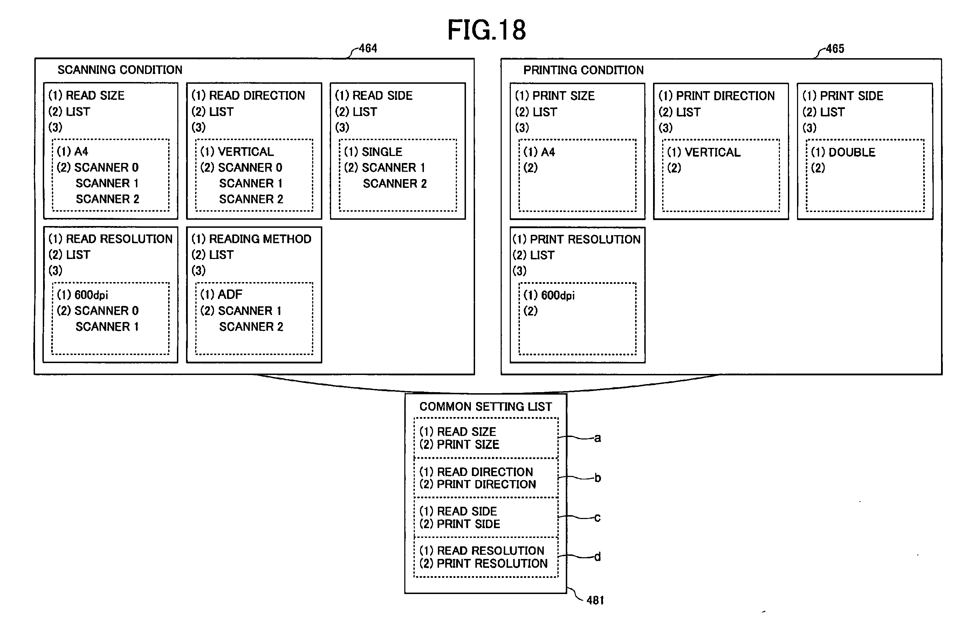

FIG. 18 is a diagram for explaining the data flow of the print condition creation processing which is performed by the print condition creation unit 431 (refer to FIG. 4).

In addition, the reference numerals of the corresponding steps in FIG. 5 are suitably used in the example of FIG. 18.

At steps J and K, the scanning conditions stored in the scanning condition data area 464 should be diverted to printing conditions, as shown in FIG. 18, the print condition creation unit 431 changes into printing conditions the scanning conditions stored in the scanning condition data area 464 (refer to FIG. 6), and stores them in the print condition data area 465.

Under the present circumstances, which item of the scanning conditions is changed into which item of printing conditions diversion in which item of printing conditions is possible in which item of that judgment, i. e., the scanning conditions, that judgment is performed based on the common setting list.

The common setting list is stored in the common setting list data area 481 as a common setting list object, as shown in FIG. 18.

By the common setting list of FIG. 18, the item "reading size" of the scanning conditions in the item "printing size" of printing conditions the diversion possibility of,

b) The item "for reading" of the scanning conditions in the item "for printings" of printing conditions diversion possibility of,

c) As for the item "the reading side" of the scanning conditions, the setting which can be diverted to the item "printing resolution" of printing conditions is specified in the item "the printing side" of printing conditions, as for the item "reading resolution" of the diversion possibility of and d scanning conditions.

As shown in FIG. 18, in this example, the scanning conditions of the reading direction "vertical", the reading side "double-sided", the reading resolution "600dpi", the reading size "A4" and the reading method "ADF" are changed into the printing conditions of the printing direction "vertical", the printing side "double-sided", the printing size "A4" and the printing resolution "600dpi". In addition, the setting which can be diverted to the items of printing conditions is not specified, and, as for the scanning conditions of the reading method "ADF", the item "the reading method" of the scanning conditions is not changed into printing conditions.

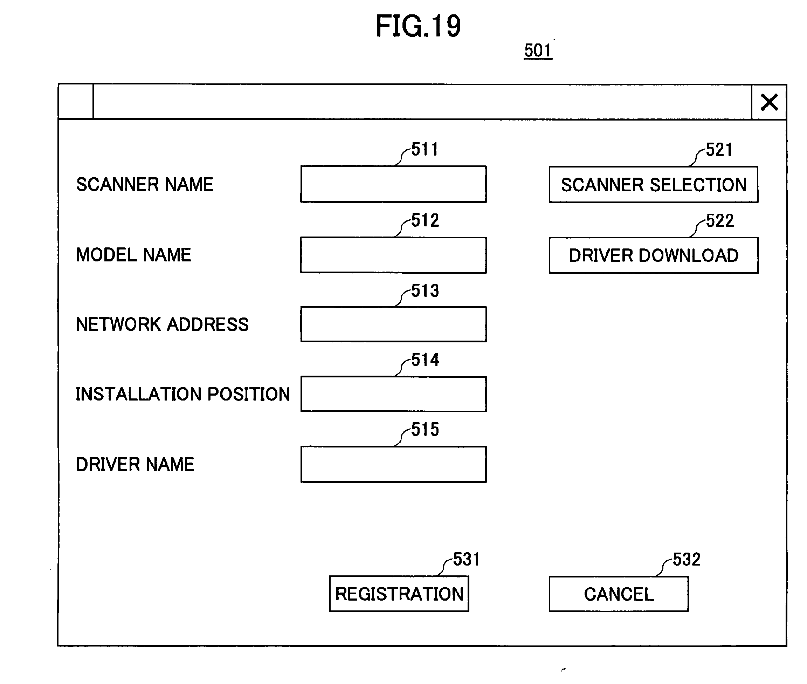

FIG. 19 shows the logic scanner registration screen 501 displayed on FIG. 1 and the screen of PC 301 of 2.

On the logic scanner registration screen 501, screen input operation of the "mode 2" said by registration processing of the logic scanner of FIG. 10 is possible.

The scanner name input item 511, the model name input item 512, the network-address input item 513, the installation position input item 514, the driver name input item 515, the scanner selection button 521, the driver download button 522, the registration button 531, and the cancellation button 532 exist in the logic scanner registration screen 501.

The scanner name input item 511 is the input item for inputting the scanner name of the logic scanner and the scanner made to correspond. The model name input item 512 is the input item for inputting the model name of the logic scanner and the scanner made to correspond. The network-address input item 513 is the input item for inputting the network address of the logic scanner and the scanner made to correspond. The installation position input item 514 is the input item for inputting the installation position of the logic scanner and the scanner made to correspond.

It is the input item for inputting the driver name of the driver of the driver name input item 515, the logic scanner, and the scanner made to correspond. The scanner selection button 521 is the button for choosing the logic scanner and the scanner made to correspond. The driver download button 522 is the button for downloading the driver of the logic scanner and the scanner made to correspond.

If the registration button 531 is clicked, PC 301 will create the logic scanner from the data by which the screen input was carried out on the logic scanner registration screen 501, and will register the logic scanner concerned into the scan system 411.

PC 301 will cancel the data by which the screen input was carried out on the logic scanner registration screen 501, if the cancellation button 532 is clicked.

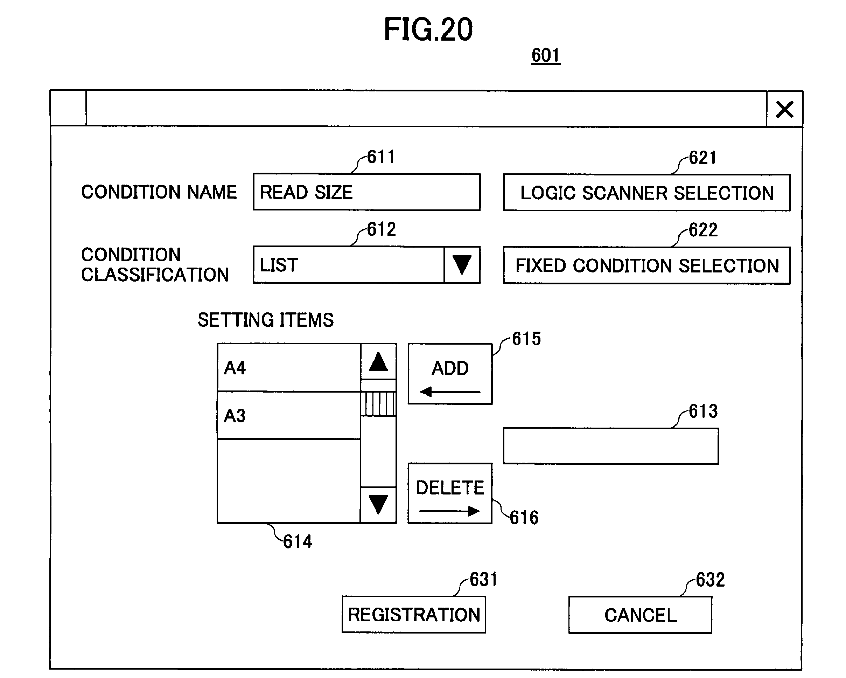

Also about the logic printer registration screen, it is the same as that of the logic scanner registration screen 501 of FIG. 19. FIG. 20 shows the fixed condition registration screen 601 displayed on FIG. 1 and the screen of PC 301 of 2.

On the fixed condition registration screen 601, screen input operation of the "mode 2" said by registration processing of the fixed conditions of FIG. 11 is possible.

The condition-name input item 611, the condition classification selection option 612, the setting item input item 613, the setting item display option 614, the setting item addition button 615, the setting item deletion button 616, the logic scanner selection button 621, the fixed condition selection button 622, the registration button 631, and the cancellation button 632 exist in the fixed condition registration screen 601.

The condition-name input item 611 is the input item for inputting the condition name of the scanning conditions made into fixed conditions. The condition classification selection option 612 is the selection option for choosing the condition classification of the scanning conditions made into fixed conditions.

The setting item input item 613 is the input item for inputting the setting item to add. The setting item display option 614 is the display option for displaying the added setting item. The setting item addition button 615 is the button for adding the setting item inputted into the setting item input item 613. The setting item deletion button 616 is the button for deleting the setting item chosen in the setting item display option 614.

If the registration button 631 is clicked, PC 301 will create fixed conditions from the data by which the screen input was carried out on the fixed condition registration screen 601, and will register the fixed conditions concerned into the scan system 411.

PC 301 will cancel the data by which the screen input was carried out on the fixed condition registration screen 601, if the cancellation button 632 is clicked.

Also about the fixed condition registration screen concerning printing conditions, it is the same as that of the fixed condition registration screen 601 concerning the scanning conditions of FIG. 20.

FIG. 21 shows the scanning condition setting UI 701 displayed on FIG. 1 and the screen of PC 301 of 2.

It is UI which appeared at step A1 of FIG. 5. The scanning condition setting option 711, the scanner automatic selection request input item 712, the scanner manual selection button 713, the print request input item 721, the data storing request input item 722, the start button 731, and the cancellation button 732 exist in the scanning condition setting UI 701.

The scanning condition setting option 711 is the setting option for setting the scanning conditions at the time of performing the scan processing as the scanner. The scanning condition setting options 711, such as setting option 711 of setting option 711a of reading size , setting option 711b for reading , setting option 711c of the reading side, 711d of the setting options of reading resolution , and reading method e and the 711f of the setting options of the endorser etc., exist in the scanning condition setting UI 701 of FIG. 21.

The scanning condition setting UI 701 of FIG. 21 the setting option of reading size "A4" the setting option for reading "vertical" the setting option of the reading side "both sides" "ADF" is set as the setting option of the reading method, and "ON" is set as the setting option of reading resolution for "600dpi" by the setting option of the endorser.

In addition, the scan system UI421 unit performs the condition name of these setting options, and the screen display of the setting item using the scanning condition base 463.

The scanner automatic selection request input item 712 is the input item for inputting the setting which chooses the scanner which performs the scan processing by automatic selection.

As shown in FIG. 21, when the scanner automatic selection input item 712 is checked, the scanner which performs the scan processing will be chosen by automatic selection.

The scanner manual selection button 713 is the button for choosing the scanner which performs the scan processing by manual selection.

A click of the scanner manual selection button 713 carries out the screen display of the scanner selection UI 801 as shown in FIG. 22.

The scanner selection UI 801 will be descried later.

The print request input item 721 is the input item for inputting the setting which requires implementation of print processing of the image data concerning the scan processing.

As shown in FIG. 21, when the print request input item 721 is checked, print processing of the image data concerning the scan processing will be carried out.

In addition, the facsimile request-to-send input item (input item for inputting the setting which requires implementation of facsimile transmitting processing of the image data concerning the scan processing) etc. can be considered as an application of the print request input item 721.

The data storing request input item 722 is the input item for inputting the setting which requires implementation of data store processing of the image data concerning the scan processing.

As shown in FIG. 21, when the data storing request input item 722 is checked, data store processing of the image data concerning the scan processing will be carried out by the file name inputted into the input item of the file name.

In addition, the mail distribution request input item (input item for inputting the setting which requires implementation of mail distribution processing of the image data concerning the scan processing) etc. can be considered as an application of the data storing request input item 722.

PC 301 is that the start button 731 is clicked, and makes the scanner perform the scan processing on the scanning conditions set up in the scanning condition setting option 711.

PC 301 will cancel the data by which the screen input was carried out by the scanning condition setting UI 701, if the cancellation button 732 is clicked. Thus, the scanning condition setting UI 701 serves as the unification UI used in common per each scanner.

Since setting operation of the scanning conditions is unified per each scanner by this, the operability of the scanner operation UI improves. The difference will be understood as compared with the case where different UI for every scanner driver is used.

It becomes unnecessary moreover, for the user who wants to perform the scan processing to determine himself the scanner which supports the scanning condition as the scanner on the desired scanning conditions by the scanner which supports the scanning conditions set up in the scanning condition setting option 711 as a scanner which performs the scan processing on the scanning conditions set up in the scanning condition setting option 711 being chosen by automatic selection.

The user should just concentrate on setting operation of the scanning conditions. It becomes unnecessary furthermore, to perform selection operation of the printer and setting operation of printing conditions in which the user performs print processing by the printer which supports the printing conditions which diverted the scanning conditions set up in the scanning condition setting option 711 to some other purpose as a printer which performs print processing of the image data concerning the scan processing being chosen by automatic selection.

Temporarily, if the user performs both setting operation of the scanning conditions, and setting operation of printing conditions, like reading size, printing size, for reading and for printings, the reading side and the printing side, reading resolution, and printing resolution, the user will perform setting operation of the same item (item whose diversion is enabled in this embodiment), and is useless.

FIG. 22 shows the scanner selection UI 801 displayed on FIG. 1 and the screen of PC 301 of 2. It is UI which appeared at step D1 of FIG. 5.

The scanner selection option 811, the O.K. button 821, and the cancellation button 831 exist in the scanner selection UI 801. The scanner selection option 811 is the selection option for choosing the scanner which performs the scan processing by manual selection. "The scanner 0", the "scanner 1", and the "scanner 2" are displayed on the scanner selection option 811 of FIG. 22 with the installation position as a candidate of the scanner who performs the scan processing.

PC 301 is that the O.K. button 821 is clicked, and becomes what is made for the scanner chosen by manual selection in the scanner selection option 811 to perform the scan processing (it will once return to the scanning condition setting UI 701 if it is before start operation of the scan processing).

FIG. 23 shows the notice UI 802 of the scanner selection result displayed on FIG. 1 and the screen of PC 301 of 2. It is UI which appeared at step D3 of FIG. 5.

The O.K. button 822 exists in the notice UI 802 of the scanner selection result. The selection result of the scanner which performs the scan processing is displayed on the notice UI 802 of the scanner selection result. "The scanner 1" is displayed on the notice UI 802 of the scanner selection result of FIG. 23 with the installation position as a scanner which performs the scan processing.

PC 301 is that the O.K. button 822 is clicked, and makes the scanner chosen by automatic selection perform the scan processing.

FIG. 24 shows the printer selection UI 901 displayed on FIG. 1 and the screen of PC 301 of 2. It is UI which appeared at step P1 of FIG. 5.

The scanner selection option 911, the O.K. button 921, and the cancellation button 931 exist in the printer selection UI 901. The printer selection option 911 is the selection option for choosing the printer which performs print processing by manual selection. "The printer 0", the "printer 1", and the "printer 2" are displayed on the printer selection option 911 of FIG. 24 with the installation position as a candidate of the printer who performs print processing.

PC 301 is that the O.K. button 921 is clicked, and makes the printer chosen by manual selection in the printer selection option 911 perform print processing.

FIG. 25 shows the notice UI 902 of the printer selection result displayed on FIG. 1 and the screen of PC 301 of 2. It is UI which appeared at step P3 of FIG. 5.

The O.K. button 922 exists in the notice UI 902 of the printer selection result. The selection result of the printer which performs print processing is displayed on the notice UI 902 of the printer selection result. "The printer 1" is displayed on the notice UI 902 of the scanner selection result of FIG. 25 with the installation position as a printer which performs print processing.

PC 301 is that the O.K. button 922 is clicked, and makes the printer chosen by automatic selection perform print processing.

FIG. 1 and PC 301 of 2 correspond to the embodiment of the present invention (information-processing apparatus), and the software of FIG. 1 and FIG. 4 which exists in PC 301 of 2 corresponds to the embodiment of the invention (information-processing program).

FIG. 1 and information processing performed with PC 301 of 2 correspond to the embodiment of the present invention (the information-processing method), and CD-ROM on which the software of FIG. 4 was recorded corresponds to the embodiment of the present invention (recording medium).

FIG. 1 and the image forming processing performed by the device group of 2 correspond to the embodiment of the present invention (the image-formation method).

In addition, each scanner 101 of FIG. 1 and each printer 201 of FIG. 2 may be the "compound systems" and the "multi-function systems" which function as the scanner, the printer, the copy, or facsimile so that clearly also from FIG. 7.

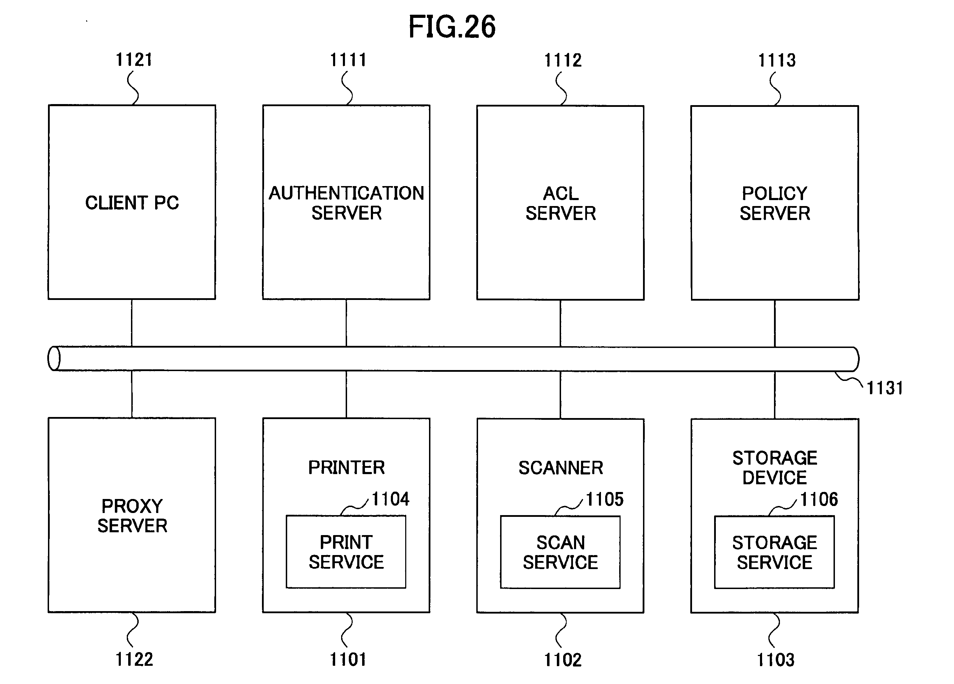

FIG. 26 is the device arrangement plan concerning the network where OA device was connected.

In FIG. 26, the interconnection of the printer 1101, the scanner 1102, the storage device 1103, the authentication server 1111, the ACL (Access Control List) server 1112, the policy server 1113, PC (Personal Computer)1121, and the proxy server 1122 is carried out by the network 1131.

PC 1121 is an information-processing apparatus which functions as a client terminal for the printer 1101, the scanner 1102, and the storage device 1103. The proxy server 1122 is an information-processing apparatus which functions as a proxy server of PC1121.

The OA device of FIG. 26 is the OA device based on BMLinkS, respectively.

The scanning service 1105 exists in the scanner 1102, and the storage service 1106 exists the print service 1104 in the storage device 1103 at the printer 1101.

BMLinkS drivers, such as the printer driver, the scanner driver, and the storage driver, are installed in PC1121.

In addition, the compound system which functions as a printer, the multi-function system, the compound system which functions as scanners, and the multi-function system are sufficient as the printer 1101 and the scanner 1102, respectively.

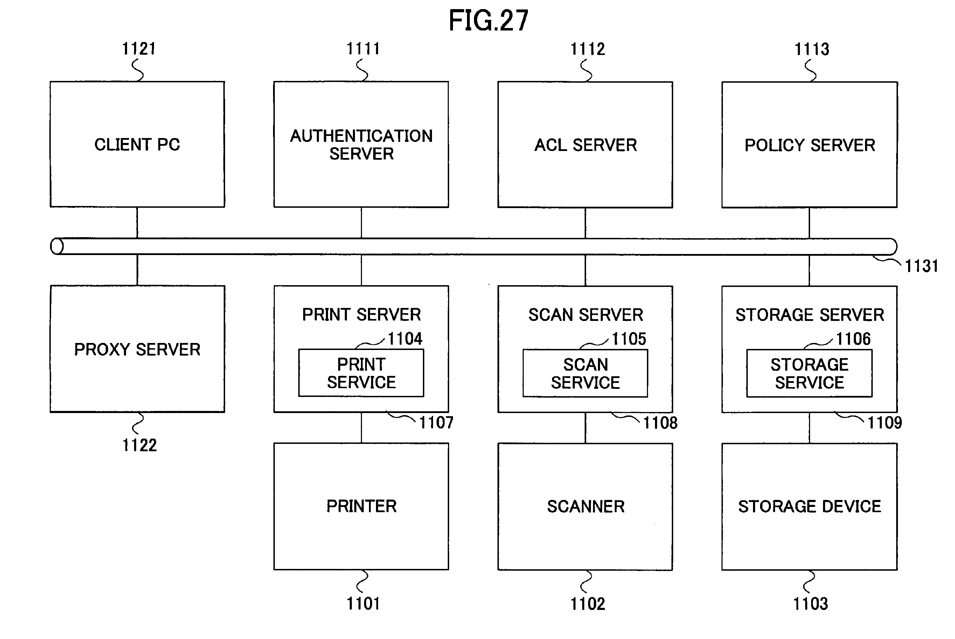

Moreover, as shown in FIG. 26, as shown in FIG. 27, you may connect to the network 1131 the print server 1107 connected to the printer 1101, the scanning server 1108 connected to the scanner 1102, and the storage server 1109 connected to the storage device 1103, respectively instead of connecting the printer 1101, the scanner 1102, and the storage device 1103 to the network 1131, respectively.

The server of OA device is connected to the network 1131 instead of connecting OA device to the network 1131. The scanning service 1105 exists in the scanning server 1108, and the storage service 1106 exists the print service 1104 in the storage server 1109 at the print server 1107.

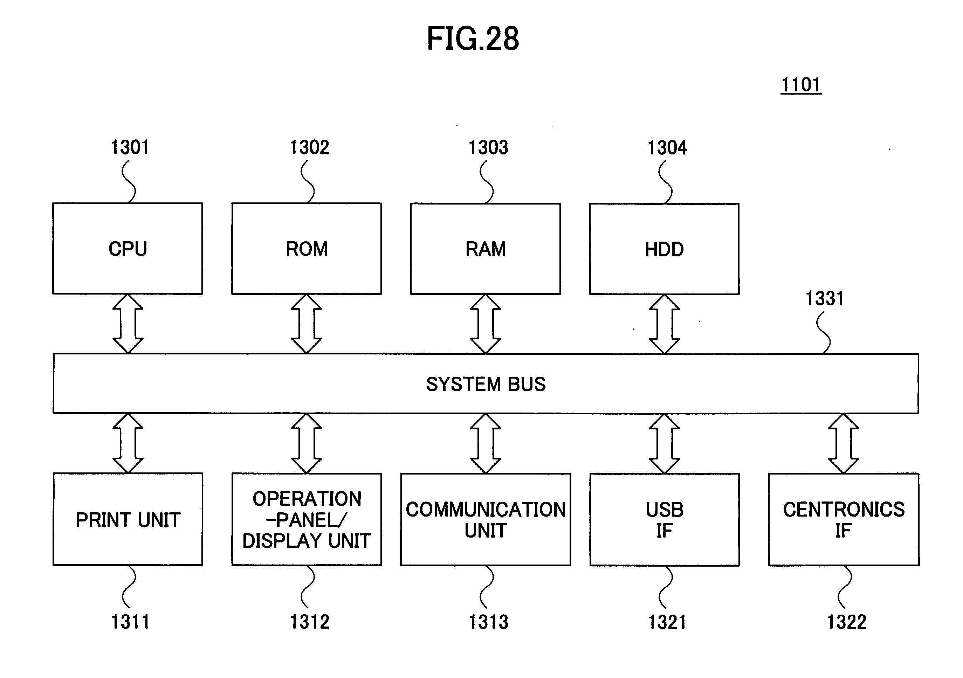

FIG. 28 is the hardware block diagram concerning the printer 1101 of FIG. 26 and FG. 27.

The printer 1101 of FIG. 26 and 27 comprises Centronics IF 1322, CPU1301, ROM1302, RAM1303 and HDD (hard disk drive)1304, the print unit 1311, the operation display unit 1312, the communication unit 1313, and USBIF1321. These hardware components are connected by the system bus 1331.

CPU1301 is hardware which performs information processing of control of the printer 1101 etc. ROM1302 is the hardware in which the program for the above-mentioned information processing etc. was stored.

RAM1303 is the memory for the above-mentioned information processing. HDD1304 is the storage for the above-mentioned information processing, and is the hardware in which the program for the above-mentioned information processing etc. was stored.

The print unit 1311 is the hardware for performing print processing, and is constituted by the printer engine etc. The operation display unit 1312 is the hardware for the user getting the output from the printer 1101, and is constituted by the operation panel etc. while it is the hardware for the user inputting into the printer 1101.

The communication unit 1313 is the hardware for connecting the printer 1101 to the networks, such as the Ethernet (registered trademark) and the telephone line, and is constituted by NIC, MODEM, etc.

USBIF1321 is the interface for connecting the cable based on USB specification. Centronics IF 1322 is the interface for connecting the cable of the Centronics specification.

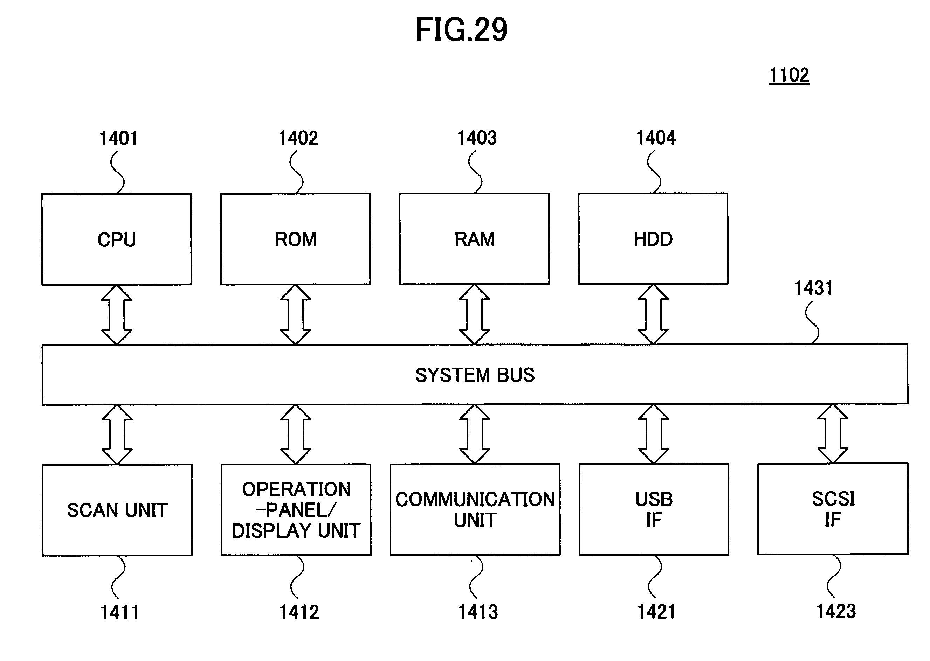

FIG. 29 is the hardware block diagram concerning the scanner 1102 of FIG. 26 and FIG. 27.

The scanner 1102 of FIG. 26 and FIG. 27 comprises SCSI IF 1423, CPU 1401, ROM 1402, RAM 1403, HDD (hard disk drive) 1404, the scanning unit 1411, the operation display unit 1412, the communication unit 1413, and USB IF 1421. These hardware components are connected to the system bus 1431.

CPU1401 is hardware which performs information processing of control of the scanner 1102 etc. ROM1402 is the hardware in which the program for the above-mentioned information processing etc. was stored.

RAM1403 is the memory for the above-mentioned information processing. HDD1404 is the storage for the above-mentioned information processing, and is the hardware in which the program for the above-mentioned information processing etc. was stored.

The scanning unit 1411 is the hardware for performing the scan processing, and is constituted by the scanner engine etc. The operation display unit 1412 is the hardware for the user getting the output from the scanner 1102, and is constituted by the operation panel etc. while it is the hardware for the user inputting into the scanner 1102.

The communication unit 1413 is the hardware for connecting the scanner 1102 to the networks, such as the Ethernet (registered trademark) and the telephone line, and is constituted by NIC, MODEM, etc.

USBIF1421 is the interface for connecting the cable based on USB specification. SCSIIF1423 is the interface for connecting the cable based on SCSI specification.

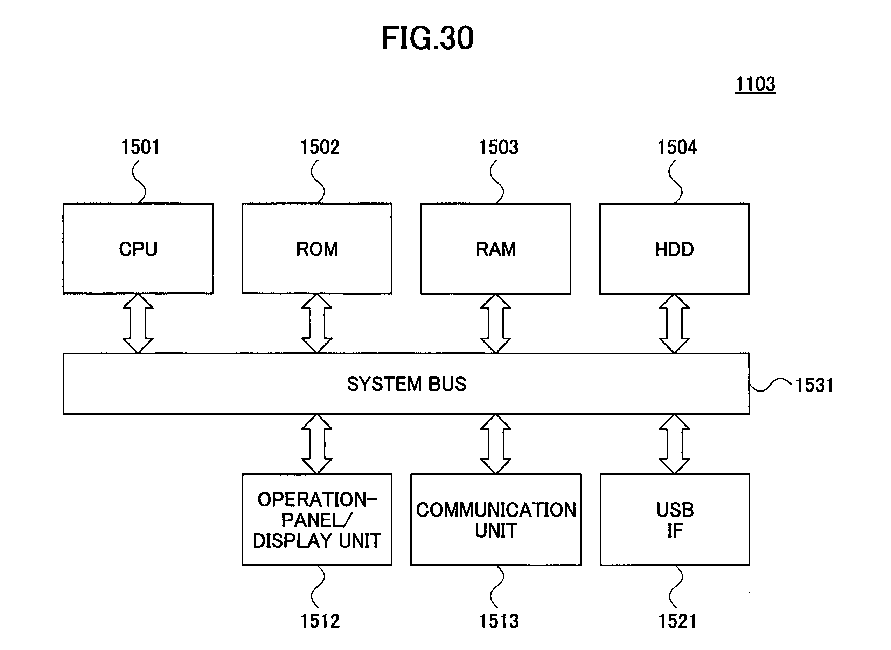

FIG. 30 is the hardware block diagram concerning the storage device 1103 of FIG. 26 and FIG. 27.

The storage device 1103 of FIG. 26 and FIG. 27 comprises USB IF 1521, CPU 1501, ROM 1502, RAM 1503, HDD (hard disk drive) 1504, the operation display unit 1512, and the communication unit 1513. These hardware components are connected to the system bus 1531.

The role of these hardware components etc. is the same as that of the printer 1101 or the scanner 1102.

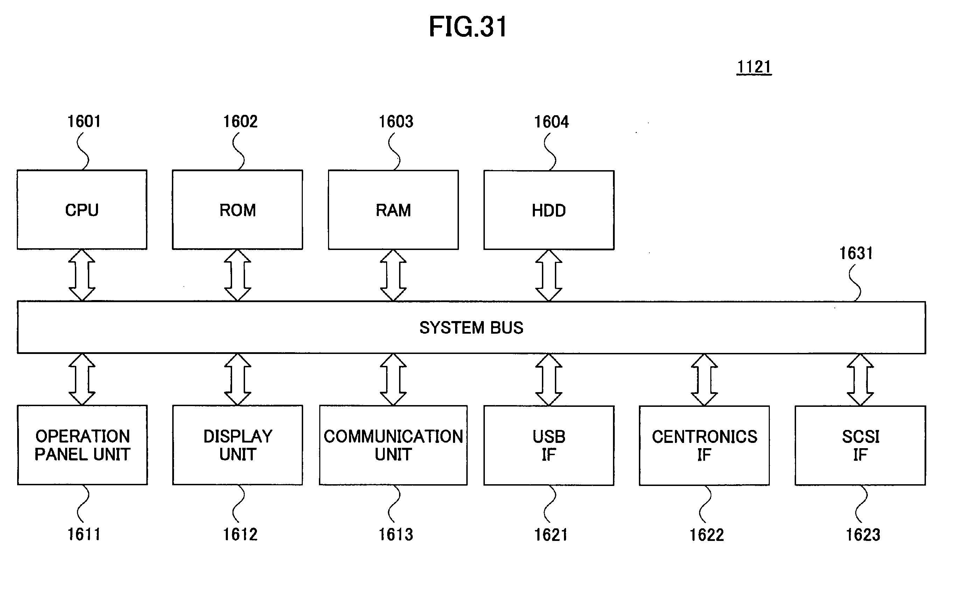

FIG. 31 is the hardware block diagram concerning PC 1121 of FIG. 26 and FIG. 27.

PC 1121 of FIG. 26 and FIG. 27 comprises CPU 1601, ROM 1602, RAM 1603, HDD (hard disk drive) 1604, the operation panel unit 1611, the display unit 1612, the communication unit 1613, USB IF 1621, Centronics IF 1622, and SCSI IF 1623. These hardware components are connected to the system bus 1631.

CPU1601 is hardware which performs information processing of various control etc. ROM1602 is the hardware in which the program for the above-mentioned information processing etc. was stored.

RAM 1603 is the memory for the above-mentioned information processing. HDD1604 is the storage for the above-mentioned information processing, and is the hardware in which the program for the above-mentioned information processing etc. was stored.

The operation panel unit 1611 is the hardware for the user inputting into PC1121, and is constituted by the keyboard, the mouse, etc. The display unit 1612 is the hardware for the user getting the output from PC1121, and is constituted by display etc. The communication unit 1613 is the hardware for connecting PC1121 to the networks, such as the Ethernet (registered trademark) and the telephone line, and is constituted by NIC, MODEM, etc.

USB IF 1621 is the interface for connecting the cable based on USB specification. Centronics IF 1622 is the interface for connecting the cable of the Centronics specification. SCSI IF 1623 is the interface for connecting the cable based on SCSI specification.

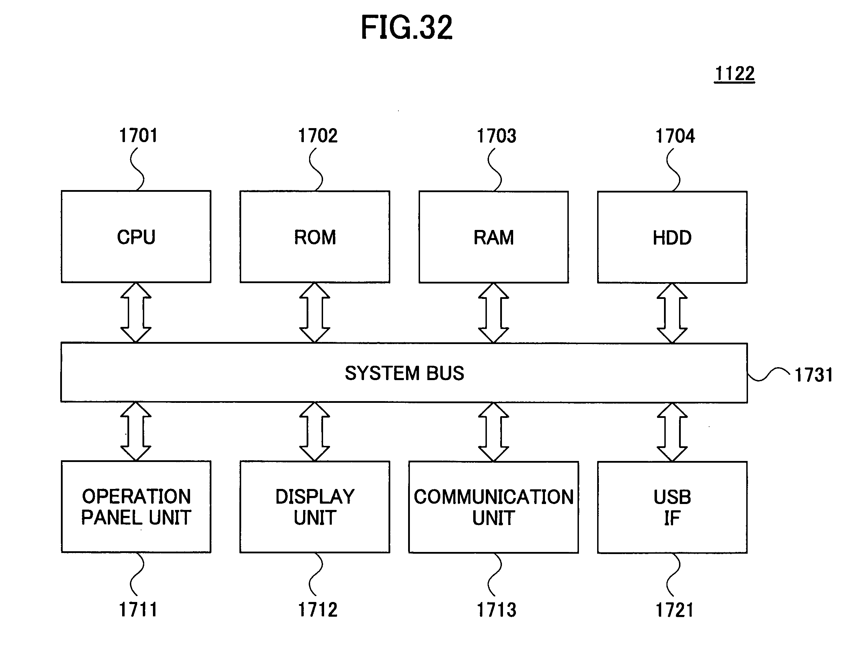

FIG. 32 is the hardware block diagram concerning the proxy server 1122 of FIG. 26 and FIG. 27.

The proxy server 1122 of FIG. 26 and FIG. 27 comprises CPU 1701, ROM 1702, RAM 1703, HDD (hard disk drive) 1704, the operation panel unit 1711, the display unit 1712, the communication unit 1713, and USB IF 1721. These hardware components are connected to the system bus 1731.

CPU1701 is hardware which performs information processing of various control etc. ROM1702 is the hardware in which the program for the above-mentioned information processing etc. was stored.

RAM 1703 is the memory for the above-mentioned information processing. HDD1704 is the storage for the above-mentioned information processing, and is the hardware in which the program for the above-mentioned information processing etc. was stored.

The operation panel unit 1711 is the hardware for the user inputting into the proxy server 1122, and is constituted by the keyboard, the mouse, etc. The display unit 1712 is the hardware for the user getting the output from the proxy server 1122, and is constituted by display etc.

The communication unit 1713 is the hardware for connecting the proxy server 1122 to the networks, such as the Ethernet (registered trademark) and the telephone line, and is constituted by NIC, MODEM, etc. USBIF1721 is the interface for connecting the cable based on USB specification.

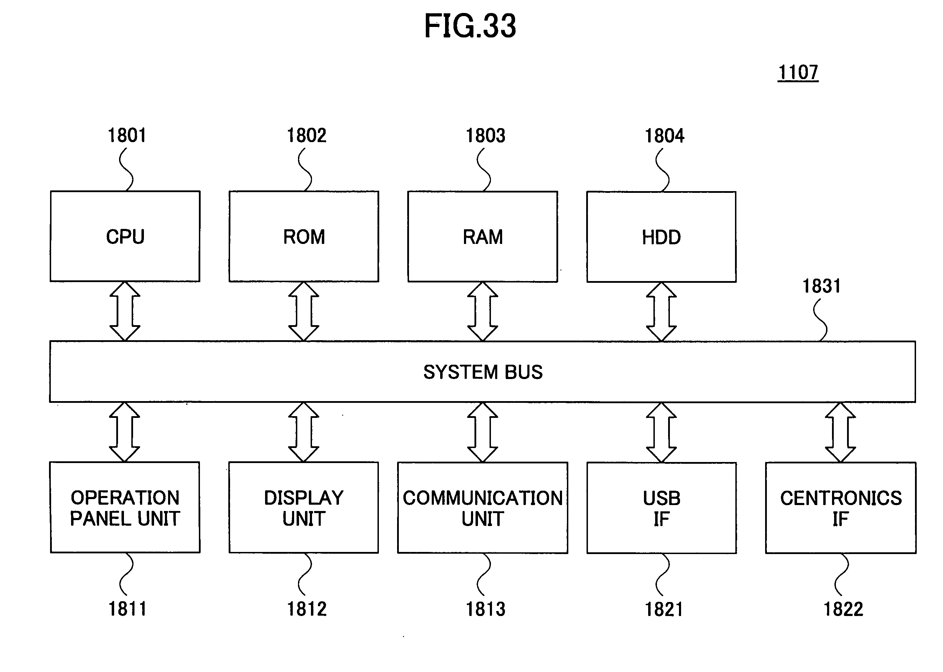

FIG. 33 is the hardware block diagram concerning the print server 1107 of FIG. 27.

The print server 1107 of FIG. 27 comprises CPU1801, ROM1802, RAM1803, HDD (hard disk drive) 1804, the operation panel unit 1811, the display unit 1812, the communication unit 1813, USBIF1821, and Centronics IF1822. These hardware components are connected to the system bus 1831.

The role of these hardware components etc. is the same as that of PC 1121 or the proxy server 1122.

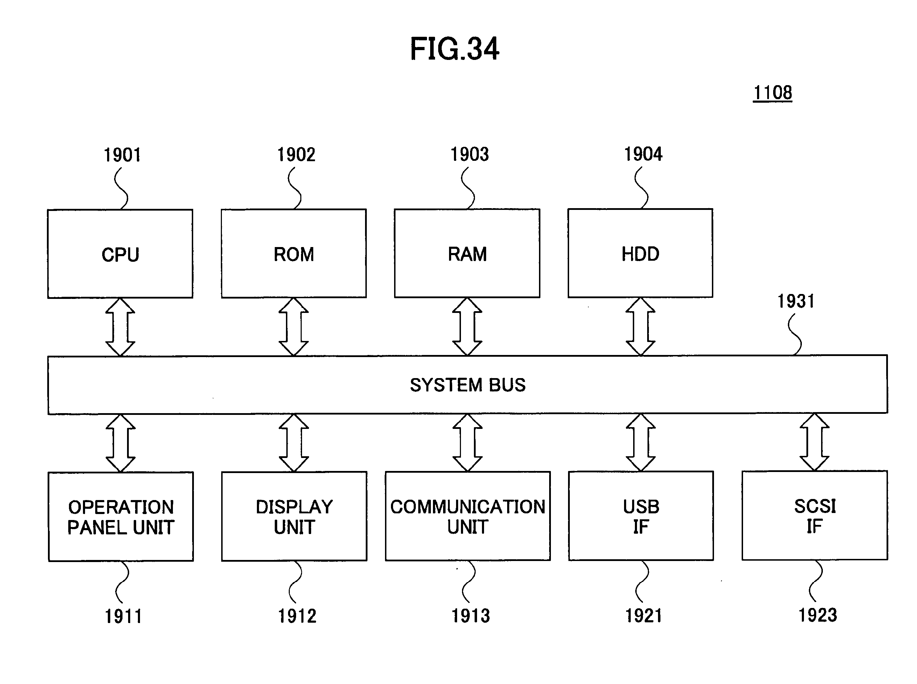

FIG. 34 is the hardware block diagram concerning the scanning server 1108 of FIG. 27.

The scanning server 1108 of FIG. 27 comprises CPU1901, ROM1902, RAM1903, HDD (hard disk drive)1904, the operation panel unit 1911, the display unit 1912, the communication unit 1913, USBIF1921, and SCSIIF1923. These hardware components are connected to the system bus 1931.

The role of these hardware components etc. is the same as that of PC1121 or the proxy server 1122.

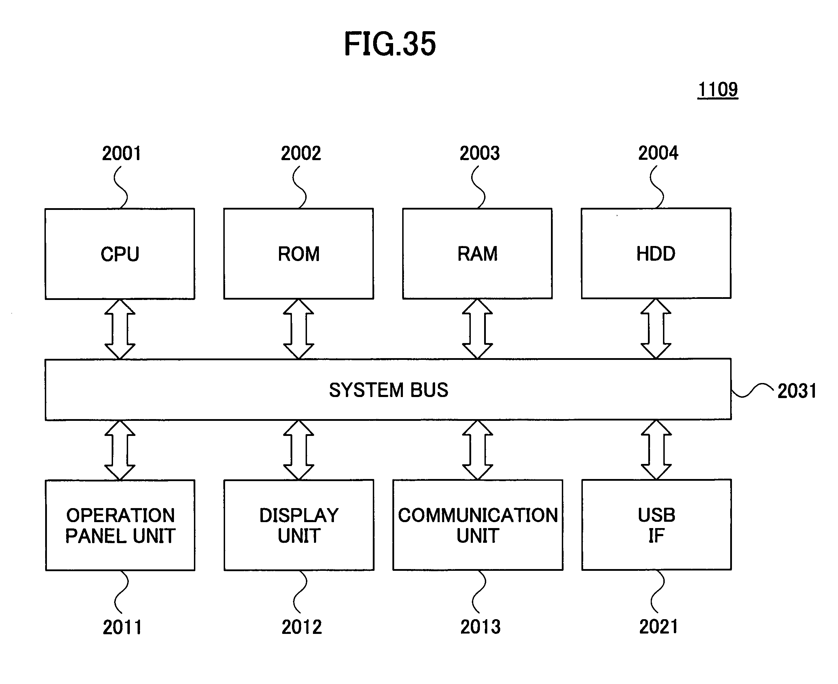

FIG. 35 is the hardware block diagram concerning the storage server 1109 of FIG. 27.

The storage server 1109 of FIG. 27 comprises USBIF2021, CPU2001, ROM2002, RAM2003 and HDD (hard disk drive)2004, the operation panel unit 2011, the display unit 2012, and the communication unit 2013. These hardware components are connected to the system bus 2031. The role of these hardware components etc. is the same as that of PC 1121 or the proxy server 1122.

Based on the above explanation, the document processing which is performed by the document processing system of FIG. 26 will be explained.

In the document processing system of FIG. 27, the document processing which is the same as that of the document processing system of FIG. 26 may be performed.

When input operation of the setting which prints document data is performed, PC1121 will output the command of the job creation request of the setting which creates the print job, and will access the printer 1101.

The printer 1101 executes the command of the job creation request of the setting which creates the print job, on condition that authenticity is approved by authentication processing, and it becomes what (the print job is performed) document data are printed for.

The authentication information used by the above-mentioned authentication processing is delivered and received in the state where it is inserted in the command of the above-mentioned job creation request.

Hereafter, the command issue processing and command-execution processing will be explained.

(1) Command issue processing view 36 shows the printer operation screen 2101 displayed on the screen of PC 1121.

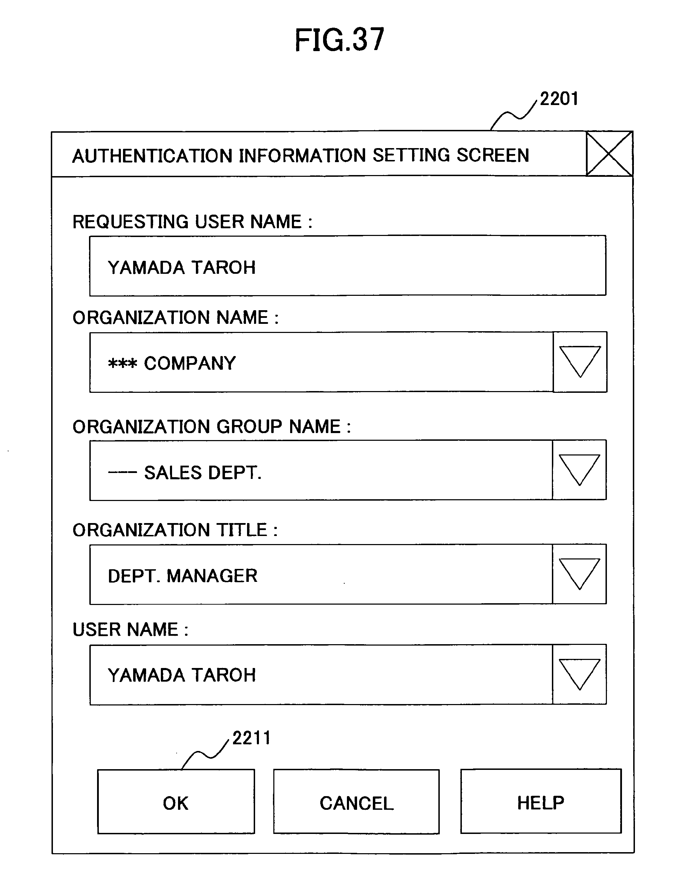

FIG. 37 shows the authentication information setting screen 2201 displayed on the screen of PC1121.

The printer driver is installed in PC 1121 and the printer operation screen 2101 and the authentication information setting screen 2201 are displayed by the printer driver.

On the printer operation screen 2101, it can set up by which printer it prints, or on what printing conditions it prints.

If the authentication information setting key 2121 is clicked on the printer operation screen 2101, the screen will move to the authentication information setting screen 2201.

On the authentication information setting screen 2201, authentication information "the organization name", "their post name", and the "title" can be set up with user information "Requesting User Name."

If the O.K. button 2211 is clicked on the authentication information setting screen 2201, the screen will return to the printer operation screen 2101, and authentication information will be set up.

When the O.K. button 2111 is clicked on the printer operation screen 2101, the command of the job creation request of the setting which creates the print job will be outputted.

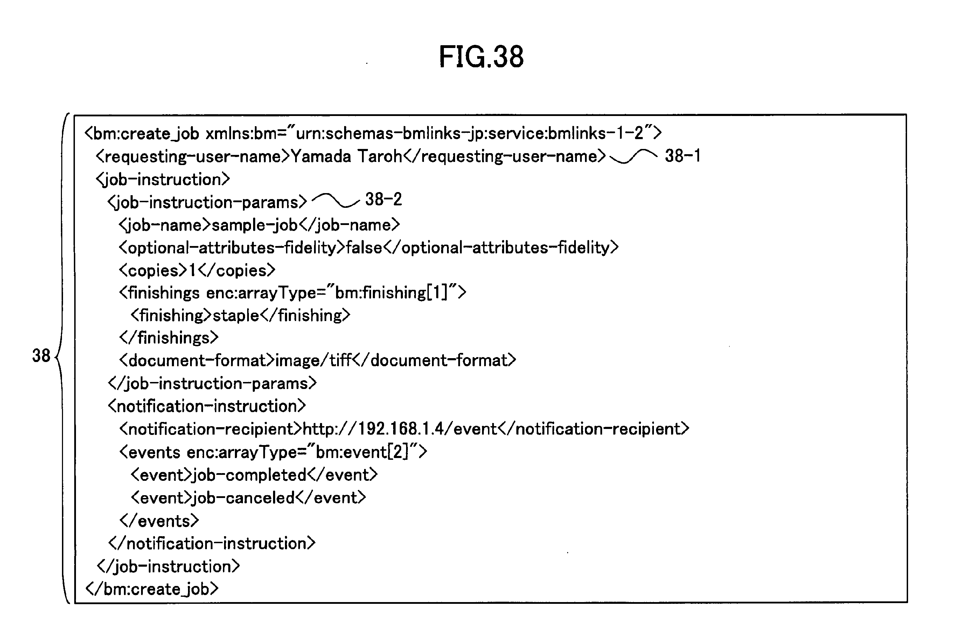

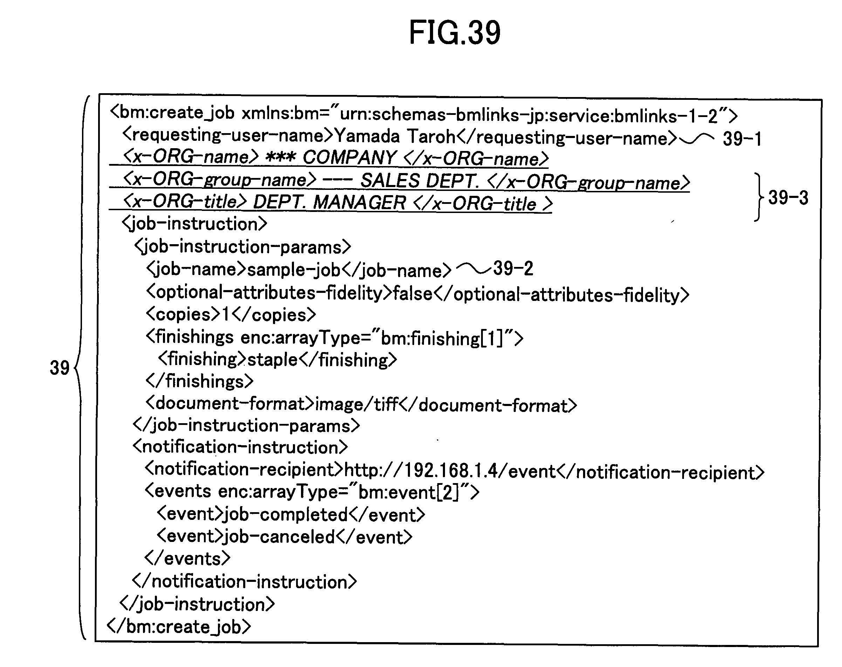

FIG. 38 and FIG. 39 show the example of the script of the command of the job creation request (create_job).

The SOAP (Simple Object Access Protocol) envelope is omitted. FIG. 38 shows the command before authentication information insertion, and FIG. 39 shows the command after authentication information insertion.

Description 38 and 39 is described by XML (extensible Markup Language) by description concerning the BMLinkS command "create_job."

Description 38-1 and 39-1 are the user names "Yamada Taroh."

Description 38-2 and 39-2 are the job names "sample-job."

Description 39-3 is the authentication information inserted in the command using the original tag.

The tag will be explained. In this embodiment, as a tag for inserting authentication information in the command, the tag <x-ORG-name> of the organization name.

The tag <x-ORG-group-name> of one's post name, and the tag of 1 of one's post name <x-ORG-group-name -1>, The tag of 2 of one's post name <x-ORG-group-name -2>, The tag of 3 of their post name <x-ORG-group-name -3>, the tag of 4 of their post name <x-ORG-group-name -4>, the tag <x-ORG-title> of the title, etc. are defined.

When the tag <requesting-user-name> of user information exists and the tag <requesting-user-name> of user information does not exist immediately after it, let the insertion positions of these tags be <job-instruction> and this level.

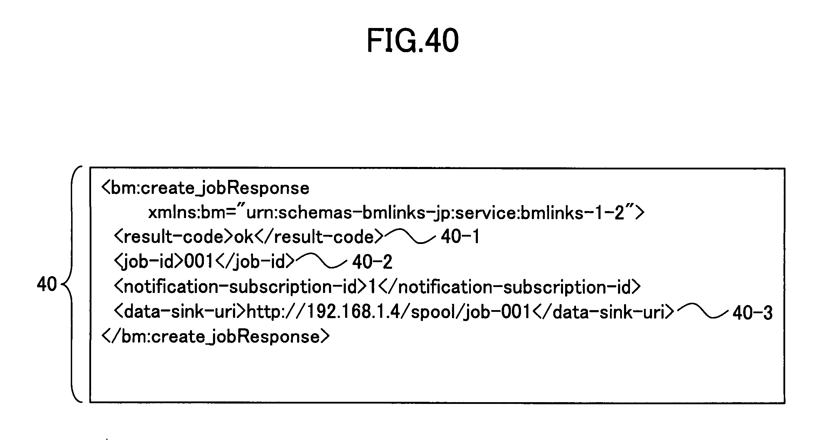

FIG. 40 shows the example of the script of the job creation response (create_jobRESPONSE).

The SOAP (Simple Object Access Protocol) envelope is omitted. Description 40 is described by XML (extensible Markup Language) by description concerning the BMLinkS command response "create_jobRESPONSE."

Description 40-1 is "ok" to the job creation request. Description 40-2 is Job ID "001."

Description 40-3 is URI "http://192.168.1.4 / spool/job - 001" used as the document data-transfer point.

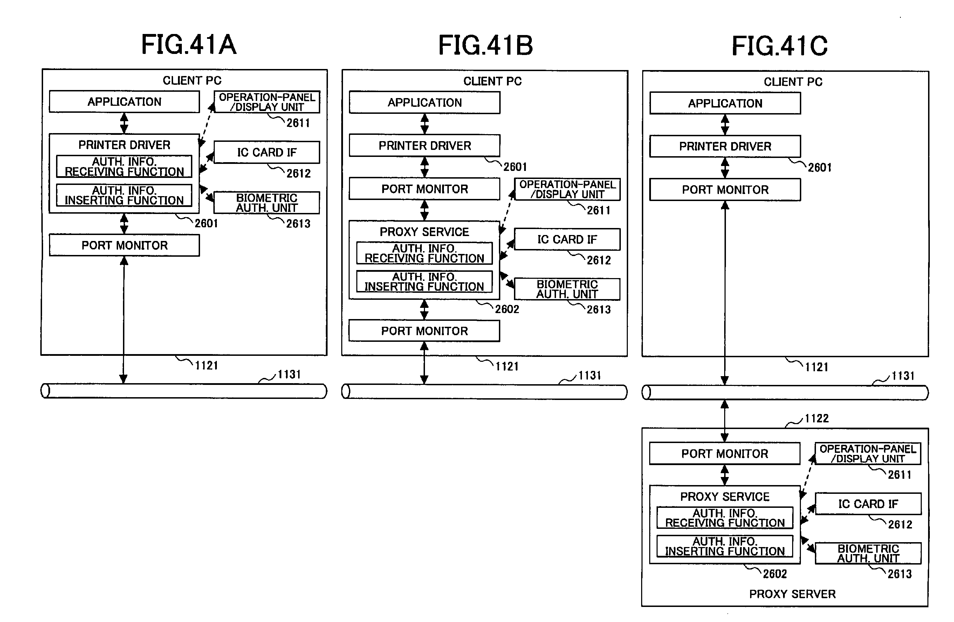

FIG. 41A through FIG. 41C are diagrams for explaining the execution subject of authentication information insertion processing.

FIG. 41A shows the case of making the printer driver 2601 in PC1121 into the execution subject of authentication information insertion processing.

In FIG. 41A, the printer driver 2601 in PC1121 has the authentication information receiving function and the authentication information insertion function.

In FIG. 41A, while the printer driver 2601 in PC1121 will output the command of the job creation request to the print service 1104 in the printer 1101, authentication information is acquired, and the printer driver 2601 in PC1121 will use the tag for the command concerned, and will insert the authentication information concerned in it.

FIG. 41B shows the case of making proxy service 2602 in PC1121 into the execution subject of authentication information insertion processing.

In FIG. 41B, the proxy service 2602 in PC1121 has the authentication information receiving function and the authentication information insertion function.

In FIG. 41B, while the printer driver 2601 in PC1121 will output the command of the job creation request to the print service 1104 in the printer 1101, authentication information is acquired, and the proxy service 2602 in PC 1121 will use the tag for the command concerned, and will insert the authentication information concerned in it.

FIG. 41C is a diagram in the case of making proxy service 2602 in the proxy server 1122 into the execution subject of authentication information insertion processing.

In FIG. 41C, the proxy service 2602 in the proxy server 1122 has the authentication information receiving function and the authentication information insertion function.

In FIG. 41B, while the printer driver 2601 in PC 1121 will output the command of the job creation request to the print service 1104 in the printer 1101 and the proxy service 2602 in the proxy server 1122 will transmit the command concerned to the print service 1104 in the printer 1101, authentication information is acquired, and the proxy service 2602 in the proxy server 1122 will use the tag for the command concerned, and will insert the authentication information concerned in it.

Compared with FIG. 41A, there is the advantage that it is good at the standard driver as for which the printer driver 2601 has neither the authentication information receiving function nor the authentication information insertion function in FIG. 41B or FIG. 41C.

Compared with FIG. 41B, there is the advantage that the plurality of clients can share the proxy of 1 in FIG. 41C. The mode which acquires authentication information by the biometrics using reading of living body information, such as the mode and the three fingerprints which acquire authentication information as a mode of authentication information receiving processing by reading of the storage mediums, such as the mode which acquires authentication information by 1 screen input, and 2 IC cards, and the iris, is mentioned.

In the mode 1, the screen input of the authentication information is carried out through PC1121 or the operation display unit 2611 (equivalent to the operation panel units 1611 and 1711 or the display units 1612 and 1712) of the proxy server 1122.

The screen input of authentication information is performed on the authentication information setting screen 2201 of FIG. 37.

In FIG. 41A, the authentication information setting screen 2201 of FIG. 37 is displayed on the screen of PC 1121 as mentioned above by the printer driver 2601 in PC 1121.

In FIG. 41B, the authentication information setting screen 2201 of FIG. 37 is displayed on the screen of PC1121 by the proxy service 2602 in PC1121.

In FIG. 41C, the authentication information setting screen 2201 of FIG. 37 is displayed on the screen of the proxy server 1122 by the proxy service 2602 in the proxy server 1122.

In the mode 2, the authentication information memorized by the IC card set to PC1121 or IC card IF2612 of the proxy server 1122 is read. The IC card IF 2612 is provided as the option product of the printer 1101.

In the mode 3, authentication information is acquired through the biometrics performed by PC 1121 or the biometrics unit 2613 of the proxy server 1122.

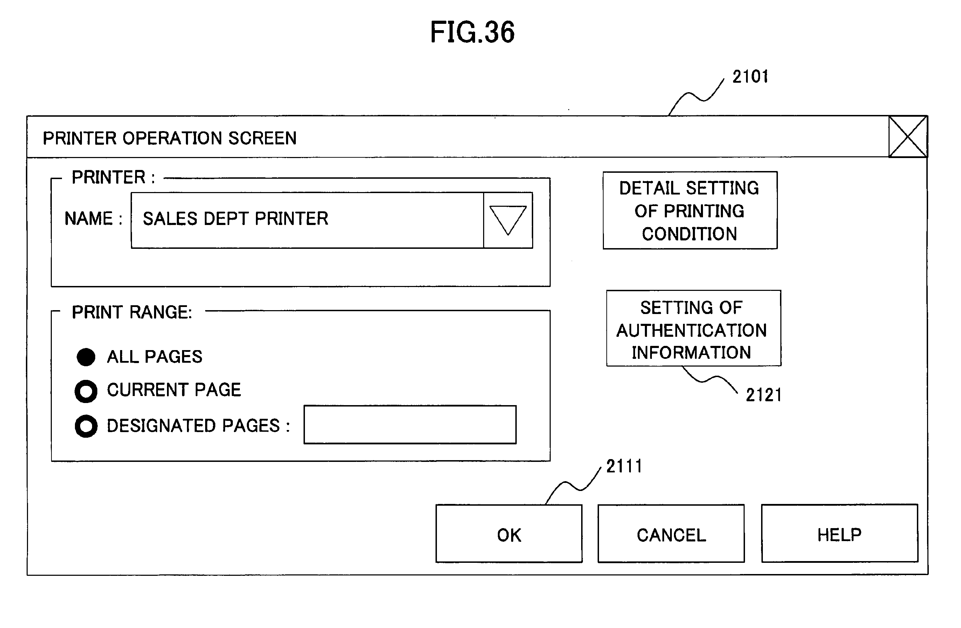

The biometrics unit 2613 is provided as the option product of the printer 1101. If it may perform before the O.K. button 2111 is clicked on the printer operation screen 2101 of FIG. 36, authentication information receiving processing may be performed after the O.K. button 2111 is clicked on the printer operation screen 2101 of FIG. 36.

Although the authentication information setting screen 2201 of FIG. 37 will be displayed if the authentication information setting key 2121 is clicked on the printer operation screen 2101 of FIG. 36, this is equivalent to the example of advance receiving (mode 1).

The authentication information acquired by advance receiving in FIG. 41A, in FIG. 41B, it is managed by the proxy service 2602 in PC1121, and, in FIG. 41C, is managed by the proxy service 2602 in the proxy server 1122 by the printer driver 2601 in PC1121.

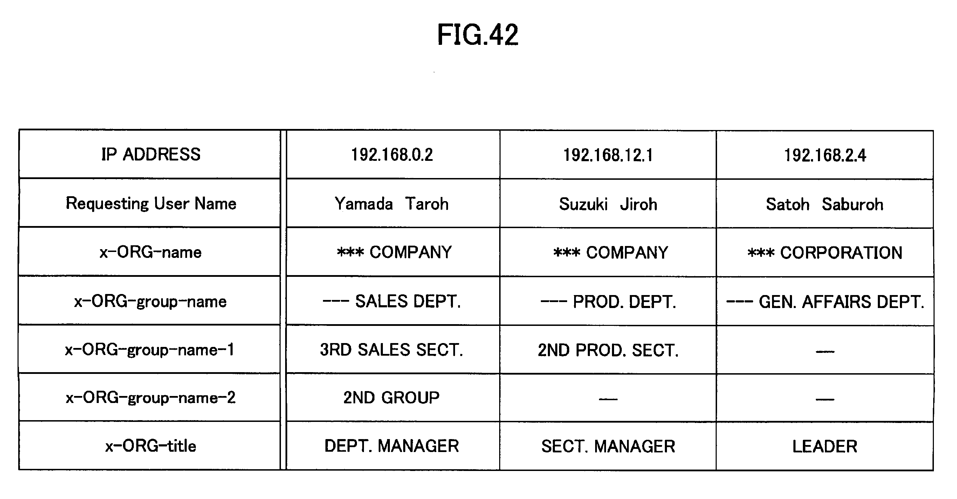

In FIG. 41B or FIG. 41C, the authentication information acquired by advance receiving is managed on the table as shown in FIG. 42.

The table of FIG. 42 is the table concerning the correspondence relation with the authentication information on the IP address of the client, and the client etc.

The authentication information corresponding to the above-mentioned IP address is inserted in the command which includes the above-mentioned IP address using this correspondence relation.

Authentication information insertion processing shall be performed according to the predetermined setting.

When the setting is "advance receiving", authentication information insertion processing using the authentication information acquired by advance receiving is performed.

When the setting is "follow-up receiving", authentication information insertion processing using the authentication information acquired by follow-up receiving is performed.

When the setting "is not carried out" out, authentication information insertion processing is not performed.

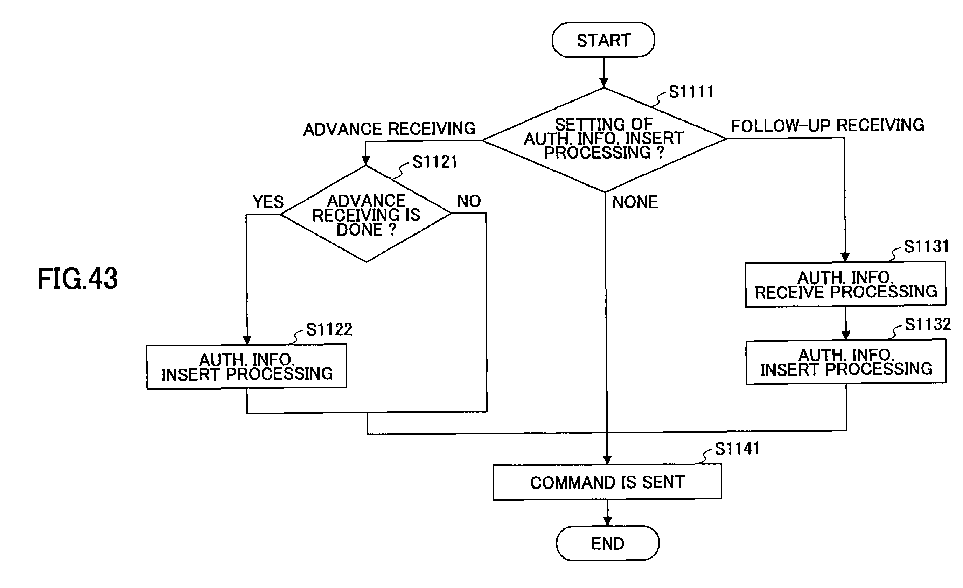

FIG. 43 is a flowchart for explaining the authentication information insertion processing which is performed by the printer driver 2601.

The printer driver 2601 will output the command of the job creation request with the setting which creates the print job, when the O.K. button 2111 is clicked on the printer operation screen 2101 of FIG. 36. In this situation, when the setting of authentication information insertion processing is "advance receiving" (S1111), it is determined whether the execution of advance receiving of authentication information is done (S1121). When the result at the step S 1121 is affirmative, the authentication information insertion processing is performed using the authentication information acquired by the advance receiving (S1122).

When the setting of authentication information insertion processing is "follow-up receiving" (S1111), authentication information receiving processing is performed (S1131), and authentication information insertion processing is performed using the authentication information acquired by the follow-up receiving (S1132).

The printer driver 2601 outputs the above-mentioned command after the above processing is carried out (S1141).

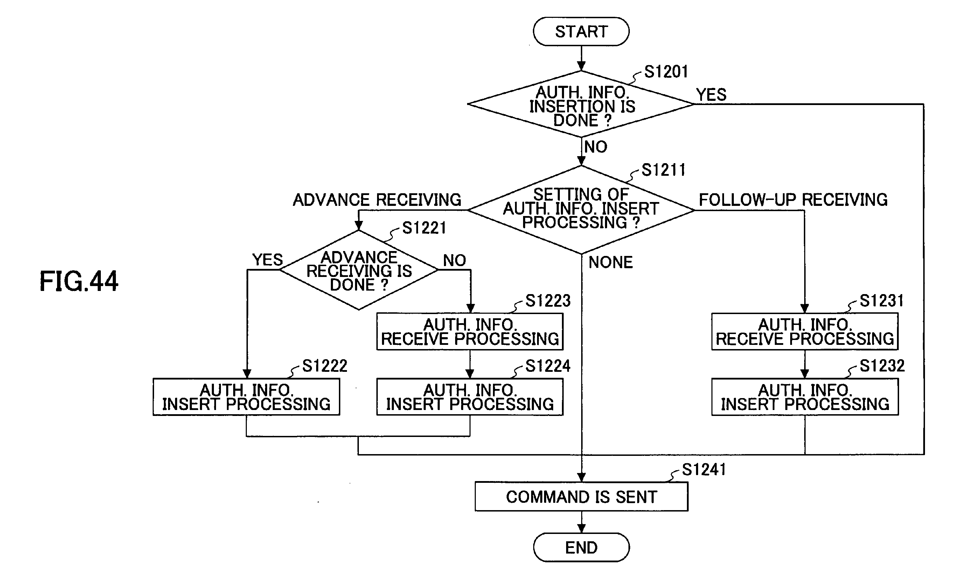

FIG. 44 is a flowchart for explaining the authentication information insertion processing which is performed by the proxy service 2602.

The proxy service 2602 will receive the command of the job creation request with the setting which creates the print job, from the printer driver 2601, and will transmit it to the print service 1104 in the printer 1101.

In this situation, when the setting of authentication information insertion processing is "advance receiving" (S1211), it is determined whether the execution of advance receiving of authentication information is done (S1221). When the result at the step S1221 is affirmative, authentication information insertion processing is performed using the authentication information acquired by the advance receiving (S1222).

When the result at the step S1221 is negative, authentication information receiving processing is performed (S1223), and authentication information insertion processing is performed using the authentication information acquired by the follow-up receiving (S1224).

When the setting of authentication information insertion processing is "follow-up receiving" (S1211), authentication information receiving processing is performed (S1231), and authentication information insertion processing is performed using the authentication information acquired by the follow-up receiving (S1232).

These processings are unnecessary to be performed when the insertion of authentication information is already done (S1201).

The proxy service 2602 transmits the above-mentioned command to the print service 1104 in the printer 1101 after the processing is carried (S1241).

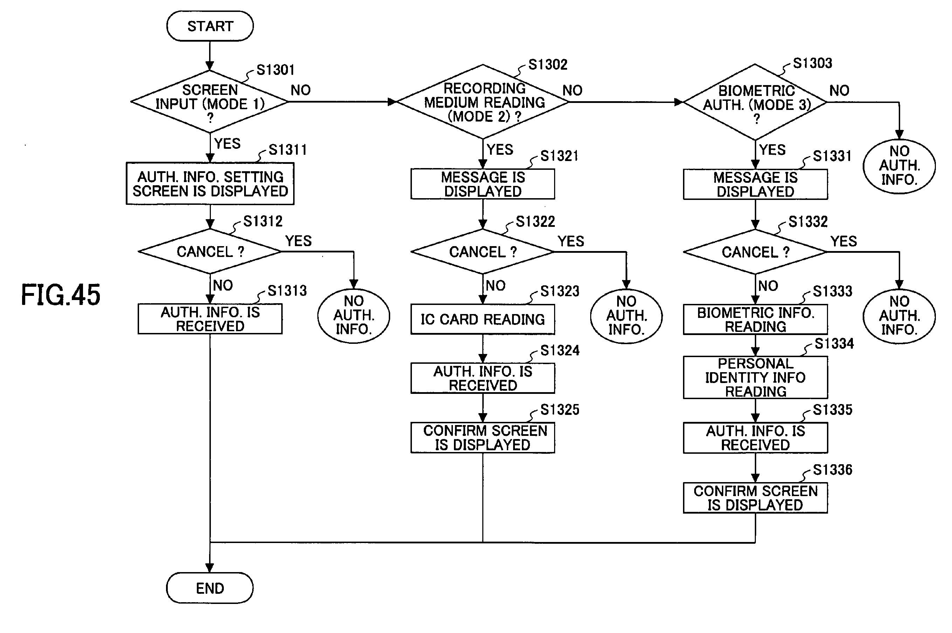

FIG. 45 is a flowchart for explaining the authentication information receiving processing which is performed by the printer driver 2601 and the proxy service 2602.

The step S1131 of FIG. 43 and the steps S1231/S1223 of FIG. 44 are equivalent to the processing of FIG. 45.

In the case of the mode 1 (authentication information is acquired by the screen input) (S1301), the authentication information setting screen 2201 of FIG. 37 is displayed for the setting of authentication information receiving processing (S1311).

The screen input of the authentication information will be carried out on the authentication information setting screen 2201 of FIG. 37.

In this way, authentication information is acquired (S1313).

Authentication information will become "nothing" if authentication information receiving processing is stopped (S1312) the middle.

The message the setting of authentication information receiving processing urges the set of the IC card in the case of the mode 2 (authentication information is acquired by reading of the storage medium) (S1302Yes) is displayed (S1321).

The IC card will be set according to the message. The authentication information memorized by the IC card set according to the message is read (S 1323), and the $\overline{C}$ and authentication information are acquired (S1324).

And the authentication information setting screen 2201 of FIG. 37 is displayed as a check screen of the receiving result of authentication information (S 1325).

Authentication information will become "nothing" if authentication information receiving processing is stopped (S1322) the middle.

It is the same when reading of the storage medium goes wrong. The message the setting of authentication information receiving processing urges operation for reading of living body information in the case of the mode 3 (it acquires by the biometrics using reading of living body information) (S1303Yes) is displayed (S1331).

According to the message, operation for reading of living body information will be performed. The living body information reads having (S1333) through collating with the database of the interior concerning the correspondence relation between living body information, individual specific information, and also authentication information, individual specific information is acquired (S1334) and authentication information is acquired further (S1335).

And the authentication information setting screen 2201 of FIG. 37 is displayed as a check screen of the receiving result of authentication information (S1336).

Authentication information will become "nothing" if authentication information receiving processing is stopped (S1332) the middle. It is the same when reading of living body information and collating with the database go wrong.

(2) Functional information supply processing

The print service 1104 in the printer 1101 can supply the information concerning what function self supports.

The response (which is called the functional information supply response) which includes the information concerning what function is supported is outputted to the command of the request (which is called the functional information supply request) which indicates the information which specifically starts what function is supported.

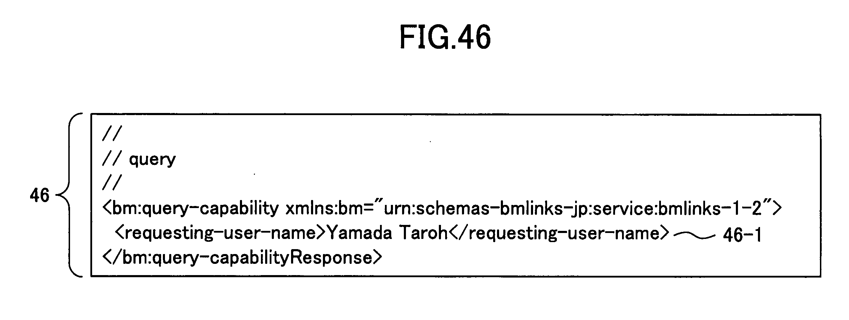

FIG. 46 shows the example of the script of the command of the above-mentioned functional information supply request.

The SOAP envelope is omitted. Description 46 is described by XML by description concerning the BMLinkS command. Description 46-1 is the user name "Yamada Taro."

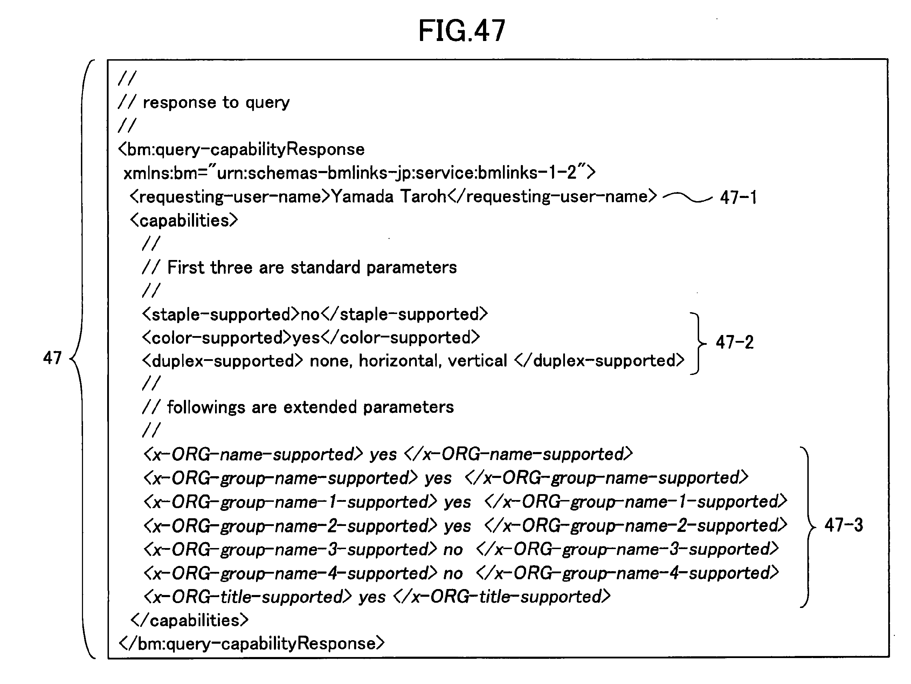

FIG. 47 shows the example of the script of the above-mentioned functional information supply response.

The SOAP envelope is omitted. Description 47 is described by XML by description concerning the BMLinkS command response. Description 47-2 is the user name "Yamada Taro." It is the information concerning what the "standard function" description 47-2 supports.

Here, it turns out that the stay pull is not supported, that the color is supported, and that one side printing, level chip box double-sided printing, and perpendicular chip box double-sided printing are supported. That is, it turns out what printing conditions are supported. It is the information concerning what "extension" description 47-3 supports.

Here, it turns out supporting the tag of the organization name, supporting the tag of one's post name, supporting the tag of 1 of one's post name, that the tag of 2 of its post name is supported, that the tag of 3 of its post name is not supported, that the tag of 4 of its post name is not supported, and that the tag of the title is supported. That is, it turns out what authentication information is supported.

In addition, it is connected with extension and these tags and authentication information are also called the extended tag and extended authentication information. In addition, it is possible to restrict the supply of the information concerning what "extension" is supported by managing the information concerning what the "standard function" the print service 1104 in the printer 1101 supports and the information concerning what "extension" is supported on the separate table according to the predetermined setting.

When the setting is "the limit", description like description 47-3 will be appended to the functional information supply response of FIG. 47.

When "not restricting" the setting, description like description 47-3 will be appended to the functional information supply response of FIG. 47.

By considering the setting as "the limit", the improper use of the extension by the user with the misuse of the extension by the user who does not understand extension, and the malice can be prevented.

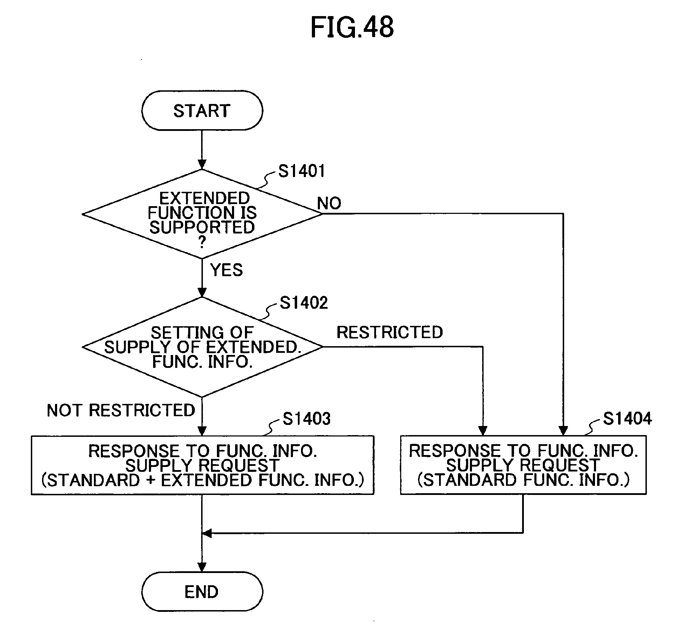

FIG. 48 is a flowchart for explaining the functional information supply processing which is performed by the print service 1104.

When the print service 1104 receives the command of the functional information supply request outputted with PC 1121, it will output the functional information supply response to PC 1121.

In this case, it is the case (S1401) where the print service 1104 supports extension, and when "not restricting" the setting of functional information supply concerning extension (S1402), the functional information supply response which includes the information concerning what the "standard function" is supported and the information concerning what "extension" is supported is outputted (S1403).

The functional information supply response which does not include the information which, on the other hand, starts what "extension" it supports although the information concerning what the "standard function" is supported is included when the print service 1104 does not support extension (S1401), or when the setting of functional information supply concerning extension is "the limit" (S1402) is outputted (S1404).

(3) Command-execution processing

The command to the print service 1104 outputted with PC1121 (command issue processing) will be executed by the print service 1104 concerned (command-execution processing). In the foregoing, the command issue processing has been explained, and command-execution processing will be explained in the following.

The print service 1104 will output "the authentication request" of the setting which performs authentication processing based on the authentication information inserted in the command to the authentication server 1111, if the command of the job creation request of the setting which creates the print job is received.

It is because it makes to permit authentication by the authentication processing concerned into the conditions for executing the command concerned.

The print service 1104 outputs "the access-authority judgment request" of the setting which judges the existence of authority (access authority) which performs the above-mentioned print job to the ACL server 1112, when authenticity is approved by the above-mentioned authentication processing.

Authenticity is approved by the above-mentioned authentication processing in addition, it is because it makes to check existence of the authority to perform the above-mentioned print job into the conditions for executing the above-mentioned command.

When existence of the authority to perform the above-mentioned print job is checked, the print service 1104 executes the above-mentioned command, and creates the above-mentioned print job.

The printer 1101 will perform the print job which the print service 1104 created, and will print document data. The print service 1104 outputs "the policy information supply request" of the setting which supplies the information concerning the policy of the printer 1101 to the policy server 1113, when authentication is not permitted by the above-mentioned authentication processing.

It is for correcting the above-mentioned command based on the information concerning the policy of the printer 1101.

After which corrected the above-mentioned command like document data are printed on the printing conditions (print job execution conditions) corresponding to the policy of the printer 1101 (the print job is performed), the print service 1104 executes the corrected command concerned, and creates the print job.

It corrects and the command which cannot be executed if it remains as it is executed so that it can perform.

The printer 1101 will perform the print job which the print service 1104 created, and will print document data.

In addition, by the three sets of the servers, the authentication server 1111, the ACL server 1112, and the policy server 1113, the processing performed, respectively is summarized by the one set or the two sets of the servers, and it may be made to perform it.

Moreover, you may be made to perform processing performed by the policy server 1113 separate from the printer 1101 with the ACL service in the printer 1101 in the processing performed by the ACL server 1112 separate from the printer 1101 with the authentication service in the printer 1101 in the processing performed by the authentication server 1111 separate from the printer 1101 with the policy service in the printer 1101.

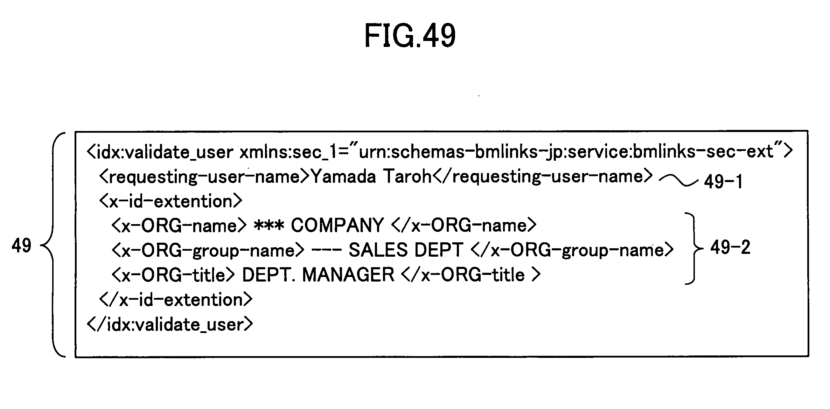

FIG. 49 shows the example of the script of the command of the authentication request.

The SOAP envelope is omitted. Description 49 is description concerning the BMLinkS command, and it is described by XML.

Description 49-1 is the user name "Yamada Taro." Description 49-2 is the authentication information delivered and received in the state where it is inserted in the command of the job creation request using the original tag.

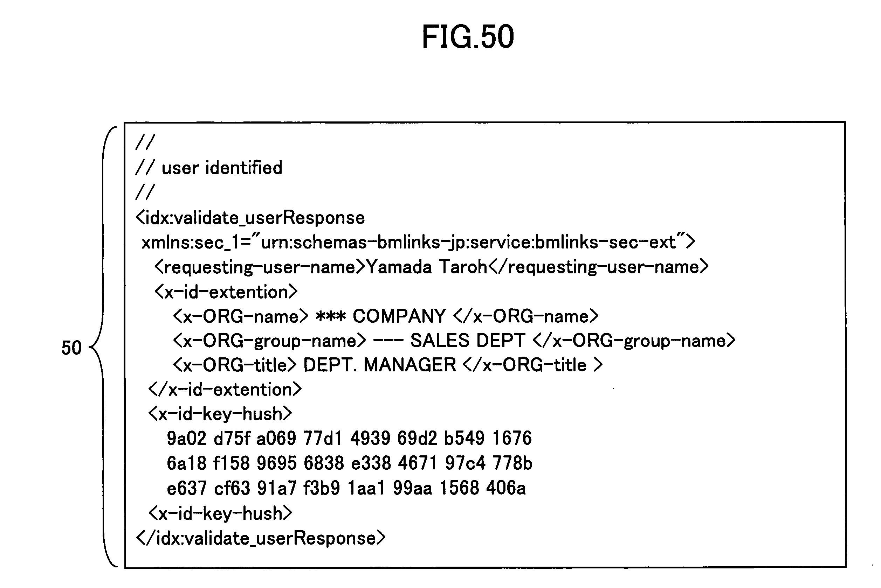

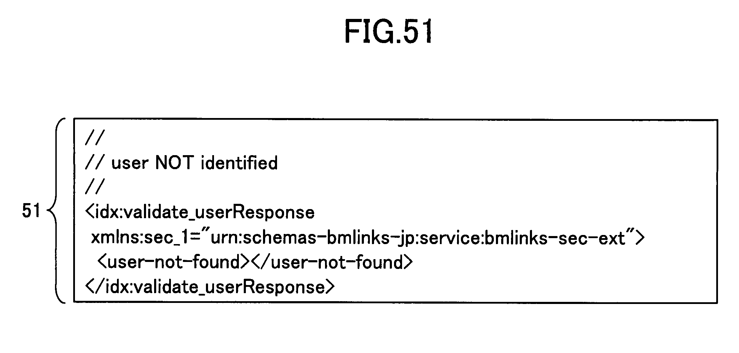

FIG. 50 and FIG. 51 show the example of the script of the authentication response.

The SOAP envelope is omitted. FIG. 50 shows the authentication response when authentication is successful (when authenticity is approved), and FIG. 51 shows the authentication response when authentication is not successful (when authenticity is not approved). Description 50 and 51 is the description concerning the BMLinkS command response, and it is described by XML.

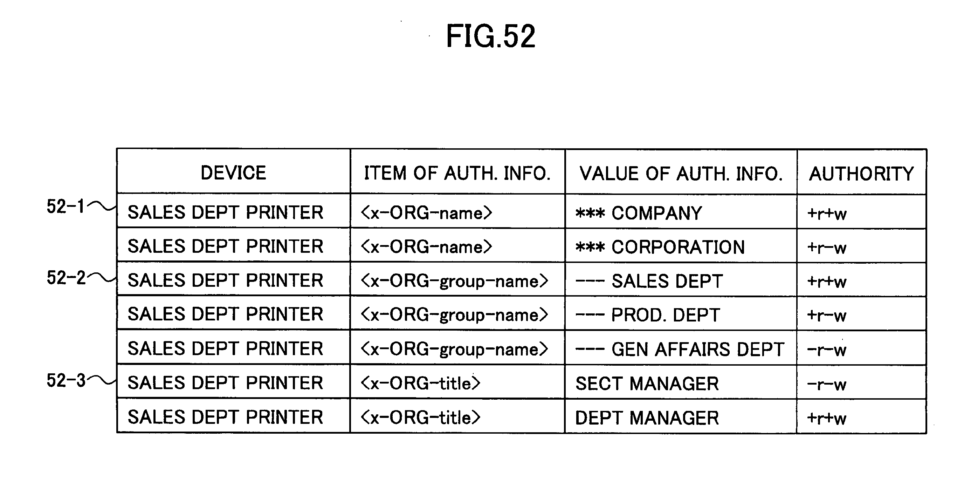

FIG. 52 shows the example of ACL (Access Control List) managed by the ACL server 1112.

For example, + and - of the access-authority option mean the existence of the access authority to the print service 1104 (printer 1101). For example, +r and -r mean the existence of read authority to the print service 1104, i.e., the existence of the authority to acquire status information from the printer 1101.

For example, +w and -w mean the existence of write authority to the print service 1104, i.e., the existence of authority which performs the print job by the printer 1101.

Description 52-1 means that there are read authority over the marketing department printer (name of the printer 1101) and write authority, when authentication information "x-ORG-name" is "*** Corp."

For description 52-2, authentication information "x-ORG-group-name" is "... In being marketing department", it means that there are read authority over the marketing department printer (name of the printer 1101) and write authority.

Description 52-3 means that there is neither read authority over the marketing department printer (name of the printer 1101) nor write authority, when authentication information "x-ORG-title" is the "unit chief."

If the access-authority judgment request outputted by the print service 1104 is received, the ACL server 1112 will judge the existence of the access authority based on ACL as shown in FIG. 52, and will output the access-authority judgment response which includes the judgment result concerned to the print service 1104. The print service 1104 checks existence of the access authority in consideration of the judgment result concerned.

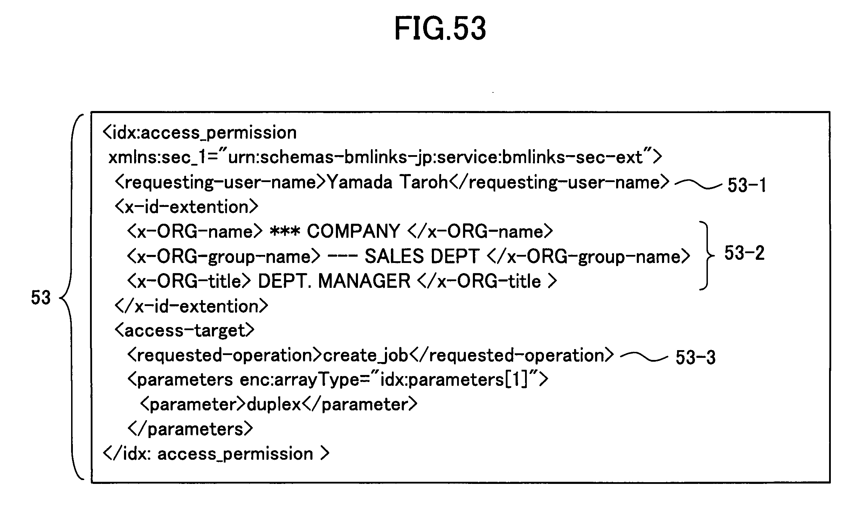

FIG. 53 shows the example of the script of the command of the policy information supply request.

The SOAP envelope is omitted. Description 53 is description concerning the BMLinkS command, and it is described by XML. Description 53-1 is the user name "Yamada Taro." Description 53-2 is the authentication information delivered and received in the state where it is inserted in the command of the job creation request using the original tag. Description 53-3 is description of the setting which makes the policy about the command of the job creation request applicable to information supply.

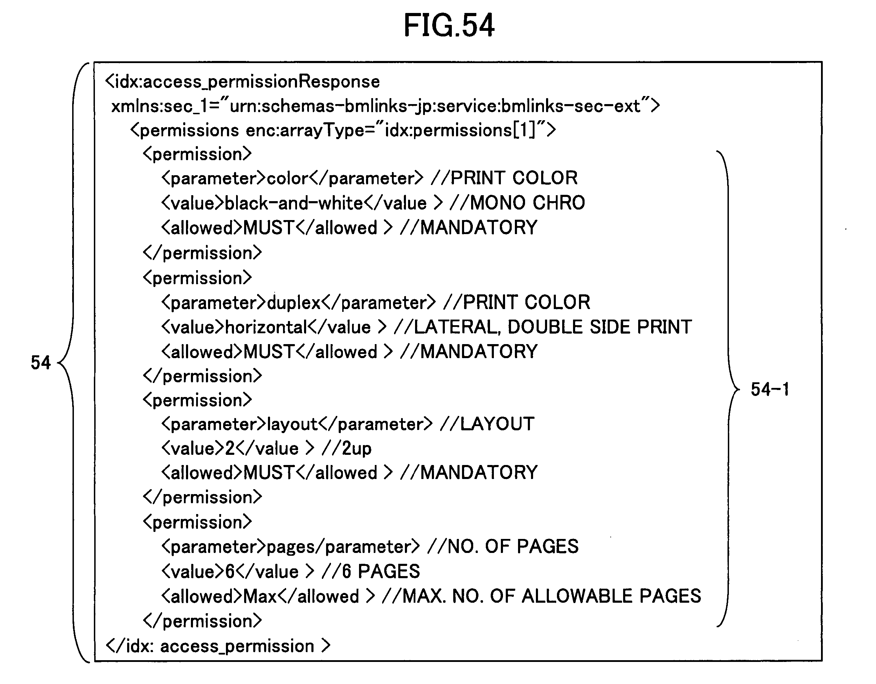

FIG. 54 shows the example of the script of the policy information supply response.

The SOAP envelope is omitted. Description 54 is description concerning the BMLinkS command response, and it is described by XML. Description 54-1 is the contents of information supply concerning the policy about the command of the job creation request.

Here, it turns out that the printing color has the indispensable monochrome, that the printing side has indispensable level chip box double-sided printing, that 2up(s) of the layout are indispensable, and that 6 pages of pagination are the maximum permission pagination.

Thus, the policy about various printing conditions (print job execution conditions) is managed by the policy server 1113 as a policy about the command of the job creation request.

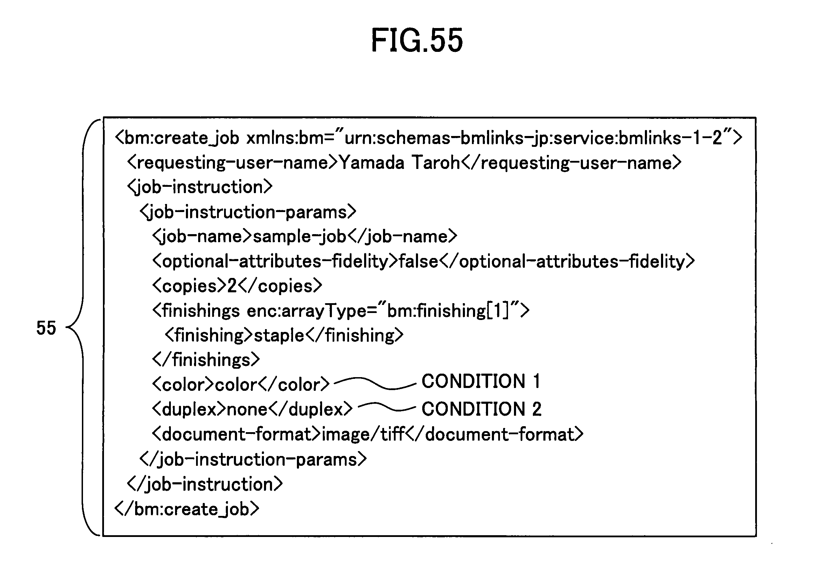

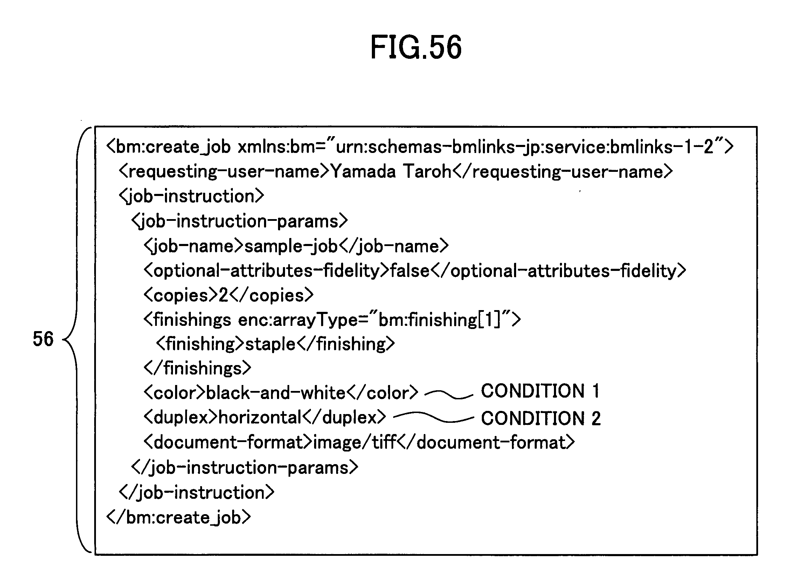

FIG. 55 and FIG. 56 show the example of the script of the command of the job creation request (create_job) which the print service 1104 received.

The SOAP envelope is omitted. FIG. 55 is the command before correcting based on the policy, and FIG. 56 is the command after correcting based on the policy.

Description 55 and 56 is description concerning the BMLinkS command, and it is described by XML. The conditions 1 "the printing color" are amended to the monochrome from the color, and the conditions 2 "the printing side" are amended to level chip box double-sided printing from one side printing.

According to the policy of FIG. 54, the printing color has the indispensable monochrome and the printing side is because level chip box double-sided printing is indispensable.

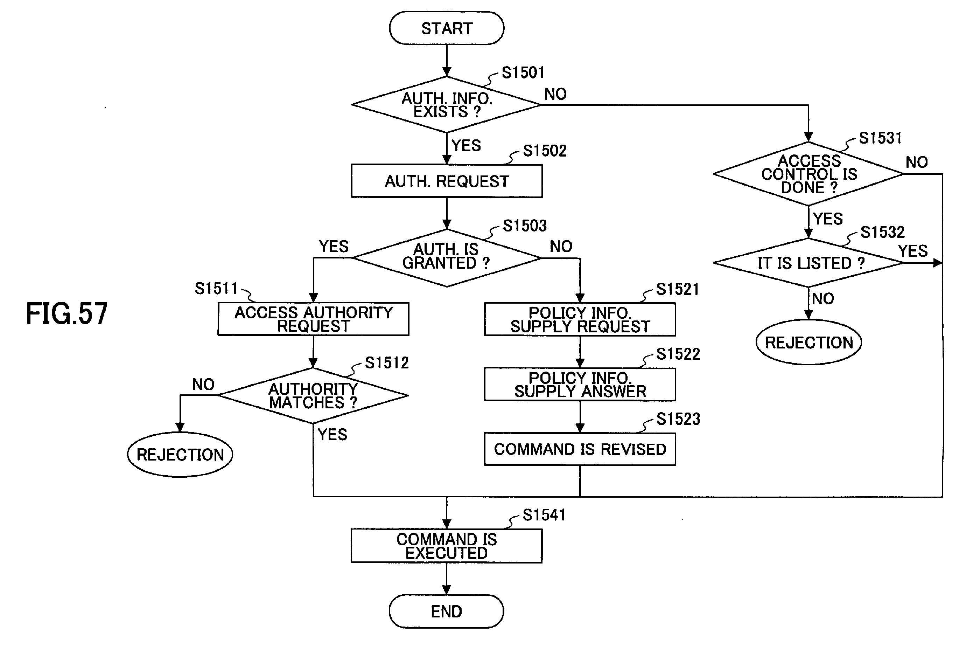

FIG. 57 is a flowchart for explaining the command-execution processing which is performed by the print service 1104.

The print service 1104 outputs "the authentication request" of the setting which performs authentication processing based on the authentication information inserted in the command to the authentication server 1111, when authentication information is inserted in the command (S1501), if the command of the job creation request of the setting which creates the print job is received (S1502). Authentication information, Requesting User Name, etc. in the command of the job creation request are appended to the authentication request concerned.

The print service 1104 outputs "the access-authority judgment request" of the setting which judges the existence of authority (access authority) which performs the above-mentioned print job to the ACL server 1112, when authentication is successful by the above-mentioned authentication processing (S1503) (S1511).

The information some the target for access as which it sets the applicable one to judgment ( printer 1101) , the information some the access authority made applicable to judgment (write authority) , the authentication information in the command of the job creation request, etc. are appended to the access-authority judgment request concerned.

The print service 1104 executes the above-mentioned command, when existence of the authority to perform the above-mentioned print job is checked (S1512) (S1541).

When not checked (S1512), the above-mentioned command is dismissed (you may be made to shift to S1521). The print service 1104 outputs "the policy information supply request" of the setting which supplies the information concerning the policy of the printer 1101 to the policy server 1113, when authentication fails in the above-mentioned authentication processing (S 1503) (S1521).

The information some the policy made applicable to information supply (policy concerning the command of the job creation request ) etc. is appended to the policy information supply request concerned.

The print service 1104 the policy information supply response receiving (S1522) document data are printed on the printing conditions (print job execution conditions) corresponding to the policy of the printer 1101 (the print job is performed) the above-mentioned command is corrected like (S1523), and the corrected command concerned is executed (S1541).

The case (S1531) of the setting whose print service 1104 carries out the access control on the other hand when authentication information is not inserted in the command (S1501) as long as it judges whether Requesting User Name in the command of the job creation request is listed during the list of Requesting User Name which the print service 1104 manages (S1532).

When the above-mentioned command is executed when listed (S1541), and not listed, the above-mentioned command is dismissed (you may be made to shift to S1521).

In addition, in the setting which does not carry out the access control (S1531), it becomes with the access free-lancer, and the above-mentioned command is executed (S1541).

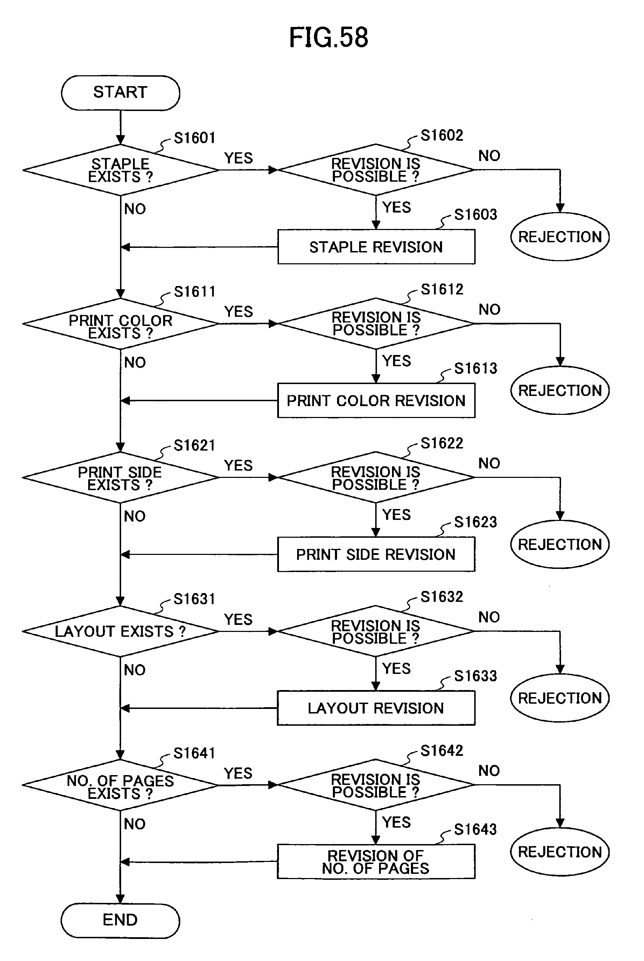

FIG. 58 is a flowchart for explaining the command correction processing which is performed by the print service 1104.

The step S 1523 of FIG. 57 is equivalent to the processing of FIG. 58. When the policy concerning the "stay pull" exists in the policy of the printer 1101 (S1601), in the correctable limit (S1602), the printing conditions concerning the "stay pull" in the command of the job creation request are amended so that it may agree of the policy (S1603).

The command is dismissed when it cannot correct (S1602). When the policy concerning the "printing color" exists in the policy of the printer 1101 (S1611), in the correctable limit (S 1612), the printing conditions concerning the "printing color" of the command of the job creation request are amended so that it may agree of the policy (S 1613).

The command is dismissed when it cannot correct (S1612). When the policy concerning the "printing side" exists in the policy of the printer 1101 (S1621), in the correctable limit (S1622), the printing conditions concerning the "printing side" of the command of the job creation request are amended so that it may agree of the policy (S1623).

The command is dismissed when it cannot correct (S1622). When the policy concerning the "layout" exists in the policy of the printer 1101 (S1631), in the correctable limit (S1632), the printing conditions concerning the "layout" of the command of the job creation request are amended so that it may agree of the policy (S1633).

The command is dismissed when it cannot correct (S1632). When the policy concerning "the number of the pages" exists in the policy of the printer 1101 (S1641), in the correctable limit (S 1642), the printing conditions concerning the "number of the pages" of the command of the job creation request are amended so that it may agree of the policy (S1643).

The command is dismissed when it cannot correct (S1642). In the foregoing section (3), the print service 1104 in the printer 1101 has explained the case where issue of the authentication request, the access-authority judgment request, or the policy information supply request etc. is performed, as part of command-execution processing.

FIG. 57 is a flowchart for explaining the equivalent processing.

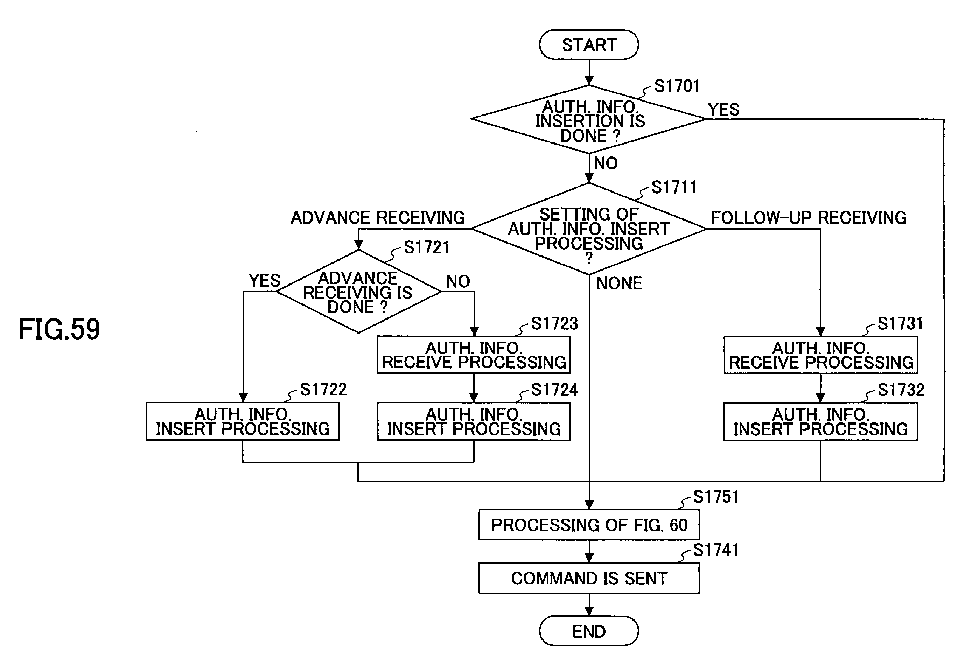

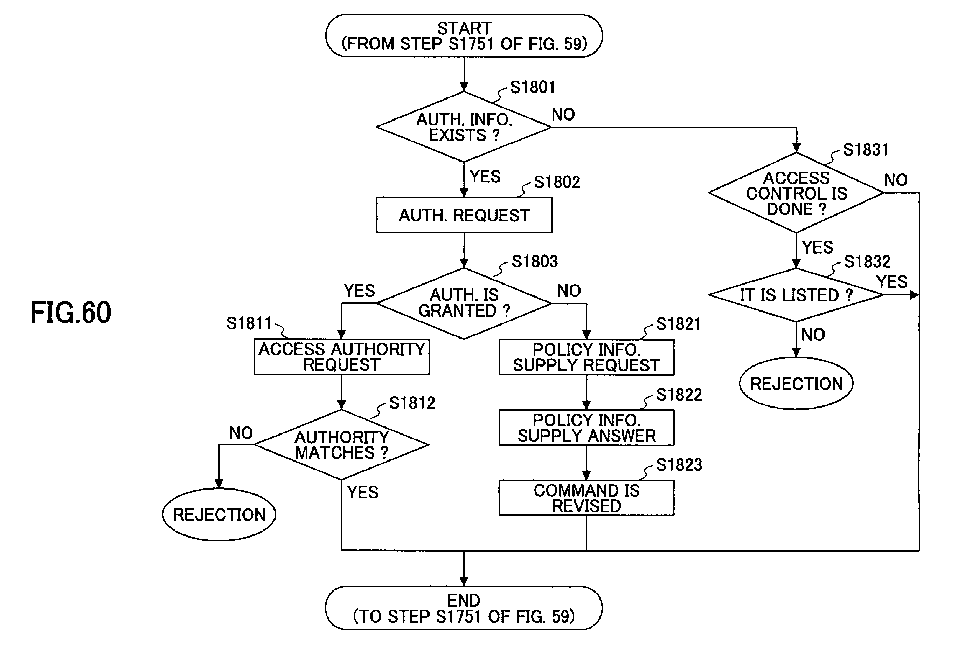

As the modification, the proxy service 2602 in the proxy server 1122 will explain the case where issue of the authentication request, the access-authority judgment request, or the policy information supply request etc. is performed, as part of command transfer processing. FIG. 59 and FIG. 60 are used for explanation.

FIG. 59 is a flowchart for explaining the command transfer processing which is performed by the proxy service 2602 in the proxy server 1122. FIG. 59 is equivalent to the modification of FIG. 44, and S1701, S1711, S1721, S1722, S1723, S1724, S1731, S1732, and S1741 are equivalent to S1201, S1211, S1221, S1222, S1223, S1224, S1231, S1232, and S1241, respectively.

However, the point that processing of S 1751 is performed before processing of S 1741 is difference with FIG. 44. That is, the command will be transmitted after going via processing of FIG. 60 (S1751) (S1741).

FIG. 60 is a flowchart for explaining the command transfer processing which is performed by the proxy service 2602 in the proxy server 1122. FIG. 60 is equivalent to the modification of FIG. 57, and S1801, S1802, S1803, S1811, S1812, S1821, S1822, S1823, S1831, and S1832 are equivalent to S1501, S1502, S1503, S1511, S1512, S1521, S1522, S1523, S1531, and S1532, respectively.

In addition, the point that processing equivalent to the "command execution" of S 1541 does not exist is difference with FIG. 57.

The processing which exists instead is "the command transfer" in the step S1741 of FIG. 59.

Processing from "START" to "END" of FIG. 60 is equivalent to the processing of the step S 1751 of FIG. 59.

In addition, even if the above description transposes the printer 1101 and the print service 1104 to the scanner 1102, the scanning service 1105, and the storage device 1103 and the storage service 1106, it is materialized.

That is, as the command to the print service 1104 outputted with PC1121 is executed by the print service 1104 concerned, the command to the scanning service 1105 outputted with PC 1121 is executed by the scanning service 1105 concerned, and the command to the storage service 1106 by which it was outputted with PC 1121 is executed by the storage service 1106 concerned.

In this case, the command of the job creation request of the setting which creates the print job is transposed to the command of the job creation request of the setting which creates the scanning job, the command of the file-generating request of the setting which creates the file, the command of the data read-out request of the setting which reads data, the command of the data write-in request of the setting which writes in data, etc.

The printer driver is transposed to the scanner driver or the storage driver.

Moreover, even if the above description transposes the print service 1104 in the printer 1101 in FIG. 26 to the print service 1104 in the print server 1107 of FIG. 27, it is materialized.

That is, as the command to the "print service 1104 in the printer 1101" outputted with PC1121 is executed by the print service 1104 concerned, the command to the "print service 1104 in the print server 1107" outputted with PC1121 is executed by the print service 1104 concerned.

In this case, the print server 1107 will create the print job and it will be performed by the printer 1101.

If explanation of this paragraph and explanation of the last paragraph are synthesized, what it can say that the same is said of the scanning service 1105 in the scanning server 1108 of FIG. 27 and the storage service 1106 in the storage server 1109 of FIG. 27 for is clear.

PC 1121 of FIG. 26 or FIG. 27 corresponds to the embodiment of the present invention (information-processing apparatus), and information processing performed with PC1121 of FIG. 26 or FIG. 27 corresponds to the embodiment of the present invention (the information-processing method).

PC1121 of FIG. 26 or FIG. 27 is the personal computer with which the computer program which makes the computer perform the information processing concerned was installed, for example.

The computer program concerned corresponds to the embodiment of the present invention (information-processing program), and CD-ROM on which the computer program concerned was recorded corresponds to the embodiment of the present invention (recording medium).

PC1121 of FIG. 26 or FIG. 27 is the personal computer with which the computer program concerned recorded on the CD-ROM concerned was installed, for example.

The proxy server 1122 of FIG. 26 or FIG. 27 corresponds to the embodiment of the present invention (information-processing apparatus), and information processing performed by the proxy server 1122 of FIG. 26 or FIG. 27 corresponds to the embodiment of the present invention (the information-processing method).

The proxy server 1122 of FIG. 26 or FIG. 27 is the personal computer with which the computer program which makes the computer perform the information processing concerned was installed, for example.

The computer program concerned corresponds to the embodiment of the present invention (information-processing program), and CD-ROM on which the computer program concerned was recorded corresponds to the embodiment of the present invention (recording medium).

The proxy server 1122 of FIG. 26 or FIG. 27 is the personal computer with which the computer program concerned recorded on the CD-ROM concerned was installed, for example.

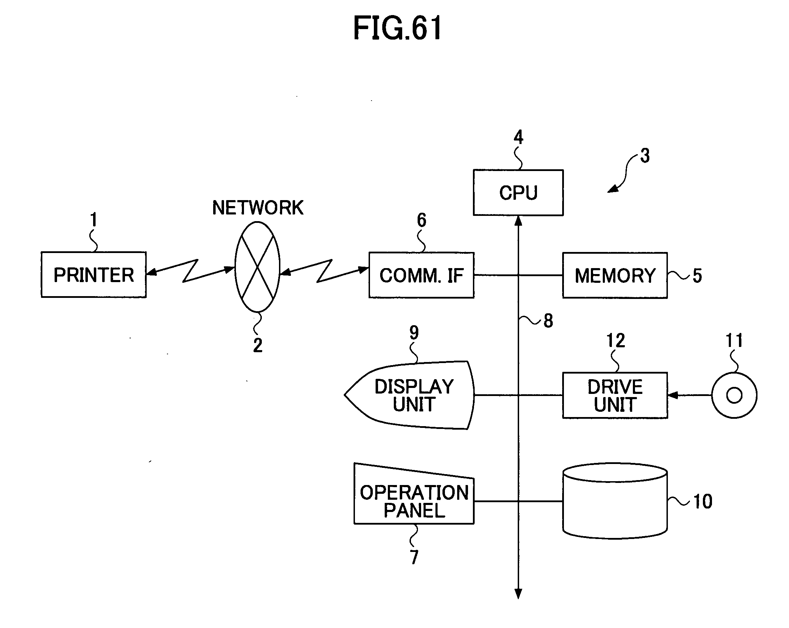

The image-processing apparatus of the form of this operation shows the example of application to the host computer (personal computer) 3 to which the printer 1 was connected indirectly or directly through the network 2 grade like the block diagram of the printing system shown in FIG. 61.

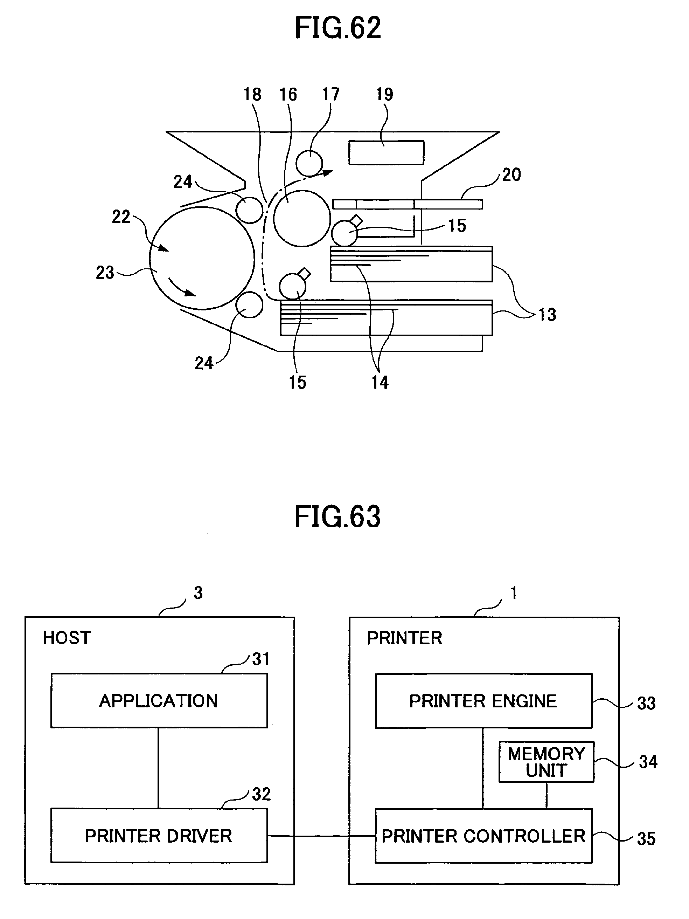

Although the printing method of the printer 1 may be arbitrary and the laser printer etc. is sufficient, with the form of this operation, the ink jet printer in which full color double-sided printing is possible as shown in FIG. 62 is used, for example.

The host computer 3 comprises CPU (Central Processing Unit) 4 which is the principal part of the computer and controls each part intensively, and the control panel 7, such as the keyboard which receives various kinds of operations, are connected to the CPU 4 by the memory 5 which is the storage medium which consists of various kinds of ROMs (read Only Memory) and the RAM (Random Access Memory), the predetermined communication interface 6 which communicates with the network 2, and the user through the bus 8.

Furthermore, it has the drive 12 which is the mechanism for reading computer software in the display 9 which is display, such as CRT (Cathode Ray Tube) and LCD (Liquid Crystal Display), HDD (Hard Disk Drive) 10 which is external storage, and the storage medium 11 which memorized the computer software which is the distributed program, and these display 9, HDD10, and the drive 12 are also connected to CPU 4 through the bus 8.

The memory 5 (ROM) of such a host computer 3 of composition the application program besides the control program the printer driver software is memorized.

In addition, as a storage medium 11, the media of the various methods, such as the various magnetic disks, such as various kinds of optical disks, such as CD and DVD, the various magnetooptic disks, and FD, and semiconductor memory, can be used.

Moreover, the program is downloaded from the network 2 and you may make it install in memory 5. in addition, the group which the program may operate on predetermined OS (Operating System), and OS may be made to take over execution of a part of various below-mentioned processings in that case, and constitutes predetermined application software, predetermined OS, etc. it may be contained as a part of program file.

FIG. 62 is the outline side elevation showing the sheet conveyance path to the Lord of the ink jet printer 1 in which full color double-sided printing is possible.

in the lower part side in the main part of the device, have free selection of the two steps of feed cassettes 13 , and the printer 1 used with the form of this operation should pass the conveyance path 18 which has the feed roller 15 which corresponds respectively the form 14 accommodated in these feed cassettes 13, and the common conveyance rollers 16 and 17 conveyance is made possible at the printing position which counters the ink head 19.

To the form 14 which it has form the ink (black ink : the pigment, color ink : dye), and has the ejection tray 20 top conveyed, the ink head 19 can be printed full color and both-way movement to the main scanning direction (the direction of the space table reverse side) of it is enabled.

In addition, the waste fluid tank 21 is formed in the lower part of the ejection tray 20. Moreover, the conveyance path 18 is made to adjoin and the form reversal unit 22 is formed.

This form reversal unit 22 is comprised by the guide-roller 24 grade which is prepared in the circumference of large the roller 23 for reversal and this roller 23 for reversal, and guides the form 14 on the 23rd page of this roller for reversal.

At the time of one side printing mode, the form 14 is conveyed through the conveyance path 18 in the ink head 19 position from the feed cassette 13, and the paper is delivered as it is on the ejection tray 20, receiving printing operation.

The circumference of this roller 23 for reversal by which pulls back the form 14 with which one side was printed by the ink head 19 to the roller 23 side for reversal by the inversion of conveyance roller 17 grade, and the rotation drive is counterclockwise carried out on the other hand at the time of double-sided printing mode passes back printing is performed by making it convey to the ink head 19 side again, and presenting printing, and as a result of being printed by front reverse side both sides, the paper is delivered on the ejection tray 20.

FIG. 63 shows the software block diagram of the printing system shown in FIG. 61.

As shown in FIG. 63, the software in the host computer 3 consists of the plurality of application programs 31 for various drawing data, and the printer driver 32, and the printer 1 consists of the printer engine 33 and the storage unit 34 which are mainly concerned with the ink head 19, and the printer controller 35.

In practice, OS module intervenes between the application program 31 and the printer driver 32.

Fundamental operation until printing is usually performed by the printer 1 from the printing directions on the application program 31 is explained.

If the user gives printing directions to the application program 31 which works on the host computer 3, the application program 31 will be outputted to the printer driver 32 for every pixel by using as these data the drawing data currently held there through the common procedure independent of the software.

The printer driver 32 changes the directions and drawing data which were inputted from the application program 31 into code form that he can understand the printer 1, and outputs this to the printer controller 35.

The printer controller 35 interprets the drawing data inputted from the printer driver 32 one by one, forms the bit map image according to data, and makes printing operation perform by outputting to the printer engine 33.

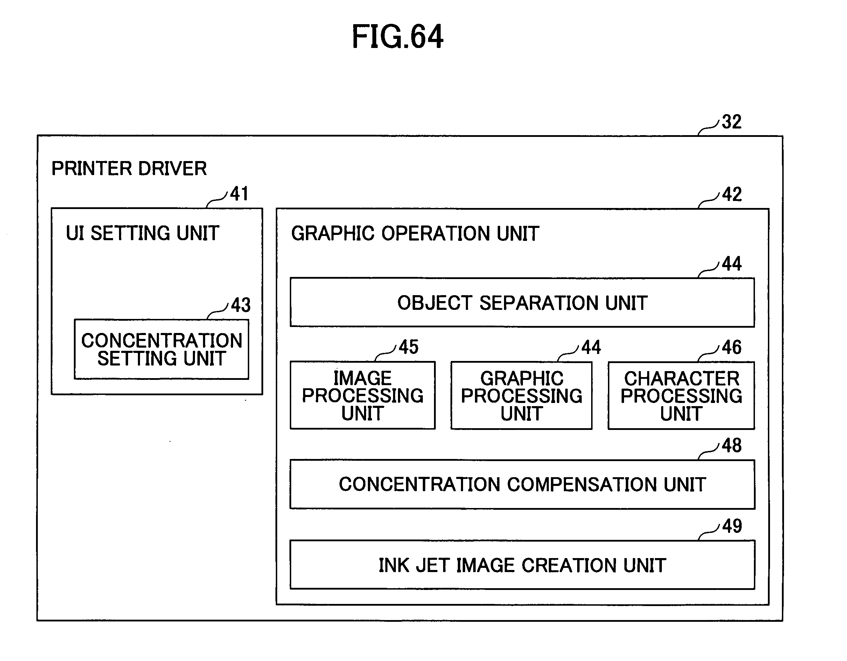

The functional block diagram of the printer driver 32 of the form of this operation which performs processing to which the printing concentration is reduced under such a premise according to the classification of target object according to the setting of the concentration reduction mode to the image data by which the printing request is carried out, and enables printing by the concentration reduction mode is shown in FIG. 64.

Roughly, this printer driver 32 consists of the UI (User Interface) setting unit 41 and the graphic operation unit 42. UI setting unit 41 is a block which has the concentration setting unit 43 for functioning as a user interface and performing the various setting about the concentration reduction mode mentioned later, and performs UI processing of the printer driver 32 concerned.

In the UI setting unit 41, it is possible to, specify various printing setting about printing at large. The graphic operation unit 42 is the block for creating the printing image of the printer driver 32 concerned, and, in the case of the form of this operation, has the object separation unit 44, the image-processing unit 45, the graphic operation unit 46, the character-manipulation unit 47, the concentration compensation unit 48, and the ink jet image creation unit 49.

The object separation unit 44 is the existing unit which performs processing which recognizes the object and is separated for every object, in order to advance processing for every object to the printing request from OS.

Each processing unit of the image-processing unit 45, the graphic operation unit 46, and the character-manipulation unit 47 is the existing unit which performs processing peculiar to the object, in order to create the printing image for every object.

The concentration compensation unit 48 is one of the characteristic units by the form of this operation, and is the unit which performs the target compensation processing for the concentration reduction set up for every object (processing of the printing material occupied to the printing pixel which changes the size of the ink drop comparatively) under the processing which rectifies the printing concentration to the sexual-desire news which it has for every object, and the conditions to which the concentration reduction mode is specifically set.

The ink jet image creation unit 49 is the unit which changes by rearranging data (final dot image pattern) in order of the list of jet for the ink jet from the ink head 19 of the printing image after compensation processing, and the data of the dot image pattern created by this ink jet image creation unit 49 become with the data transmitted to the printer 1 through the spooler of OS in it.

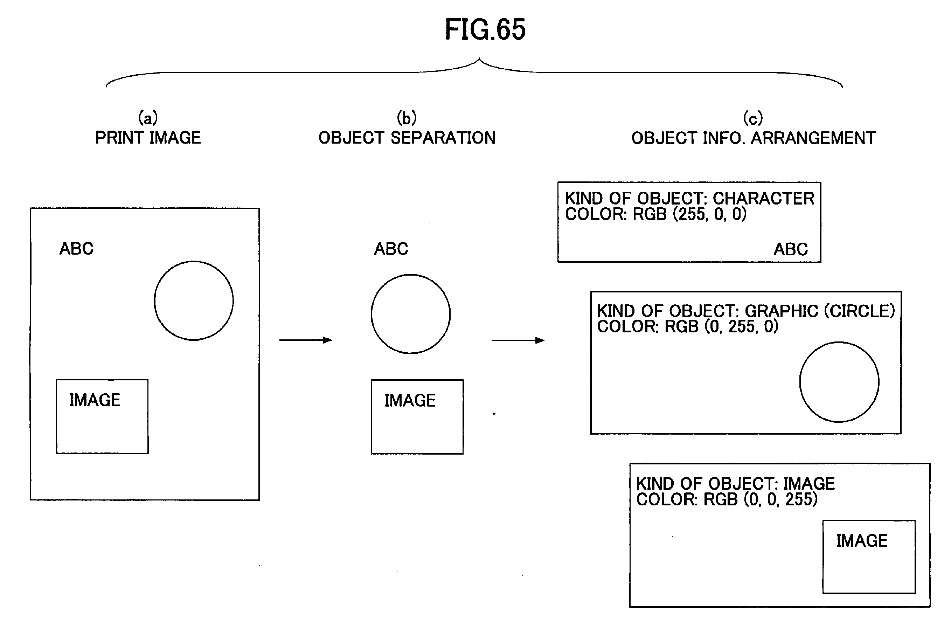

In addition, it may process processing it into data depending on the case, etc. Here, the outline of the structure of the object separation used with the form of this operation is explained with reference to FIG. 65.

First, the three kinds by the text which OS specifies, the image, and the graphic exist in the object, and it is made it for the three kinds of these objects with the form of this operation.

But the two kinds of objects with the line which is fill and the line drawing which smear away the inside of the defined region exist in the object by the graphic.

When OS specifies the N kinds (N is the plurality of integers) of objects, it is good to be aimed at the N kinds of objects concerned. First, the printer driver 32 which received the printing image as shown in FIG. 65 (a) from OS performs the text, image, and processing that recognizes the object of each graphic and is separated, as shown in FIG. 65 (b).

Subsequently, as shown in FIG. 65 (c), the text, image, and information arrangement of the object of each graphic are performed. Here, although the classification of object and the color information of RGB are illustrated as an example, what not only is illustrated but of course as an informational kind, the optimal information kind exists for every object.

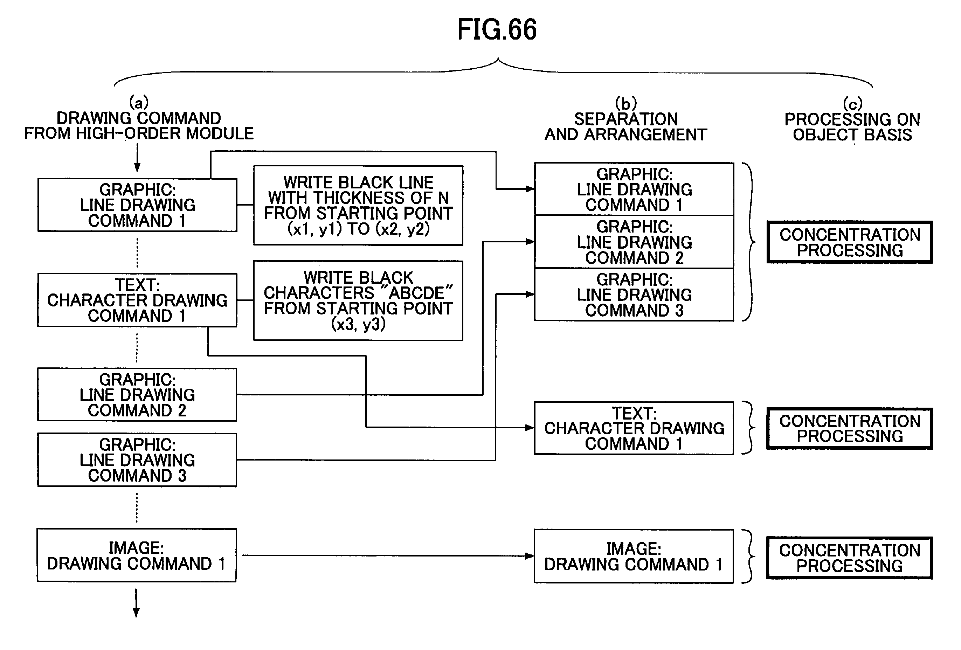

For example, if it is processing within the printer driver 32 like the form of this operation. The object drawing instruction 1 countless for describing the page from OS module of the high order, for example, "the graphic line drawing instruction" as shown in FIG. 66 (a). write the b3ac2 35ne of the thickness of N from the starting point (x1, y1) to (x2, y2) and the "text character drawing instruction 1" (as an example) write the character "the Japanese alphabet" from the starting point (x3, y3) by the Mincho typeface black , the "graphic line drawing instruction 2", the "graphic line drawing instruction 3", the "image line drawing instruction 1".

As the object is recognized in the object separation unit 44 and such a drawing instruction is shown in FIG. 66 (b), separation extraction is carried out for every object, and processing made to deposit respectively is performed.

The function to set up selectively the concentration reduction mode which reduces the printing concentration to the printer driver 32 according to the classification of object of the image data concerned to the image data by which the printing request is carried out.

The function which recognizes the object and is separated about the image data, and the function to perform processing to which the printing concentration is reduced according to the classification of target object according to the setting of the concentration reduction mode to the separated image data concerned.

It is made to perform the function which creates the dot image pattern based on the image data to which processing was performed, and is outputted to the printer. That is, although the printer driver 32 bears printing processing via OS module when there is the printing request from the application program 31, at the form of this operation in that case, recognition separation of the object is carried out in the object separation unit 44 about the image data in the page concerned, each object (the text, the image, graphic) is extracted, and the processing which changes the RGB color concentration as processing which reduces printing concentration in the concentration compensation unit 48 is carried out.

The changing color concentration as processing to which printing concentration is reduced the setting of the concentration reduction mode for every object what depends on how and is depended on the automatic-mode setting based on the fixed definition on the program may be based on setting operation from the user on the setting screen using UI setting unit 41.

About the object to which the concentration reduction mode is not set, printing concentration is considered as deferment with the original data.

In addition, the processing to which printing concentration is reduced means making the size of the jet drop made to breathe out from the ink head 19 change into the at least the plurality of stages, if it is the case of the size and the ink jet printer fundamentally, without changing the printing position (i.e., the printing data itself) also about which object (not accompanied by the reduction of the amount of information), and it completely differs from the image data skipping method as in Japanese Laid-Open Patent Application No. 07-314783.

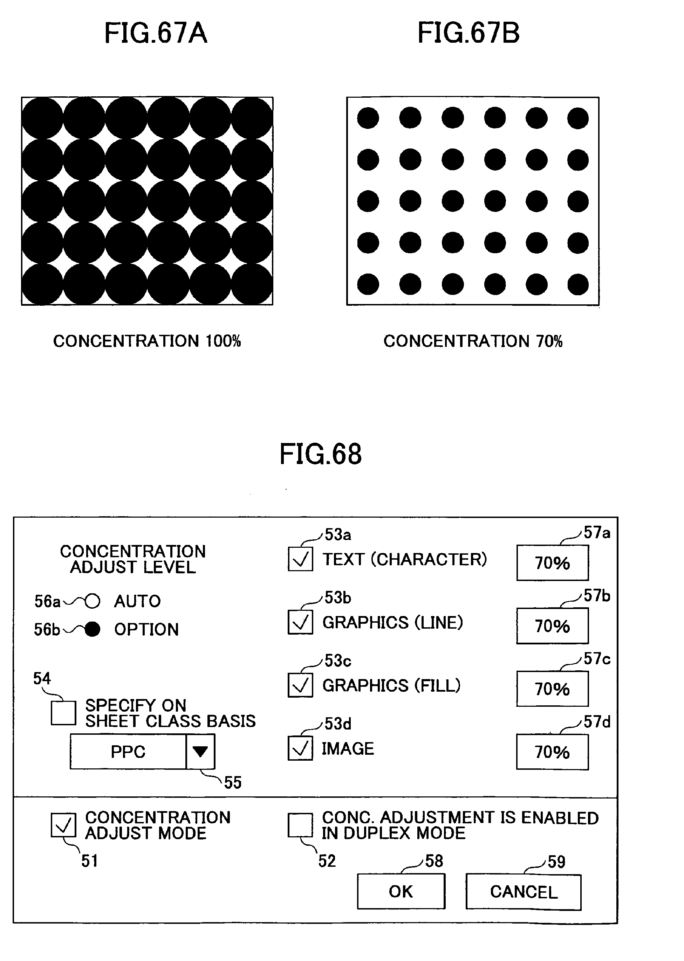

Namely, in the case of the ink jet printer 1 of this embodiment, supposes that the black dots shown in FIG. 67A have the size of the drop of the ink head 19.

Although it is made in the case of 100% of concentration which does not perform the processing of reduction of the printing concentration to print in the greatest dot size as shown in FIG. 67A.

Although there will be no change in the dot center position (printing position) as shown in FIG. 67B if it is the case where printing of 70% of concentration is made to perform as the processing of reduction of the printing concentration, on the whole, the concentration is reduced by making the dot size small.

That is, on the whole, the concentration is reduced by making the dot size small, maintaining the dot center interval (printing interval) at the fixed interval.

For example, the set-up concentration parameter (%) is made to reflect in the calculated value of concentration as an example of adjustment processing to which the printing concentration in this case is reduced, the RGB value can be changed with the concentration conversion parameter computed from calculated value, and the method of finally creating the bit map data for printing can be taken with the changed RGB value.

That is, as shown in FIG. 67A and FIG. 67B, the concentration parameter (%) adjusts the dot arrangement interval on the bit map, open the interval, so that concentration becomes thin, it will be made to get the interval blocked, so that concentration is deep, and if dot size is collectively taken into consideration, as a result, the dot center position will serve as bit map data which are not changed.

Processing to which such printing concentration is reduced is selectively performed according to the mode setting for every object, as shown in FIG. 66 (c).

By the way, although the setting of the concentration reduction mode of whether to reduce printing concentration for every object is arbitrary, in the case of the form of this operation, the various modes can be taken as a mode of the concentration reduction mode.

As one of them the text and the graphic and the image it is the mode of the concentration reduction mode to which printing concentration is reduced about the three kinds of all objects.

According to this mode, the ink can be saved sharply, avoiding quality-of-image degradation by the reduction of the amount of information.

Double-sided printed matter with little fault, such as back projection and the strike-through, can be obtained aiming at saving of the ink, if the concentration reduction mode of the mode concerned is especially set up at the time of the full color double-sided printing mode in the case of the ink jet printer 1 in which double-sided printing of the form of this operation is possible.

As another example of the mode of the concentration reduction mode the text and the graphic and the image it is the mode of the concentration reduction mode which printing concentration is reduced only about the two kinds or the one kind of object of the three kinds of objects, and considers concentration as deferment about the one kind or the two kinds of remaining objects.

Specifically, the following combinations are conceivable:

a. the concentration reduction mode in which only the object of the graphic and the image reduces printing concentration,

b. the concentration reduction mode in which only the object of the image and the text reduces printing concentration,

c. the concentration reduction mode in which only the object of the text and the graphic reduces the printing concentration,

d. the concentration reduction mode in which only the object of the text reduces printing concentration,

e. the concentration reduction mode in which only the graphic reduces printing concentration,

f. the concentration reduction mode in which only the image reduces printing concentration.

What is necessary is just to carry out the selection setting of whether it sets up in which mode suitably according to the printing document, the printing purpose, etc.

For example, it is the document of the image or the graphic subject, and when the text prints the document which is not important, the setting of the concentration reduction mode to which printing concentration is reduced only about the text is effective.

Or, when the watermark character prints the document (application document having the printing setting in the document) set as the printing setting, it is effective to change the concentration into the grade which does not become obstructive about existence of the unnecessary information in the document by considering as the setting of the concentration reduction mode to which printing concentration is reduced only about the text, and changing watermark character concentration (thinly).

Moreover, it is the character, the graphic, and the document that comprises by the objects of the image, the text is important, and in case the document (most office documents are generally considerable then, considered) which can be regarded as the graphic and the image playing the additional role is printed, the setting of the concentration reduction mode to which only the graphic and the image reduce printing concentration is effective.

In this case, although there are fill and the line in the object of the graphic when the object is subdivided further, the setting of the reduction of the favorite printing concentration according to the image can be performed by enabling the setting of the concentration reduction mode to which printing concentration is individually reduced also about these objects.

Namely, the solidly shaded image -like fill saving of the ink can be aimed at if the concentration reduction mode is set up about the object.

Furthermore, it is also effective to be the relation with other printing factors and to enable the setting of the concentration reduction mode about these objects.

For example, at the time of color image printing mode, it can utilize for printing of the office document drawn up, for example as a color document etc., and saving of the ink can be aimed at, without that the setting of the concentration reduction mode of the mode in which the printing concentration of all objects other than monochrome character in the text is reduced is possible, then spoiling the printing image so much.

But it is desirable in this case to consider as the outside of the object of the setting of reduction of the printing concentration about the colors which are not conspicuous from the first, such as the specific color, for example, yellow etc. According to this, the reduction of the visibility about the specific color can be prevented.

Moreover, at the time of monochrome printing mode, saving of the ink can be aimed at by utilizing for printing of the business document drawn up, for example as a monochrome document etc., without that the setting of the concentration reduction mode of the mode in which the printing concentration of the objects other than the text is reduced is possible, then spoiling the printing image so much.

Furthermore, the as a sheet 14 used for printing, although there are the various label papers, such as the regular paper, the pasteboard, paper only for ink jet, OHP, and CD-R, etc., it is also effective to enable it to set up the mode of the concentration reduction mode free according to the classification of the recording sheet.

For example, back the projection in the case both sides printing the time it is even if back the projection being anxious there is nothing the pasteboard etc. etc. In the case, the concentration the reduction mode not setting up usually the passage printing making although back the projection being anxious it is the regular paper etc. etc. In the case, concentration the reduction mode.

By the way, the setting of the concentration reduction mode of such the various modes will be explained.

The setting uses UI setting unit 41 in the printer driver 32, and while the user looks at the display 9 of the host computer 3, it is performed by operating the control panel 7.

That is, it is set up through the setting screen of the printer driver 32 as simplified and shown in FIG. 68 displayed on display 9 as a printing option.

The setting screen has the setting option 52 for specifying whether concentration adjustment is automatically confirmed at the time of the concentration adjustment mode setting option 51 for carrying out the selection setting of whether it is set as the concentration reduction mode at the time of printing, and both sides as a fundamental setting item option about the concentration reduction mode.

Thereby, fundamentally, if the check is put into the concentration adjustment mode setting option 51, it will be set as the concentration reduction mode, and similarly, if the check is put into the setting option 52, at the time of double-sided printing mode, it will be set up so that the concentration reduction mode may become effective automatically.

Moreover, in order to perform the more detailed setting, the setting options 53a-53d according to object are formed, and it can be set as the concentration reduction mode of arbitrary combination modes which were mentioned above by putting the check into the desired setting options 53a-53d.

For example, if the check is put into the concentration adjustment mode setting option 51 and the check is put into the setting options 53a and 53d, the concentration reduction mode will be set up about the object of the text and the image.

Furthermore, the selection option 55 for choosing the regular paper, the pasteboard, the paper only for ink jet, OHP, the CD-R label paper, etc. is formed as the setting option 54 for specifying whether the concentration reduction mode is set up for every sheet kind, and a kind of sheet, and the setting of the individual concentration reduction mode for every sheet kind is enabled.

Furthermore, on the occasion of the setting of such the concentration reduction mode, setting option 56b made into the mode in which setting option 56a which makes the ratio (concentration %) of the reduction of the printing concentration becomes the automatic concentration adjustment mode using the set point beforehand set up based on the experiment result etc. as the object for the printer 1 concerned, and the user do the input setting of the concentration % value uniquely is prepared alternatively.

In this case, if the check is put into setting option 56a, the grade of the concentration reduction in the concentration reduction mode will be automatically set up like 70% according to device specification.

If the check is put into setting option 56b, the grade of the concentration reduction in the concentration reduction mode will follow the user set point.

The setting of the concentration % value in this case is arbitrarily enabled for every object through the setting options 57a-57d.

In addition, the O.K. key for 58 deciding the contents of the setting and 59 are the cancellation keys for canceling the contents of the setting.

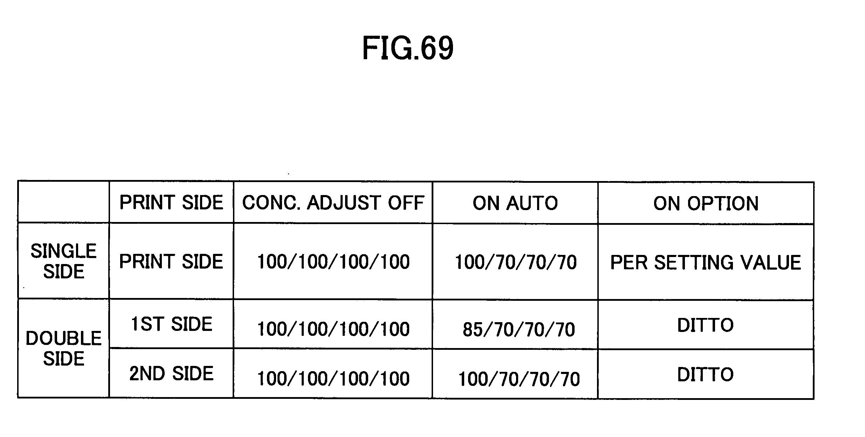

With reference to FIG. 69, the example of the contents of the setting of the concentration reduction mode will be explained.

Suppose that the concentration numeric value in FIG. 69 indicates the concentration value (%) for each of the objects of the text/the graphic (line)/the graphic (fill)/the image.

In the example of FIG. 69, the examples of the setting of the concentration values at the time of one side printing mode and at the time of double-sided printing mode are illustrated.

The setting is 100/100/100/100 when the concentration adjustment mode setting option 51 is not checked at the time of one side printing mode, and the concentration reduction processing is set in OFF and not performed.

When the concentration adjustment mode setting option 51 is checked (in the state of ON), the setting option 53a for the character text is not checked, and the setting option 56a for automatic concentration is checked (in the state of ON), the setting is 100/70/70/70. That is, in this example, the setting of the concentration reduction mode is set such that the concentration reduction processing of the text portion only is not performed.

When the setting option 56b for individual is checked (in the state of ON), the setting depends on the individual set value. But, as for the initial value, the value at the time of the automatic concentration ON is used.

Moreover, as for the 1 st page at the time of double-sided printing mode, all the setting options 53a-53d are checked and the setting option 56a for automatic concentration is checked (in the state of ON), the setting is 85/70/70/70.

As for the 2nd page, the setting option 56a for automatic concentration is checked (in the state of ON) like the time of one side printing, and the setting is 100/70/70/70.

When the setting option 56b for individual is checked (in the state of ON), the setting depends on the individual set value. Such contents of the mode setting are stored in the concentration setting unit 43 in the form of a table.

In addition, the concentration of the text in the 1st-page setting "85/70/70/70" is smaller than that in the 2nd-page setting "100/70/70/70". This is done in order to prevent the ink before dryness from adhering to the sheet somewhere in the sheet conveyance path and prevent the set-off and the strike-through.

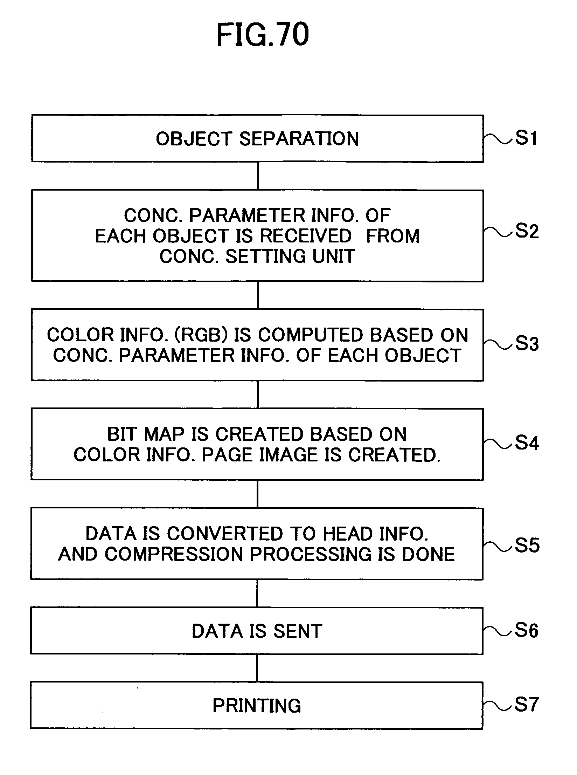

With reference to FIG. 70, the control processing control of the concentration reduction mode will be explained.

First, when the printing request from OS is received, in order to advance processing for every object in response to the printing request concerned, the objects (the text, the graphic, the image) are recognized by the object separation unit 44, so that the objects are separated for every object (step S1).

Next, the requested processing is performed for every object. The concentration compensation unit 48 acquires the concentration parameter information (concentration %) for every object from the concentration setting unit 43 as the information concerning the concentration reduction mode, and acquires the printing conditions (including the 1st page/the 2nd page), such as one side printing mode/double-sided printing mode (S2).

And the concentration compensation data processing is performed to the color information for every object using the acquired concentration parameter information, and the color information (RGB) is determined (S3). The concentration compensation data processing in this case is, for example, the simple % multiplication processing etc.

Next, the page image is created by creating and compounding the bit map data for every object using the thus determined color information (S4).

In this case, it is assumed the compensation of the concentration can be changed in the four stages and one pixel is represented by two bits. Namely, it will be changed into the bit map data which is defined with the four-stage concentrations such as: concentration 100%:11, concentration 85%:10, concentration 70%: 01, and concentration 0%(no printing):00.

The ink jet image creation unit 49 carries out the data conversion of the page image created in this way into the head information for the ink head 19, and performed the data compression processing if needed (S5).

And the converted data is transferred to the printer 1 (in many systems the transfer of the data is controlled by the OS side) (S6), and the printer 1 is caused to perform the printing (S7).

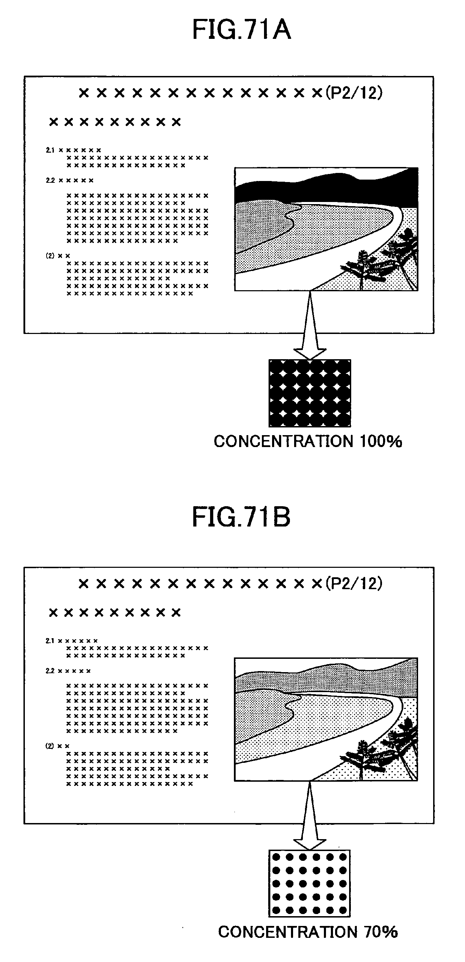

FIG. 71A and FIG. 71B show the example of the printout.

FIG. 71A shows the example of the printout with the concentration of 100% (refer to the example of the dot pattern on the right-hand side of the figure) based on the office document containing the objects of the text and the image. In this example, all text is black characters and the image is the full color photograph.

On the other hand, FIG. 71B shows the example of the printout with the concentration being reduced to 70% (referring to the example of the dot pattern on the right-hand side of the figure) in the concentration reduction mode, based on the office document containing the objects of the text and the image.

The printing concentration of the text portion remains unchanged at 100%. In this case, so that the printing concentration reduction on the whole in the state (state without the reduction of the amount of information) where there is no dot omission (ink consumption is saved) and the sense of incongruity is given to the user in contrast with the example of the printout of the image portion of FIG. 71A the output state does not change but is in the state where the contents may fully be grasped.

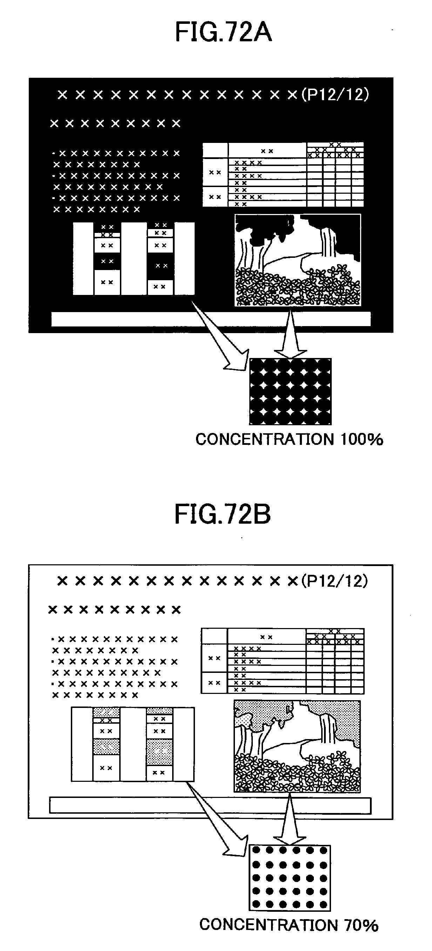

FIG. 72A and FIG. 72B show another example of the printout. FIG. 72A shows the example of the printout with the concentration of 100% (refer to the example of the dot pattern on the right-hand side of FIG. 72A) based on the office document in which the objects of the text, the image and the graphic coexist.

In this example, the text contains the white characters, the black characters, and the color characters, the image contains the full color photograph, and the graphic contains the color graph.

On the other hand, FIG. 72B shows the example of the printout with the concentration of 70% (refer to the example of the dot pattern on the bottom of FIG. 72B) in the case of the concentration reduction mode in which the concentration reduction to 70% is set for the objects of the image and the graphic.

The printing concentration of the text portion remains unchanged at 100%. In contrast with the example of the printout containing the image portion and the graphic portion of FIG. 72A, the reduction of the printing concentration in this case is carried out on the whole (the ink consumption is saved) and without dot omission (without the reduction of the amount of information). The sense of incongruity is given to the user the output state does not change but is in the state where the contents may fully be grasped.

The present invention is not limited to the above-described embodiments, and variations and modifications may be made without departing from the scope of the present invention.

Further, the present application is based on Japanese patent application No. 2003-413015, filed on December 11, 2003, Japanese patent application No. 2003-416453, filed on December 15, 2003, Japanese patent application No. 2004-015995, filed on Japanese 23, 2004, Japanese patent application No. 2004-054283, filed on February 27, 2004, and Japanese patent application No. 2004-347041, filed on November 30, 2004, the entire contents of which are hereby incorporated by reference.

**Claims**

1. An information-processing apparatus which functions as a client terminal for an image-forming apparatus which functions as a scanner, comprising:

   a display unit displaying a setting option screen for setting scanning conditions when requesting an image-forming apparatus to perform a scan processing;
   a selection unit performing automatic selection of an image-forming apparatus which is capable of performing the scan processing under the scanning conditions specified in the setting option screen; and
   a control unit causing the image-forming apparatus chosen by the automatic selection of the selection unit to perform the scan processing under the scanning conditions specified in the setting option screen.

2. An information-processing apparatus which functions as a client terminal for an image-forming apparatus which functions as a scanner, comprising:

   a display unit displaying a screen including a setting option for setting scanning conditions when requesting an image-forming apparatus to perform a scan processing, an input option for inputting an automatic selection for automatically selecting an image-forming apparatus capable of performing the scan processing,
   and a selection option for manually selecting the image-forming apparatus capable of performing the scan processing;
   a selection unit performing the automatic selection of the image-forming apparatus capable of performing the scan processing under the scanning conditions specified in the setting option; and
   a control unit causing the image-forming apparatus, chosen by one of the automatic selection and the manual selection, to perform the scan processing under the scanning conditions specified in the setting option.

3. An information-processing apparatus which functions as a client terminal for an image-forming apparatus which functions as a scanner, comprising:

   a display unit displaying a setting option screen for setting scanning conditions when requesting an image-forming apparatus to perform a scan processing;
   a scanner selection unit performing automatic selection of an image-forming apparatus capable of performing the scan processing under the scanning conditions specified in the setting option screen;
   a printer selection unit performing automatic selection of an image-forming apparatus capable of performing a print processing under printing conditions which are derived from the scanning conditions specified in the setting option screen;
   a scanner control unit causing the image-forming apparatus chosen by the automatic selection of the scanner selection unit to perform the scan processing under the scanning conditions specified in the setting option screen; and
   a printer control unit causing the image-forming apparatus chosen by the automatic selection of the printer selection unit to perform the print processing of image data produced by the scan processing under the printing conditions derived from the scanning conditions specified in the setting option screen.

4. An information-processing apparatus which functions as a client terminal for an image-forming apparatus which functions as a scanner, comprising:

   a display unit displaying a screen including a setting option for setting scanning conditions when requesting an image-forming apparatus to perform a scan processing, an input option for inputting an automatic selection for automatically selecting an image-forming apparatus capable of performing the scan processing, and a selection option for inputting a manual selection for manually selecting the image-forming apparatus capable of performing the scan processing;

a scanner selection unit performing the automatic selection of the image-forming apparatus capable of performing the scan processing under the scanning conditions specified in the setting option of the screen;

a printer selection unit performing automatic selection of an image-forming apparatus capable of performing a print processing under printing conditions which are derived from the scanning conditions specified in the setting option of the screen;

a scanner control unit causing the image-forming apparatus chosen by one of the automatic selection and the manual selection, to perform the scan processing under the scanning conditions specified in the setting option; and

a printer control unit causing the image-forming apparatus chosen by the automatic selection of the printer selection unit to perform the print processing of image data produced by the scan processing under the printing conditions derived from the scanning conditions specified in the setting option.

5. An information-processing apparatus which functions as a client terminal for an image-forming apparatus which functions as a scanner, comprising:

a display unit displaying a setting option screen for setting scanning conditions when requesting an image-forming apparatus to perform a scan processing;

a scanner selection unit performing automatic selection of the image-forming apparatus capable of performing the scan processing under the scanning conditions specified in the setting option screen;

a scanner control unit causing the image-forming apparatus, chosen by the automatic selection of the scanner selection unit, to perform the scan processing under the scanning conditions specified in the setting option screen; and

a storage control unit causing one of the image-forming apparatus and a storage device to perform a storing processing of image data produced by the scan processing.

6. An information-processing apparatus which functions as a client terminal for an image-forming apparatus which functions as a scanner, comprising:

a display unit displaying a screen including a setting option for setting scanning conditions when requesting an image-forming apparatus to perform a scan processing, an input option for inputting an automatic selection for automatically selecting an image-forming apparatus capable of performing the scan processing, and a selection option for manually selecting the image-forming apparatus capable of performing the scan processing;

a scanner selection unit performing the automatic selection of the image-forming apparatus capable of performing the scan processing under the scanning conditions specified in the setting option;

a scanner control unit causing the image-forming apparatus, chosen by the automatic selection, to perform the scan processing under the scanning conditions specified in the setting option; and

a storage control unit causing one of the image-forming apparatus and a storage device to perform a storing processing of image data produced by the scan processing.

7. The information-processing apparatus according to claim 1 wherein, when the image-forming apparatus which performs the scan processing is chosen by the automatic selection, a display screen indicating a result of the selection of the image-forming apparatus performing the scan processing is displayed.

8. The information-processing apparatus according to claim 1 wherein, when a plurality of candidates for the image-forming apparatus performing the scan processing are selected by the automatic selection, a manual selection screen for manually selecting one of the plurality of candidates for the image-forming apparatus performing the scan processing is displayed.

9. The information-processing apparatus according to claim 3 wherein, when the image-forming apparatus which performs the print processing is chosen by the automatic selection, a display screen indicating a result of the selection of the image-forming apparatus performing the print processing is displayed.

10. The information-processing apparatus according to claim 3 wherein, when a plurality of candidates for the image-forming apparatus performing the print processing are selected by the automatic selection, a manual selection screen for manually selecting one of the plurality of candidates for the image-forming apparatus performing the print processing is displayed.

11. The information-processing apparatus according to claim 3 wherein the display unit is provided to display an input option screen for inputting a request for performing the print processing of the image data produced by the scan processing.

12. The information-processing apparatus according to claim 5 wherein the display unit is provided to display an input option screen for inputting a request for performing the storing processing of the image data produced by the scan processing.

13. The information-processing apparatus according to claim 1 wherein the display unit is provided to display the setting option screen by using a scanning condition database which stores a correlation between the scanning conditions and the image-forming apparatus capable of performing the scan processing under the scanning conditions.

14. The information-processing apparatus according to claim 1 wherein the selection unit is provided to automatically select the image-forming apparatus by using a scanning condition database which stores a correlation between the scanning conditions and the image-forming apparatus capable of performing the scan processing under the scanning conditions.

15. The information-processing apparatus according to claim 3 wherein the scanner selection unit is provided to automatically select the image-forming apparatus by using a scanning condition database which stores a correlation between the scanning conditions and the image-forming apparatus capable of performing the scan processing under the scanning conditions.

16. The information-processing apparatus according to claim 3 wherein the printer selection unit is provided to automatically select the image-forming apparatus by using a printing condition database which stores a correlation between the printing conditions and the image-forming apparatus capable of performing the print processing under the printing conditions.

17. The information-processing apparatus according to claim 13 further comprising a scanning condition database creation unit creating the scanning condition database which stores the correlation between the scanning conditions and the image-forming apparatus capable of performing the scan processing under the scanning conditions, by using information related to the image-forming apparatus and information related to the scanning conditions.

18. The information-processing apparatus according to claim 16 further comprising a printing condition database creation unit creating the printing condition database which stores the correlation between the printing conditions and the image-forming apparatus capable of performing the print processing under the printing conditions, by using information related to the image-forming apparatus and information related to the printing conditions.

19. An information-processing method which is performed by an information-processing apparatus functioning as a client terminal for an image-forming apparatus functioning as a scanner, the information-processing method comprising the steps of:

displaying a setting option screen for setting scanning conditions when requesting an image-forming apparatus to perform a scan processing;
performing automatic selection of an image-forming apparatus which is capable of performing the scan processing under the scanning conditions specified in the setting option screen; and
causing the image-forming apparatus, chosen by the automatic selection, to perform the scan processing under the scanning conditions specified in the setting option screen.

20. An information-processing method which is performed by an information-processing apparatus functioning as a client terminal for an image-forming apparatus functioning as a scanner, the information-processing method comprising the steps of:

displaying a screen including a setting option for setting scanning conditions when requesting an image-forming apparatus to perform a scan processing, an input option for inputting an automatic selection for automatically selecting an image-forming apparatus capable of performing the scan processing, and a selection option for manually selecting the image-forming apparatus capable of performing the scan processing;
performing the automatic selection of the image-forming apparatus capable of performing the scan processing under the scanning conditions specified in the setting option; and
causing the image-forming apparatus, chosen by one of the automatic selection and the manual selection, to perform the scan processing under the scanning conditions specified in the setting option.

21. An information-processing method which is performed by an information-processing apparatus functioning as a client terminal for an image-forming apparatus functioning as a scanner, the information-processing method comprising the steps of:

displaying a setting option screen for setting scanning conditions when requesting an image-forming apparatus to perform a scan processing;

performing automatic selection of an image-forming apparatus capable of performing the scan processing under the scanning conditions specified in the setting option screen;

performing automatic selection of an image-forming apparatus capable of performing a print processing under printing conditions which are derived from the scanning conditions specified in the setting option screen;

causing the image-forming apparatus chosen by the automatic selection for performing the scan processing, to perform the scan processing under the scanning conditions specified in the setting option screen; and

causing the image-forming apparatus chosen by the automatic selection for performing the print processing, to perform the print processing of image data produced by the scan processing under the printing conditions derived from the scanning conditions specified in the setting option screen.

22. An information-processing method which is performed by an information-processing apparatus functioning as a client terminal for an image-forming apparatus functioning as a scanner, the information-processing method comprising the steps of:

displaying a screen including a setting option for setting scanning conditions when requesting an image-forming apparatus to perform a scan processing, an input option for inputting an automatic selection for automatically selecting an image-forming apparatus capable of performing the scan processing, and a selection option for inputting a manual selection for manually selecting the image-forming apparatus capable of performing the scan processing;

performing the automatic selection of the image-forming apparatus capable of performing the scan processing under the scanning conditions specified in the setting option of the screen;

performing automatic selection of an image-forming apparatus capable of performing a print processing under printing conditions which are derived from the scanning conditions specified in the setting option of the screen;

causing the image-forming apparatus chosen by one of the automatic selection and the manual selection, to perform the scan processing under the scanning conditions specified in the setting option; and

causing the image-forming apparatus chosen by the automatic selection for performing the print processing, to perform the print processing of image data produced by the scan processing under the printing conditions derived from the scanning conditions specified in the setting option.

23. An information-processing method which is performed by an information-processing apparatus functioning as a client terminal for an image-forming apparatus functioning as a scanner, the information-processing method comprising the steps of:

displaying a setting option screen for setting scanning conditions when requesting an image-forming apparatus to perform a scan processing;

performing automatic selection of the image-forming apparatus capable of performing the scan processing under the scanning conditions specified in the setting option screen;

causing the image-forming apparatus, chosen by the automatic selection for performing the scan processing, to perform the scan processing under the scanning conditions specified in the setting option screen; and

causing one of the image-forming apparatus and a storage device to perform a storing processing of image data produced by the scan processing.

24. An information-processing method which is performed by an information-processing apparatus functioning as a client terminal for an image-forming apparatus functioning as a scanner, the information-processing method comprising the steps of:

displaying a screen including a setting option for setting scanning conditions when requesting an image-forming apparatus to perform a scan processing, an input option for inputting an automatic selection for automatically selecting an image-forming apparatus capable of performing the scan processing, and a selection option for manually selecting the image-forming apparatus capable of performing the scan processing;

performing the automatic selection of the image-forming apparatus capable of performing the scan processing under the scanning conditions specified in the setting option;

causing the image-forming apparatus, chosen by the automatic selection, to perform the scan processing under the scanning conditions specified in the setting option; and

causing one of the image-forming apparatus and a storage device to perform a storing processing of image data produced by the scan processing.

**25.** A computer program product embodied therein for causing a computer to execute an information-processing method, the information-processing method comprising the steps of:

   displaying a setting option screen for setting scanning conditions when requesting an image-forming apparatus to perform a scan processing;
   performing automatic selection of an image-forming apparatus which is capable of performing the scan processing under the scanning conditions specified in the setting option screen; and
   causing the image-forming apparatus, chosen by the automatic selection, to perform the scan processing under the scanning conditions specified in the setting option screen.

**26.** A computer-readable recording medium embodied therein for causing a computer to execute an information-processing method, the information-processing method comprising the steps of:

   displaying a screen including a setting option for setting scanning conditions when requesting an image-forming apparatus to perform a scan processing, an input option for inputting an automatic selection for automatically selecting an image-forming apparatus capable of performing the scan processing, and a selection option for manually selecting the image-forming apparatus capable of performing the scan processing;
   performing the automatic selection of the image-forming apparatus capable of performing the scan processing under the scanning conditions specified in the setting option; and
   causing the image-forming apparatus, chosen by one of the automatic selection and the manual selection, to perform the scan processing under the scanning conditions specified in the setting option.

**27.** An information-processing apparatus which functions as a client for an image-forming apparatus, comprising:

   a command output unit outputting a command to one of the image-forming apparatus and a server for the image-forming apparatus; and
   an authentication information insertion unit inserting authentication information into the command.

**28.** An information-processing apparatus which functions as a proxy server of a client for an image-forming apparatus, the information-processing apparatus comprising:

   a command transfer unit transmitting a command, which is outputted to one of the image-forming apparatus and a server for the image-forming apparatus by the client for the image-forming apparatus, to one of the image-forming apparatus and the server for the image-forming apparatus; and
   an authentication information insertion unit inserting authentication information into the command.

**29.** An information-processing apparatus which functions as a proxy server of a client for an image-forming apparatus, the information-processing apparatus comprising:

   a command transfer unit transmitting a command, which is outputted to one of the image-forming apparatus and a server for the image-forming apparatus by the client for the image-forming apparatus, to one of the image-forming apparatus and the server for the image-forming apparatus; and
   an authentication information insertion unit inserting authentication information into the command,
   the command transfer unit being provided to transmit the command under a condition that authenticity is approved by an authentication processing based on the authentication information inserted in the command.

**30.** An information-processing apparatus which functions as a client for a storage device, the information-processing apparatus comprising:

   a command output unit outputting a command to one of the storage device and a server for the storage device; and
   an authentication information insertion unit inserting authentication information into the command.

**31.** An information-processing apparatus which functions as a proxy server of a client for a storage device, the information-processing apparatus comprising:

   a command transfer unit transmitting a command, which is outputted to one of the storage device and a server for the storage device by the client for the storage device, to one of the storage device and the server for the storage device; and
   an authentication information insertion unit inserting authentication information into the command.

32. An information-processing apparatus which functions as a proxy server of a client for a storage device, the information-processing apparatus comprising:

a command transfer unit transmitting a command, which is outputted to one of the storage device and a server for the storage device by the client for the storage device, to one of the storage device and the server for the storage device; and
an authentication information insertion unit inserting authentication information into the command,
the command transfer unit being provided to transmit the command under a condition that authenticity is approved by an authentication processing based on the authentication information inserted in the command.

33. The information-processing apparatus according to claim 29 wherein the authentication processing is performed by a server which is separate from the information-processing apparatus.

34. The information-processing apparatus according to claim 27 wherein the authentication information insertion unit is provided to insert the authentication information into the command using a tag.

35. The information-processing apparatus according to claim 29 wherein the authentication information is inserted in the command using a tag.

36. The information-processing apparatus according to claim 27 wherein the authentication information being inserted is one of authentication information acquired by a screen input, authentication information acquired by reading a storage medium, and authentication information acquired by a biometric authentication processing.

37. The information-processing apparatus according to claim 27 wherein the command is a command which is described by XML (extensible Markup Language).

38. The information-processing apparatus according to claim 27 wherein the command is a job creation command which requests creation of a job.

39. The information-processing apparatus according to claim 29 wherein the command is a job creation command which requests creation of a job, and the command transfer unit is provided to transmit the command under conditions that authenticity is approved by the authentication processing based on the authentication information inserted in the command, and that authority to perform the job is approved.

40. The information-processing apparatus according to claim 39 wherein information concerning the authority is managed by a server which is separate from the information-processing apparatus.

41. The information-processing apparatus according to claim 29 wherein the command is a job creation command which requests creation of a job, and the command transfer unit is provided to revise the command when the authenticity is not permitted by the authentication processing based on the authentication information inserted in the command, so that the revised command requests the job be performed under job execution conditions which conforms with a policy of the image-forming apparatus, and the revised command is transmitted.

42. The information-processing apparatus according to claim 41 wherein information concerning the policy is managed by a server which is separate from the information-processing apparatus.

43. An information-processing method which is performed by an information-processing apparatus which functions as a client for an image-forming apparatus, the information-processing method comprising the steps of:

outputting a command to one of the image-forming apparatus and a server for the image-forming apparatus; and
inserting authentication information into the command.

44. An information-processing method which is performed by an information-processing apparatus which functions as a proxy server of a client for an image-forming apparatus, the information-processing method comprising the steps of:

transmitting a command, which is outputted to one of the image-forming apparatus and a server for the image-forming apparatus by the client for the image-forming apparatus, to one of the image-forming apparatus and the server for the image-forming apparatus; and
inserting authentication information into the command.

45. An information-processing method which is performed by an information-processing apparatus which functions as a proxy server of a client for an image-forming apparatus, the information-processing method comprising the steps of:

transmitting a command, which is outputted to one of the image-forming apparatus and a server for the image-forming apparatus by the client for the image-forming apparatus, to one of the image-forming apparatus and the server for the image-forming apparatus; and
inserting authentication information into the command,
wherein the step of transmitting the command is provided to transmit the command under a condition that authenticity is approved by an authentication processing based on the authentication information inserted in the command.

46. An information-processing method which is performed by an information-processing apparatus which functions as a client for a storage device, the information-processing method comprising the steps of:

outputting a command to one of the storage device and a server for the storage device; and
inserting authentication information into the command.

47. An information-processing method which is performed by an information-processing apparatus which functions as a proxy server of a client for a storage device, the information-processing method comprising the steps of:

transmitting a command, which is outputted to one of the storage device and a server for the storage device by the client for the storage device, to one of the storage device and the server for the storage device; and
inserting authentication information into the command.

48. An information-processing method which is performed by an information-processing apparatus which functions as a proxy server of a client for a storage device, the information-processing method comprising the steps of:

transmitting a command, which is outputted to one of the storage device and a server for the storage device by the client for the storage device, to one of the storage device and the server for the storage device; and
inserting authentication information into the command,
wherein the step of transmitting the command is provided to transmit the command under a condition that authenticity is approved by an authentication processing based on the authentication information inserted in the command.

49. A computer program product embodied therein for causing a computer to execute an information-processing method, the information-processing method comprising the steps of:

outputting a command to one of an image-forming apparatus and a server for the image-forming apparatus; and
inserting authentication information into the command.

50. A computer-readable recording medium embodied therein for causing a computer to execute an information-processing method, the information-processing method comprising the steps of:

transmitting a command, which is outputted to one of an image-forming apparatus and a server for the image-forming apparatus by a client for the image-forming apparatus, to one of the image-forming apparatus and the server for the image-forming apparatus; and
inserting authentication information into the command.

51. A printer driver which is installed in a computer connected to a printer and causes the computer to execute an image-processing method associated with the printer, the image-processing method comprising the steps of:

setting selectively a concentration reduction mode in which a printing concentration is reduced according to a classification of an object of image data concerned, in response to a print request having the image data concerned;
recognizing the object of the image data and separating the image data from the object;
performing a concentration reduction processing to reduce the printing concentration of the separated image data according to a classification of a target object in response to the setting of the concentration reduction mode; and
creating a dot image pattern based on the processed image data in which the concentration reduction processing is performed, and outputting the dot pattern image to the printer.

52. The printer driver according to claim 51 wherein the concentration reduction processing in which the printing concentration is reduced is an processing which reduces a ratio of an area of a printing material to an area of a printing pixel according to a quantity of reduction of the printing concentration.

**53.** The printer driver according to claim 52 wherein concentration reduction processing in which the printing concentration is reduced is an processing which reduces a dot size, without changing a dot center position, according to the quantity of reduction of the printing concentration.

**54.** The printer driver according to claim 51 wherein the classification of the object of image data concerned is a classification of objects specified by an operating system.

**55.** The printer driver according to claim 51 wherein any of at least three classifications of text, graphic and image is used as the classification of the object of the image data.

**56.** The printer driver according to claim 55 wherein setting of reduction of the printing concentration for all the three classifications of text, graphic and image is possible in the concentration reduction mode.

**57.** The printer driver according to claim 56 wherein the reduction of the printing concentration is set during a double-sided printing mode of the printer.

**58.** The printer driver according to claim 55 wherein the reduction of the printing concentration for two of the three classifications of text, graphic and image is selectively set in the concentration reduction mode.

**59.** The printer driver according to claim 55 wherein the reduction of the printing concentration for one of the three classifications of text, graphic and image is selectively set in the concentration reduction mode.

**60.** The printer driver according to claim 55 wherein the graphic classification contains two classifications of objects including a line object and a fill object, and the reduction of the printing concentration for each of the line object and the fill object is individually set.

**61.** The printer driver according to claim 55 wherein, in the concentration reduction mode, the reduction of the printing concentration for all objects other than monochrome characters in a text object is selectively set during a color image printing mode of the printer.

**62.** The printer driver according to claim 61 wherein the reduction of the printing concentration except for a specific color of color characters in the text object is set.

**63.** The printer driver according to claim 56 wherein the reduction of the printing concentration except for a specific color in the image data is set.

**64.** The printer driver according to claim 55 wherein in the concentration reduction mode, the reduction of the printing concentration for all objects other than a text object is set during a monochrome printing mode of the printer.

**65.** The printer driver according to claim 51 wherein the concentration reduction mode is capable of being set selectively on an object basis when a setting operation of a user is received through a user interface.

**66.** The printer driver according to claim 65 wherein one of a manual setting and an automatic setting for setting a quantity of the reduction of the printing concentration is selectable in the concentration reduction mode.

**67.** The printer driver according to claim 65 wherein an automatic concentration adjustment for automatically adjusting the quantity of the reduction of the printing concentration is selectively set during a double-sided printing mode of the printer.

**68.** The printer driver according to claim 65 wherein the concentration reduction mode is enabled selectively according to a classification of a recording sheet.

**69.** The printer driver according to claim 51 wherein concentration reduction processing to reduce the printing concentration of the separated image data is performed by a concentration compensation data processing using concentration parameters which are provided to specify the quantity of the reduction of the printing concentration on an object basis.

**70.** A computer-readable recording medium embodied therein for causing a computer, connected to a printer, to execute an image-processing method associated with the printer, the image-processing method comprising the steps of:

setting selectively a concentration reduction mode in which a printing concentration is reduced according to a classification of an object of image data concerned, in response to a print request having the image data concerned; recognizing the object of the image data and separating the image data from the object; performing a concentration reduction processing to reduce the printing concentration of the separated image data according to a classification of a target object in response to the setting of the concentration reduction mode; and creating a dot image pattern based on the processed image data in which the concentration reduction processing is performed, and outputting the dot pattern image to the printer.

**71.** An image-processing apparatus which is used by connecting the image-processing apparatus to a printer, the image-processing apparatus comprising:

a first unit setting selectively a concentration reduction mode in which a printing concentration is reduced according to a classification of an object of image data concerned, in response to a print request having the image data concerned;

a second unit recognizing the object of the image data and separating the image data from the object;

a third unit performing a concentration reduction processing to reduce the printing concentration of the separated image data according to a classification of a target object in response to the setting of the concentration reduction mode; and

a fourth unit creating a dot image pattern based on the processed image data in which the concentration reduction processing is performed, and outputting the dot pattern image to the printer.

**72.** An image-processing method which is performed by an image-processing apparatus connected to a printer, the image-processing method comprising the steps of:

setting selectively a concentration reduction mode in which a printing concentration is reduced according to a classification of an object of image data concerned, in response to a print request having the image data concerned;

recognizing the object of the image data and separating the image data from the object;

performing a concentration reduction processing to reduce the printing concentration of the separated image data according to a classification of a target object in response to the setting of the concentration reduction mode;

creating a dot image pattern based on the processed image data in which the concentration reduction processing is performed; and

outputting the dot pattern image to the printer.

FIG.1

FIG.2

FIG.3

301

311 CPU
312 ROM
313 RAM
314 HDD

SYSTEM BUS 341

321 OPERATION PANEL UNIT
322 DISPLAY UNIT
323 COMMUNICATION IF
331 USB IF
332 SCSI IF
333 CENTRONICS IF

# FIG.4

EP 1 542 086 A2

# FIG.5

START

A — SCANNING CONDITION SETTING UI SCREEN DISPLAY REQUEST

B — SCANNER RETRIEVAL IS PERFORMED

C — SCANNING CONDITION BASE IS CREATED

A1 — SCANNING CONDITION SETTING UI SCREEN IS DISPLAYED

A2 — SCANNING CONDITION SETTING OPERATION IS INPUTTED

D — SCANNER SELECTION UI SCREEN DISPLAY REQUEST

D1 — SCANNER SELECTION UI SCREEN IS DISPLAYED

D2 — SCANNER SELECTION OPERATION IS INPUTTED

E — SCANNING START OPERATION

①

① — AUTOMATIC SELECTION OF SCANNER ? — BRANCH 1

NO → MANUAL SELECTION OF SCANNER ? — BRANCH 3

YES → SCANNING CONDITION IS SUPPORTED BY SELECTED SCANNER ? — BRANCH 4

NO

YES — F — SCANNING CONDITION IS STORED

G — S/CONDITION STORING IS NOTIFIED

H — SCANNING EXECUTION REQUEST

YES — F — SCANNING CONDITION IS STORED

G — S/CONDITION STORING IS NOTIFIED

H — SCANNING EXECUTION REQUEST

I — AUTOMATIC SELECTION OF SCANNER

PLURAL SCANNERS ? — BRANCH 2

NO — D3 — RESULT OF SCANNER SELECTION IS DISPLAYED

D4 — OK

YES — D1 — SCANNER SELECTION UI SCREEN IS DISPLAYED

D2 — SCANNER SELECTION OPERATION IS INPUTTED

②

② — PRINT PROCESSING IS SET UP ? — BRANCH 5

YES — J — PRINTING CONDITION IS CREATED

K — PRINTING CONDITION IS STORED

L — P/CONDITION STORING IS NOTIFIED

M — PRINTING EXECUTION REQUEST

N — PRINTER SELECTION REQUEST

PLURAL PRINTERS ? — BRANCH 6

NO — P3 — RESULT OF PRINTER SELECTION IS DISPLAYED

P4 — OK

YES — O — PRINTER CONFORMITY

P1 — PRINTER SELECTION UI SCREEN IS DISPLAYED

P2 — PRINTER SELECTION OPERATION IS INPUTTED

NO — α — SCAN PROCESSING IS PERFORMED

α — SCAN PROCESSING IS PERFORMED

β — PRINT PROCESSING IS PERFORMED

END

EP 1 542 086 A2

49

# FIG.6

```
                    ┌──────────────┐
                    │    START     │
                    └──────┬───────┘
                           │
                ┌──────────▼──────────┐
                │      ITEM OF        │  S101
           ┌────┤ SCANNING CONDITION  │────── NO ──────┐
           │    │     EXISTS ?        │                │
           │    └──────────┬──────────┘                │
           │               │ YES                 ┌─────▼─────┐
           │               │                     │    END    │
           │    ┌──────────▼──────────┐          └───────────┘
           │    │     IT CAN BE       │  S102
        NO ┤    │ DIVERTED TO PRINTING│
           │    │    CONDITION ?      │
           │    └──────────┬──────────┘
           │               │ YES
           │    ┌──────────▼──────────┐  S103
           │    │   IT IS DIVERTED TO │
           │    │  PRINTING CONDITION │
           │    └──────────┬──────────┘
           │               │
           └───────────────┘
```

# FIG.7

START

S201 — PRINTER CONFORMITY PROCESSING IS PERFORMED ? — NO →

YES ↓

S202 — SCANNER IS COMPOUND SYSTEM OR MULTI-FUNCTION SYSTEM ? — YES →

NO ↓

S203 — PRINTER OF SAME FLOOR AS SCANNER EXISTS ? — NO →

YES ↓

S204 — PRINTER OF SAME MAKER AS SCANNER EXISTS ? — NO →

YES ↓

S214 — PRINTERS OF SAME FLOOR AND SAME MAKER ARE INCLUDED IN PRINTER SELECTION UI SCREEN

S213 — PRINTERS OF SAME FLOOR ARE INCLUDED IN PRINTER SELECTION UI SCREEN

S212 — PRINTERS OF SAME MODEL AND SAME INSTALLATION POSITION ARE INCLUDED IN PRINTER SELECTION UI SCREEN

S211 — ALL PRINTERS ARE INCLUDED IN PRINTER SELECTION UI SCREEN

END

# FIG.8

START

S301
SCANNER RETRIEVAL REQUEST IS SENT

S302
SCANNER MATCHING RETRIEVAL CONDITION EXISTS ? — NO → END

YES

S303
PROFILE INFORMATION IS RECEIVED

S304
LOGIC SCANNER IS CREATED

S305
WHAT LEVEL OF RETRIEVAL ?

SIMPLE

DETAIL

S306
HARDWARE CONDITION REQUEST

S307
HARDWARE CONDITION IS RECEIVED ? — NO → S310 TIME-OUT ? — NO

YES

YES

S308
DATA FORMAT CONVERSION

S309
NEW LOGIC SCANNER IS ADDED

52

# FIG.9

START

S401
FIXED CONDITION EXISTS ? — NO → S402 DATA FORMAT CONVERSION → S403 ADDED TO SCANNING CONDITION BASE

YES

S411
LOGIC SCANNER EXISTS ? — NO → S412 SCANNER RETRIEVAL IS PERFORMED

YES

S421
LOGIC SCANNER TO BE ADDED EXISTS ? — NO → S422 DATA FORMAT CONVERSION → S423 ADDED TO SCANNING CONDITION BASE

YES

END

# FIG.10

START

S501

WHICH MODE OF REGISTRATION?

MODE 1 · SCANNER RETRIEVAL

MODE 2 · SCREEN INPUT

MODE 3 · DOWNLOAD

LOGIC SCANNER IS SELECTED — S502

LOGIC SCANNER IS CREATED — S503

LOGIC SCANNER IS CREATED — S504

LOGIC SCANNER IS REGISTERED — S505

END

EP 1 542 086 A2

# FIG.11

START

MODE 1 ← WHICH MODE OF REGISTRATION ? S601 → MODE 3

LOGIC SCANNER /CREATION

SCREEN INPUT/ CHANGE

MODE 2 | SCREEN INPUT/CREATION

S602
LOGIC SCANNER IS SELECTED

FIXED CONDITION IS CREATED — S605

FIXED CONDITION IS CHANGED — S606

S603
HARDWARE CONDITION IS SELECTED

S604
FIXED CONDITION IS CREATED

FIXED CONDITION IS REGISTERED — S607

END

EP 1 542 086 A2

## FIG.12A

(1) CONDITION NAME
(2) CONDITION
    CLASSIFICATION
(3) SUB-OBJECT FOR
    EVERY SETTING ITEM

⋮

(1) SETTING ITEM
(2) SCANNER LIST
    SUPPORTING SETTING ITEM

⋮

SCANNING CONDITION BASE OBJECT    SUB-OBJECT

## FIG.12B

(1) SCANNER NAME
(2) MODEL NAME
(3) NETWORK ADDRESS
(4) INSTALLATION POSITION
(5) DRIVER NAME
(6) CONNECTION STATE
(7) STORING ATTRIBUTE
(8) FINAL UPDATE TIME

⋮

(n) SUB-OBJECT FOR EVERY
    HARDWARE CONDITION

⋮

LOGIC SCANNER OBJECT

(1) CONDITION NAME
(2) CONDITION CLASSIFICATION
(3) SETTING ITEM LIST
    SUPPORTING CONDITION
(4) EXCLUSIVE CONDITION LIST

⋮

SUB-OBJECT

## FIG.12C

(1) CONDITION NAME
(2) CONDITION CLASSIFICATION
(3) SETTING ITEM LIST

⋮

FIXED CONDITION OBJECT

# FIG.13

EP 1 542 086 A2

**SCANNING CONDITION** (464)

( S/CONDITION OBJECT )

| (1) READ SIZE (2) LIST (3) | (1) READ DIRECTION (2) LIST (3) | (1) READ SIDE (2) LIST (3) |
|---|---|---|
| (1) A4 (2) SCANNER 0 ⟨SCANNER 1⟩ SCANNER 2 | (1) VERTICAL (2) SCANNER 0 ⟨SCANNER 1⟩ SCANNER 2 | (1) SINGLE (2) ⟨SCANNER 1⟩ SCANNER 2 |

(a1) (b1) (c1)

| (1) READ RESOLUTION (2) LIST (3) | (1) READING METHOD (2) LIST (3) |
|---|---|
| (1) 600dpi (2) SCANNER 0 ⟨SCANNER 1⟩ | (1) ADF (2) ⟨SCANNER 1⟩ SCANNER 2 |

(d1) (e1)

ADD
ADD
PROBLEM ?
NO PROBLEM

S/CONDITION SETTING UI

**SCANNING CONDITION BASE** (463)

( S/CONDITION BASE OBJECT )

| (1) READ SIZE (2) LIST (3) | (1) READ DIRECTION (2) LIST (3) | (1) READ SIDE (2) LIST (3) |
|---|---|---|
| (1) A4 (2) SCANNER 0 SCANNER 1 SCANNER 2 / (1) A3 (2) SCANNER 0 SCANNER 1 SCANNER 2 | (1) VERTICAL (2) SCANNER 0 SCANNER 1 SCANNER 2 | (1) SINGLE (2) SCANNER 0 SCANNER 1 SCANNER 2 |
| (1) B5 (2) SCANNER 1 SCANNER 2 / (1) B4 (2) SCANNER 0 SCANNER 1 SCANNER 2 | (1) LATERAL (2) SCANNER 0 SCANNER 1 SCANNER 2 | (1) DOUBLE (2) SCANNER 1 SCANNER 2 |

(a2) (b2) (c2)

| (1) READ RESOLUTION (2) LIST (3) | (1) READING METHOD (2) LIST (3) | (1) ENDORSER (2) LIST (3) |
|---|---|---|
| (1) 200dpi (2) SCANNER 0 SCANNER 1 SCANNER 2 / (1) 300dpi (2) SCANNER 0 SCANNER 1 SCANNER 2 | (1) DOC. GLASS (2) SCANNER 0 SCANNER 1 | (1) ON (2) SCANNER 0 SCANNER 1 SCANNER 2 |
| (1) 400dpi (2) SCANNER 0 SCANNER 1 SCANNER 2 / (1) 600dpi (2) SCANNER 0 SCANNER 1 | (1) ADF (2) SCANNER 1 SCANNER 2 | (1) OFF (2) SCANNER 0 SCANNER 1 SCANNER 2 |

(d2) (e2)

**(FIXED CONDITION OBJECT)** (462)

| FIXED CONDITION 0 | FIXED CONDITION 1 | FIXED CONDITION 2 |
|---|---|---|
| (1) READ SIZE (2) LIST (3) A4, A3, B4 | (1) READ DIRECTION (2) LIST (3) VERTICAL, LATERAL | (1) READ RESOLUTION (2) LIST (3) 300dpi, 600dpi |

**(LOGIC SCANNER OBJECT)** (461)

**LOGIC SCANNER 0**

| (1) SCANNER 0 (4) 4F WINDOW (7) | (2) MODEL A (5) DRIVER 0 | (3) ADDRESS 100 (6) ONLINE |
|---|---|---|
| (1) READ SIZE (2) LIST (3) ⟨A4⟩ A3, B4 | (1) READ DIRECTION (2) LIST (3) ⟨VERT.⟩ LATE. | (1) READ SIDE (2) LIST (3) SINGLE |
| (1) READ RESO. (2) LIST (3) 200dpi,300dpi, 400dpi ⟨600dpi⟩ | (1) READ. METHOD (2) LIST (3) DOC. GLASS | (1) ENDORSER (2) LIST (3) ON, OFF |

DETAIL → **SCANNER 0** (101)

MODEL A
ADDRESS 100
4F, WINDOW SIDE
A4, B3, B4
VERTICAL, LATERAL
SINGLE
200dpi, 300dpi, 400dpi, 600dpi
DOCUMENT GLASS
ON, OFF

**LOGIC SCANNER 1**

| (1) SCANNER 1 (4) 5F CENTER (7) | (2) MODEL B (5) DRIVER 1 | (3) ADDRESS 101 (6) ONLINE |
|---|---|---|
| (1) READ SIZE (2) LIST (3) ⟨A4⟩ A3, B5, B4 | (1) READ DIRECTION (2) LIST (3) ⟨VERT.⟩ LATE. | (1) READ SIDE (2) LIST (3) SINGLE ⟨DOUBLE⟩ |
| (1) READ RESO. (2) LIST (3) 200dpi,300dpi, 400dpi ⟨600dpi⟩ | (1) READ. METHOD (2) LIST (3) DOC. GLASS ⟨ADF⟩ | (1) ENDORSER (2) LIST (3) ON, OFF |

DETAIL → **SCANNER 1** (101)

MODEL B
ADDRESS 101
5F, CENTER PASSAGE
A4, A3, B5, B4
VERTICAL, LATERAL
SINGLE, DOUBLE
200dpi, 300dpi, 400dpi, 600dpi
DOCUMENT GLASS, ADF
ON, OFF

**LOGIC SCANNER 2**

| (1) SCANNER 2 (4) 3F ACCOUNTS (7) | (2) MODEL C (5) DRIVER 2 | (3) ADDRESS 102 (6) ONLINE |
|---|---|---|
| (1) READ SIZE (2) LIST (3) ⟨A4⟩ A3, B5, B4 | (1) READ DIRECTION (2) LIST (3) ⟨VERT.⟩ LATE. | (1) READ SIDE (2) LIST (3) SINGLE ⟨DOUBLE⟩ |
| (1) READ RESO. (2) LIST (3) 200dpi,300dpi, 400dpi | (1) READ. METHOD (2) LIST (3) ⟨ADF⟩ | (1) ENDORSER (2) LIST (3) ON, OFF |

DETAIL → **SCANNER 2** (101)

MODEL C
ADDRESS 102
3F, ACCOUNTS DEPT.
A4, B3, B4, B5
VERTICAL, LATERAL
SINGLE
200dpi, 300dpi, 400dpi
ADF
ON, OFF

# FIG.14

**S/CONDITION OBJECT**

**SCANNING CONDITION** ~464

| (1) READ SIZE (2) LIST (3) | (1) READ DIRECTION (2) LIST (3) | (1) READ RESOLUTION (2) LIST (3) |
|---|---|---|
| (1) A4 (2) SCANNER SCANNER SCANNER | (1) VERTICAL (2) SCANNER SCANNER | (1) 600dpi (2) SCANNER SCANNER |

a1  b1  c1

**S/CONDITION SETTING UI**

**S/CONDITION BASE OBJECT**

**SCANNING CONDITION BASE** ~463

| (1) READ SIZE (2) LIST (3) ~a2 | (1) READ DIRECTION (2) LIST (3) ~b2 | (1) READ RESOLUTION (2) LIST (3) |
|---|---|---|
| (1) A4 (2) SCANNER 0 SCANNER 1 SCANNER 2 | (1) VERTICAL (2) SCANNER 0 SCANNER 1 SCANNER 2 | (1) 300dpi (2) SCANNER 0 SCANNER 1 SCANNER 2 |
| (1) A3 (2) SCANNER 0 SCANNER 1 SCANNER 2 | (1) LATERAL (2) SCANNER 0 SCANNER 1 SCANNER 2 | (1) 600dpi (2) SCANNER 0 SCANNER 1 SCANNER 2 |
| (1) B4 (2) SCANNER 0 SCANNER 1 SCANNER 2 | | |

c2

**(FIXED CONDITION OBJECT)** ~462

| FIXED CONDITION 0 | FIXED CONDITION 1 | FIXED CONDITION 2 |
|---|---|---|
| (1) READ SIZE (2) LIST (3) A4, A3, B4 | (1) READ DIRECTION (2) LIST (3) VERTICAL, LATERAL | (1) READ RESOLUTION (2) LIST (3) 300dpi, 600dpi |

**(LOGIC SCANNER OBJECT)** ~461

**LOGIC SCANNER 0**

| (1) SCANNER 0 | (2) MODEL A | (3) ADDRESS 100 |
|---|---|---|
| (4) 4F WINDOW | (5) DRIVER 0 | (6) ONLINE |

**LOGIC SCANNER 1**

| (1) SCANNER 1 | (2) MODEL B | (3) ADDRESS 101 |
|---|---|---|
| (4) 5F CENTER | (5) DRIVER 1 | (6) ONLINE |

**LOGIC SCANNER 2**

| (1) SCANNER 2 | (2) MODEL C | (3) ADDRESS 102 |
|---|---|---|
| (4) 3F ACCOUNTS | (5) DRIVER 2 | (6) ONLINE |

ADD
ADD

**SCANNER 0** ~101

SIMPLE

MODEL A
ADDRESS 100
4F, WINDOW SIDE
A4, B3, B4
VERTICAL, LATERAL
SINGLE
200dpi, 300dpi, 400dpi, 600dpi
DOCUMENT GLASS
ON, OFF

**SCANNER 1** ~101

SIMPLE

MODEL B
ADDRESS 101
5F, CENTER PASSAGE
A4, A3, B5, B4
VERTICAL, LATERAL
SINGLE, DOUBLE
200dpi, 300dpi, 400dpi, 600dpi
DOCUMENT GLASS, ADF
ON, OFF

**SCANNER 2** ~101

SIMPLE

MODEL C
ADDRESS 102
3F, ACCOUNTS DEPT.
A4, B3, B4, B5
VERTICAL, LATERAL
SINGLE
200dpi, 300dpi, 400dpi
ADF
ON, OFF

EP 1 542 086 A2

58

## FIG.15A

```
(1) CONDITION NAME
(2) CONDITION
    CLASSIFICATION
(3) SUB-OBJECT FOR
    EVERY SETTING ITEM
        ⋮
```

```
(1) SETTING ITEM
(2) PRINTER LIST
    SUPPORTING SETTING ITEM
        ⋮
```

PRINTING CONDITION BASE OBJECT          SUB-OBJECT

## FIG.15B

```
(1) PRINTER NAME
(2) MODEL NAME
(3) NETWORK ADDRESS
(4) INSTALLATION POSITION
(5) DRIVER NAME
(6) CONNECTION STATE
(7) STORING ATTRIBUTE
(8) FINAL UPDATE TIME
        ⋮
(n) SUB-OBJECT FOR EVERY
    HARDWARE CONDITION
        ⋮
```

```
(1) CONDITION NAME
(2) CONDITION CLASSIFICATION
(3) SETTING ITEM LIST
    SUPPORTING CONDITION
(4) EXCLUSIVE CONDITION LIST
        ⋮
```

LOGIC PRINTER OBJECT          SUB-OBJECT

## FIG.15C

```
(1) CONDITION NAME
(2) CONDITION CLASSIFICATION
(3) SETTING ITEM LIST
        ⋮
```

FIXED CONDITION OBJECT

# FIG.16

EP 1 542 086 A2

**~465**

**PRINTING CONDITION**

| (1) PRINT SIZE | (1) PRINT DIRECTION | (1) PRINT SIDE |
|---|---|---|
| (2) LIST | (2) LIST | (2) LIST |
| (3) | (3) | (3) |

| (1) A4 | (1) VERTICAL | (1) DOUBLE |
|---|---|---|
| (2) PRINTER 0 | (2) PRINTER 0 | (2) PRINTER 1 |
| PRINTER 1 | PRINTER 1 | PRINTER 2 |
| PRINTER 2 | PRINTER 2 | |

~a1  ~b1  ~c1

| (1) PRINT RESOLUTION |
|---|
| (2) LIST |
| (3) |

| (1) 600dpi |
|---|
| (2) PRINTER 0 |
| PRINTER 1 |

~d1

( P/CONDITION OBJECT )

**(FIXED CONDITION OBJECT)** **~472**

| FIXED CONDITION 0 | FIXED CONDITION 1 | FIXED CONDITION 2 |
|---|---|---|
| (1) PRINT SIZE | (1) PRINT DIRECTION | (1) PRINT RESOLUTION |
| (2) LIST | (2) LIST | (2) LIST |
| (3) A4, A3, B4 | (3) VERTICAL, LATERAL | (3) 300dpi, 600dpi |

**(LOGIC PRINTER OBJECT)** **~471**

**LOGIC PRINTER 0**

| (1) PRINTER 0 | (2) MODEL A | (3) ADDRESS 100 |
|---|---|---|
| (4) 4F WINDOW | (5) DRIVER 0 | (6) ONLINE |
| (7) | | |

| (1) PRINT SIZE | (1) PRINT DIRECTION | (1) PRINT SIDE |
|---|---|---|
| (2) LIST | (2) LIST | (2) LIST |
| (3) A4, A3, B4 | (3) VERT, LATE. | (3) SINGLE |

| (1) PRINT RESO. | (1) PUNCH | (1) STAPLE |
|---|---|---|
| (2) LIST | (2) LIST | (2) LIST |
| (3) 200dpi,300dpi, 400dp,600dpi | (3) LEFT SINGLE | (3) LEFT, TOP |

**PRINTER 0** **~201**

MODEL A
ADDRESS 100
4F, WINDOW SIDE
A4, B3, B4
VERTICAL, LATERAL
SINGLE
200dpi, 300dpi, 400dpi, 600dpi
LEFT SINGLE
LEFT, TOP

DETAIL

ADD

ADD

PROBLEM ?

NO PROBLEM

S/CONDITION → P/CONDITION

**~473**

**PRINTING CONDITION BASE**

| (1) PRINT SIZE | | (1) PRINT DIRECTION | (1) PRINT SIDE |
|---|---|---|---|
| (2) LIST | | (2) LIST | (2) LIST |
| (3) ~a2 | | (3) ~b2 | (3) |

| (1) A4 | (1) A3 | (1) VERTICAL | (1) SINGLE |
|---|---|---|---|
| (2) PRINTER 0 | (2) PRINTER 0 | (2) PRINTER 0 | (2) PRINTER 0 |
| PRINTER 1 | PRINTER 1 | PRINTER 1 | PRINTER 1 |
| PRINTER 2 | PRINTER 2 | PRINTER 2 | PRINTER 2 |

| (1) B5 | (1) B4 | (1) LATERAL | (1) DOUBLE |
|---|---|---|---|
| (2) PRINTER 1 | (2) PRINTER 0 | (2) PRINTER 0 | (2) PRINTER 1 |
| PRINTER 2 | PRINTER 2 | PRINTER 1 | PRINTER 2 |
| | PRINTER 2 | PRINTER 2 | |

~c2

| (1) PRINT RESOLUTION | | (1) PUNCH | (1) STAPLE |
|---|---|---|---|
| (2) LIST | | (2) LIST | (2) LIST |
| (3) | | (3) | (3) |

| (1) 200dpi | (1) 300dpi | (1) LEFT, SINGLE | (1) LEFT |
|---|---|---|---|
| (2) PRINTER 0 | (2) PRINTER 0 | (2) PRINTER 0 | (2) PRINTER 0 |
| PRINTER 1 | PRINTER 1 | PRINTER 1 | PRINTER 1 |
| PRINTER 2 | PRINTER 2 | | PRINTER 2 |

| (1) 400dpi | (1) 600dpi | (1) LEFT, DOUBLE | (1) TOP |
|---|---|---|---|
| (2) PRINTER 0 | (2) PRINTER 0 | (2) PRINTER 1 | (2) PRINTER 0 |
| PRINTER 1 | PRINTER 1 | PRINTER 2 | PRINTER 1 |
| PRINTER 2 | | | PRINTER 2 |

~d2

( P/CONDITION BASE OBJECT )

**LOGIC PRINTER 1**

| (1) PRINTER 1 | (2) MODEL B | (3) ADDRESS 101 |
|---|---|---|
| (4) 5F CENTER | (5) DRIVER 1 | (6) ONLINE |
| (7) | | |

| (1) PRINT SIZE | (1) PRINT DIRECTION | (1) PRINT SIDE |
|---|---|---|
| (2) LIST | (2) LIST | (2) LIST |
| (3) A4, A3, B5, B4 | (3) VERT, LATE. | (3) SINGLE, DOUBLE |

| (1) PRINT RESO. | (1) PUNCH | (1) STAPLE |
|---|---|---|
| (2) LIST | (2) LIST | (2) LIST |
| (3) 200dpi,300dpi, 400dp,600dpi | (3) LEFT SINGLE LEFT DOUBLE | (3) LEFT, TOP |

**PRINTER 1** **~201**

MODEL B
ADDRESS 101
5F, CENTER PASSAGE
A4, A3, B5, B4
VERTICAL, LATERAL
SINGLE, DOUBLE
200dpi, 300dpi, 400dpi, 600dpi
LEFT SINGLE, LEFT DOUBLE
LEFT, TOP

DETAIL

**LOGIC PRINTER 2**

| (1) PRINTER 2 | (2) MODEL C | (3) ADDRESS 102 |
|---|---|---|
| (4) 3F ACCOUNTS | (5) DRIVER 2 | (6) ONLINE |
| (7) | | |

| (1) PRINT SIZE | (1) PRINT DIRECTION | (1) PRINT SIDE |
|---|---|---|
| (2) LIST | (2) LIST | (2) LIST |
| (3) A4, A3, B5, B4 | (3) VERT, LATE. | (3) SINGLE, DOUBLE |

| (1) PRINT RESO. | (1) PUNCH | (1) STAPLE |
|---|---|---|
| (2) LIST | (2) LIST | (2) LIST |
| (3) 200dpi,300dpi, 400dpi | (3) LEFT DOUBLE | (3) LEFT, TOP |

**PRINTER 2** **~201**

MODEL C
ADDRESS 102
3F, ACCOUNTS DEPT.
A4, B3, B4, B5
VERTICAL, LATERAL
SINGLE, DOUBLE
200dpi, 300dpi, 400dpi
LEFT DOUBLE
LEFT, TOP

DETAIL

## FIG.17

# FIG.18

**SCANNING CONDITION** — 464

- READ SIZE
  - (1) READ SIZE
  - (2) LIST
  - (3)
    - (1) A4
    - (2) SCANNER 0
      - SCANNER 1
      - SCANNER 2

- READ DIRECTION
  - (1) READ DIRECTION
  - (2) LIST
  - (3)
    - (1) VERTICAL
    - (2) SCANNER 0
      - SCANNER 1
      - SCANNER 2

- READ SIDE
  - (1) READ SIDE
  - (2) LIST
  - (3)
    - (1) SINGLE
    - (2) SCANNER 1
      - SCANNER 2

- READ RESOLUTION
  - (1) READ RESOLUTION
  - (2) LIST
  - (3)
    - (1) 600dpi
    - (2) SCANNER 0
      - SCANNER 1

- READING METHOD
  - (1) READING METHOD
  - (2) LIST
  - (3)
    - (1) ADF
    - (2) SCANNER 1
      - SCANNER 2

**PRINTING CONDITION** — 465

- PRINT SIZE
  - (1) PRINT SIZE
  - (2) LIST
  - (3)
    - (1) A4
    - (2)

- PRINT DIRECTION
  - (1) PRINT DIRECTION
  - (2) LIST
  - (3)
    - (1) VERTICAL
    - (2)

- PRINT SIDE
  - (1) PRINT SIDE
  - (2) LIST
  - (3)
    - (1) DOUBLE
    - (2)

- PRINT RESOLUTION
  - (1) PRINT RESOLUTION
  - (2) LIST
  - (3)
    - (1) 600dpi
    - (2)

**COMMON SETTING LIST** — 481

- a
  - (1) READ SIZE
  - (2) PRINT SIZE
- b
  - (1) READ DIRECTION
  - (2) PRINT DIRECTION
- c
  - (1) READ SIDE
  - (2) PRINT SIDE
- d
  - (1) READ RESOLUTION
  - (2) PRINT RESOLUTION

# FIG.19

501

SCANNER NAME — 511

SCANNER SELECTION — 521

MODEL NAME — 512

DRIVER DOWNLOAD — 522

NETWORK ADDRESS — 513

INSTALLATION POSITION — 514

DRIVER NAME — 515

REGISTRATION — 531

CANCEL — 532

EP 1 542 086 A2

# FIG.20

EP 1 542 086 A2

<u>601</u>

| | | |
|---|---|---|
| CONDITION NAME | READ SIZE (611) | LOGIC SCANNER SELECTION (621) |
| CONDITION CLASSIFICATION | LIST ▼ (612) | FIXED CONDITION SELECTION (622) |

SETTING ITEMS

| A4 | ▲ |
|---|---|
| A3 | |
| | ▼ |

(614)

ADD ← (615)

DELETE → (616)

(613)

REGISTRATION (631)    CANCEL (632)

# FIG.21

701

| PRINTING CONDITION SETTING UI | ✕ |

711

PRINT SIZE — 711a — A4 ▼

START — 731

PRINT DIRECTION — 711b — VERTICAL ▼

CANCEL — 732

PRINT SIDE — 711c — TWO-SIDES ▼

PRINT RESOLUTION — 711d — 600dpi ▼

PRINTING METHOD — 711e — ADF ▼

ENDORSER — 711f — ON ▼

712 ☑ AUTOMATIC SELECTION OF SCANNER

713 — SCANNER SELECTION

721 ☑ PRINTING OF SCANNED IMAGE

722 ☑ STORING OF SCANNED IMAGE FILE

FILE NAME   ftp://storage01/image01.tif

# FIG.22

801

SCANNER SELECTION UI    ✕

PLEASE SELECT SCANNER AND SET DOCUMENT.

| SCANNER | INSTALLATION POSITION |
|---------|------------------------|
| SCANNER 0 | 4F  WINDOW SIDE |
| SCANNER 1 | 5F  CENTER PASSAGE |
| SCANNER 2 | 3F  ACCOUNTS DEPT. |

811

821

OK

831

CANCEL

# FIG.23

<u>802</u>

| SCANNER SELECTION RESULT NOTICE UI | ✕ |

FOLLOWING SCANNER IS SELECTED:

SCANNER 1 (5F CENTER PASSAGE).

PLEASE SET DOCUMENT AND PRESS "OK" BUTTON.

822

| OK |

# FIG.24

901

| PRINTER SELECTION UI | ✕ |
|---|---|

SELECTED SCANNER: SCANNER 1 (5F CENTER PASSAGE)

| PRINTER | INSTALLATION POSITION |
|---|---|
| PRINTER 0 | 4F WINDOW SIDE |
| PRINTER 1 | 5F CENTER PASSAGE |
| PRINTER 2 | 3F ACCOUNTS DEPT. |

911

921

| OK |
|---|

941

| DETAIL |
|---|

931

| CANCEL |
|---|

# FIG.25

902

PRINTER SELECTION RESULT NOTICE UI    ✕

FOLLOWING PRINTER IS SELECTED:

PRINTER 1 (5F CENTER PASSAGE)

PLEASE PRESS "OK" BUTTON.

922

OK

942

DETAIL

# FIG.26

1121 CLIENT PC

1111 AUTHENTICATION SERVER

1112 ACL SERVER

1113 POLICY SERVER

1131

1122 PROXY SERVER

1101 PRINTER — 1104 PRINT SERVICE

1102 SCANNER — 1105 SCAN SERVICE

1103 STORAGE DEVICE — 1106 STORAGE SERVICE

EP 1 542 086 A2

FIG.27

| | | |
|---|---|---|
| CLIENT PC 1121 | AUTHENTICATION SERVER 1111 | ACL SERVER 1112 | POLICY SERVER 1113 |

PROXY SERVER 1122

PRINT SERVER 1104 — PRINT SERVICE 1107

SCAN SERVER 1105 — SCAN SERVICE 1108

STORAGE SERVER 1106 — STORAGE SERVICE 1109

PRINTER 1101

SCANNER 1102

STORAGE DEVICE 1103

1131

# FIG.28

1101

| 1301 | 1302 | 1303 | 1304 |
| CPU | ROM | RAM | HDD |

1331

SYSTEM BUS

| PRINT UNIT | OPERATION -PANEL/ DISPLAY UNIT | COMMUNICATION UNIT | USB IF | CENTRONICS IF |

| 1311 | 1312 | 1313 | 1321 | 1322 |

EP 1 542 086 A2

# FIG.29

# FIG.30

EP 1 542 086 A2

1103

| 1501 | 1502 | 1503 | 1504 |
|------|------|------|------|
| CPU | ROM | RAM | HDD |

SYSTEM BUS                                      1531

| | | |
|------|------|------|
| OPERATION-PANEL/DISPLAY UNIT | COMMUNICATION UNIT | USB IF |

| 1512 | 1513 | 1521 |

# FIG.31

EP 1 542 086 A2

1121

1601      1602      1603      1604

| CPU | ROM | RAM | HDD |
|-----|-----|-----|-----|

1631

SYSTEM BUS

| OPERATION PANEL UNIT | DISPLAY UNIT | COMMUNICATION UNIT | USB IF | CENTRONICS IF | SCSI IF |
|---|---|---|---|---|---|

1611     1612     1613     1621     1622     1623

# FIG.32

1122

EP 1 542 086 A2

# FIG.33

1107

EP 1 542 086 A2

# FIG.34

1108

CPU 1901

ROM 1902

RAM 1903

HDD 1904

SYSTEM BUS 1931

OPERATION PANEL UNIT 1911

DISPLAY UNIT 1912

COMMUNICATION UNIT 1913

USB IF 1921

SCSI IF 1923

EP 1 542 086 A2

# FIG.35

EP 1 542 086 A2

1109

| 2001 | 2002 | 2003 | 2004 |
|------|------|------|------|
| CPU | ROM | RAM | HDD |

SYSTEM BUS — 2031

| OPERATION PANEL UNIT | DISPLAY UNIT | COMMUNICATION UNIT | USB IF |
|------|------|------|------|
| 2011 | 2012 | 2013 | 2021 |

# FIG.36

PRINTER OPERATION SCREEN — 2101

PRINTER :

NAME : SALES DEPT PRINTER ▽

DETAIL SETTING OF PRINTING CONDITION

PRINT RANGE:

● ALL PAGES

○ CURRENT PAGE

○ DESIGNATED PAGES :

SETTING OF AUTHENTICATION INFORMATION — 2121

2111

OK   CANCEL   HELP

EP 1 542 086 A2

# FIG.37

2201

**AUTHENTICATION INFORMATION SETTING SCREEN** ⊠

REQUESTING USER NAME :

| YAMADA TAROH |

ORGANIZATION NAME :

| *** COMPANY | ▽ |

ORGANIZATION GROUP NAME :

| —— SALES DEPT. | ▽ |

ORGANIZATION TITLE :

| DEPT. MANAGER | ▽ |

USER NAME :

| YAMADA TAROH | ▽ |

2211

| OK | | CANCEL | | HELP |

FIG.38

```
<bm:create_job xmlns:bm="urn:schemas-bmlinks-jp:service:bmlinks-1-2">
  <requesting-user-name>Yamada Taroh</requesting-user-name>        38-1
  <job-instruction>
    <job-instruction-params>        38-2
      <job-name>sample-job</job-name>
      <optional-attributes-fidelity>false</optional-attributes-fidelity>
      <copies>1</copies>
      <finishings enc:arrayType="bm:finishing[1]">
        <finishing>staple</finishing>
      </finishings>
      <document-format>image/tiff</document-format>
    </job-instruction-params>
    <notification-instruction>
      <notification-recipient>http://192.168.1.4/event</notification-recipient>
      <events enc:arrayType="bm:event[2]">
        <event>job-completed</event>
        <event>job-canceled</event>
      </events>
    </notification-instruction>
  </job-instruction>
</bm:create_job>
```

38

EP 1 542 086 A2

# FIG.39

```
<bm:create_job xmlns:bm="urn:schemas-bmlinks-jp:service:bmlinks-1-2">
  <requesting-user-name>Yamada Taroh</requesting-user-name>        39-1
  <x-ORG-name> *** COMPANY </x-ORG-name>
  <x-ORG-group-name> --- SALES DEPT. </x-ORG-group-name>
  <x-ORG-title> DEPT. MANAGER </x-ORG-title >                      39-3
  <job-instruction>
    <job-instruction-params>
      <job-name>sample-job</job-name>        39-2
      <optional-attributes-fidelity>false</optional-attributes-fidelity>
      <copies>1</copies>
      <finishings enc:arrayType="bm:finishing[1]">
        <finishing>staple</finishing>
      </finishings>
      <document-format>image/tiff</document-format>
    </job-instruction-params>
    <notification-instruction>
      <notification-recipient>http://192.168.1.4/event</notification-recipient>
      <events enc:arrayType="bm:event[2]">
        <event>job-completed</event>
        <event>job-canceled</event>
      </events>
    </notification-instruction>
  </job-instruction>
</bm:create_job>
```

39

# FIG.40

```
<bm:create_jobResponse
     xmlns:bm="urn:schemas-bmlinks-jp:service:bmlinks-1-2">
  <result-code>ok</result-code>            40-1
  <job-id>001</job-id>                     40-2
  <notification-subscription-id>1</notification-subscription-id>
  <data-sink-uri>http://192.168.1.4/spool/job-001</data-sink-uri>   40-3
</bm:create_jobResponse>
```

40

# FIG.41A

**CLIENT PC**

APPLICATION

OPERATION-PANEL
/DISPLAY UNIT
~2611

PRINTER DRIVER

AUTH. INFO.
RECEIVING FUNCTION

IC CARD IF
~2612

AUTH. INFO.
INSERTING FUNCTION

BIOMETRIC
AUTH. UNIT

~2601    ~2613

PORT MONITOR

~1121    ~1131

# FIG.41B

**CLIENT PC**

APPLICATION

PRINTER DRIVER

~2601

PORT MONITOR

OPERATION-PANEL
/DISPLAY UNIT
~2611

PROXY SERVICE

AUTH. INFO.
RECEIVING FUNCTION

IC CARD IF
~2612

AUTH. INFO.
INSERTING FUNCTION

BIOMETRIC
AUTH. UNIT

~2602    ~2613

PORT MONITOR

~1121    ~1131

# FIG.41C

**CLIENT PC**

APPLICATION

PRINTER DRIVER

~2601

PORT MONITOR

~1121    ~1131

~1122

PORT MONITOR

OPERATION-PANEL
/DISPLAY UNIT
~2611

PROXY SERVICE

AUTH. INFO.
RECEIVING FUNCTION

IC CARD IF
~2612

AUTH. INFO.
INSERTING FUNCTION

BIOMETRIC
AUTH. UNIT

~2602    ~2613

**PROXY SERVER**

EP 1 542 086 A2

## FIG.42

| IP ADDRESS | 192.168.0.2 | 192.168.12.1 | 192.168.2.4 |
|---|---|---|---|
| Requesting User Name | Yamada Taroh | Suzuki Jiroh | Satoh Saburoh |
| x-ORG-name | *** COMPANY | *** COMPANY | *** CORPORATION |
| x-ORG-group-name | --- SALES DEPT. | --- PROD. DEPT. | --- GEN. AFFAIRS DEPT. |
| x-ORG-group-name-1 | 3RD SALES SECT. | 2ND PROD. SECT. | — |
| x-ORG-group-name-2 | 2ND GROUP | — | — |
| x-ORG-title | DEPT. MANAGER | SECT. MANAGER | LEADER |

EP 1 542 086 A2

FIG.43

EP 1 542 086 A2

START

S1111

SETTING OF AUTH. INFO. INSERT PROCESSING ?

ADVANCE RECEIVING

FOLLOW-UP RECEIVING

NONE

S1121

ADVANCE RECEIVING IS DONE ?

YES

NO

S1131

AUTH. INFO. RECEIVE PROCESSING

S1122

AUTH. INFO. INSERT PROCESSING

S1132

AUTH. INFO. INSERT PROCESSING

S1141

COMMAND IS SENT

END

# FIG.44

START

S1201 — AUTH. INFO. INSERTION IS DONE ? — YES

NO

S1211 — SETTING OF AUTH. INFO. INSERT PROCESSING ?

ADVANCE RECEIVING

FOLLOW-UP RECEIVING

NONE

S1221 — ADVANCE RECEIVING IS DONE ?

YES     NO

S1223 — AUTH. INFO. RECEIVE PROCESSING

S1231 — AUTH. INFO. RECEIVE PROCESSING

S1222 — AUTH. INFO. INSERT PROCESSING

S1224 — AUTH. INFO. INSERT PROCESSING

S1232 — AUTH. INFO. INSERT PROCESSING

S1241 — COMMAND IS SENT

END

EP 1 542 086 A2

# FIG.45

EP 1 542 086 A2

## FIG.46

```
//
// query
//
<bm:query-capability xmlns:bm="urn:schemas-bmlinks-jp:service:bmlinks-1-2">
  <requesting-user-name>Yamada Taroh</requesting-user-name>          46-1
</bm:query-capabilityResponse>
```

46

# FIG.47

```
//
// response to query
//
<bm:query-capabilityResponse
 xmlns:bm="urn:schemas-bmlinks-jp:service:bmlinks-1-2">
  <requesting-user-name>Yamada Taroh</requesting-user-name>        47-1
  <capabilities>
    //
    // First three are standard parameters
    //
    <staple-supported>no</staple-supported>
    <color-supported>yes</color-supported>                          47-2
    <duplex-supported> none, horizontal, vertical </duplex-supported>
    //
    // followings are extended parameters
    //
    <x-ORG-name-supported> yes </x-ORG-name-supported>
    <x-ORG-group-name-supported> yes  </x-ORG-group-name-supported>
    <x-ORG-group-name-1-supported> yes  </x-ORG-group-name-1-supported>
    <x-ORG-group-name-2-supported> yes  </x-ORG-group-name-2-supported>    47-3
    <x-ORG-group-name-3-supported> no  </x-ORG-group-name-3-supported>
    <x-ORG-group-name-4-supported> no  </x-ORG-group-name-4-supported>
    <x-ORG-title-supported> yes </x-ORG-title-supported>
  </capabilities>
</bm:query-capabilityResponse>
```

47

# FIG.48

START

S1401

EXTENDED
FUNCTION IS
SUPPORTED
?

NO

YES

S1402

SETTING OF
SUPPLY OF EXTENDED.
FUNC. INFO.

RESTRICTED

NOT RESTRICTED

S1403

RESPONSE TO FUNC. INFO.
SUPPLY REQUEST
(STANDARD + EXTENDED FUNC. INFO.)

S1404

RESPONSE TO FUNC. INFO.
SUPPLY REQUEST
(STANDARD FUNC. INFO.)

END

# FIG.49

```
<idx:validate_user xmlns:sec_1=" urn:schemas-bmlinks-jp:service:bmlinks-sec-ext">
<requesting-user-name>Yamada Taroh</requesting-user-name>    ~ 49-1
<x-id-extention>
<x-ORG-name> *** COMPANY </x-ORG-name>
<x-ORG-group-name> --- SALES DEPT </x-ORG-group-name>    } 49-2
<x-ORG-title> DEPT. MANAGER </x-ORG-title >
</x-id-extention>
</idx:validate_user>
```

49

# FIG.50

50

```
//
// user identified
//
<idx:validate_userResponse
 xmlns:sec_1="urn:schemas-bmlinks-jp:service:bmlinks-sec-ext">
  <requesting-user-name>Yamada Taroh</requesting-user-name>
  <x-id-extention>
    <x-ORG-name> *** COMPANY </x-ORG-name>
    <x-ORG-group-name> --- SALES DEPT </x-ORG-group-name>
    <x-ORG-title> DEPT. MANAGER </x-ORG-title >
  </x-id-extention>
  <x-id-key-hush>
    9a02 d75f a069 77d1 4939 69d2 b549 1676
    6a18 f158 9695 6838 e338 4671 97c4 778b
    e637 cf63 91a7 f3b9 1aa1 99aa 1568 406a
  <x-id-key-hush>
</idx:validate_userResponse>
```

# FIG.51

```
//
// user NOT identified
//
<idx:validate_userResponse
 xmlns:sec_1="urn:schemas-bmlinks-jp:service:bmlinks-sec-ext">
  <user-not-found></user-not-found>
</idx:validate_userResponse>
```

51

# FIG.52

| DEVICE | ITEM OF AUTH. INFO. | VALUE OF AUTH. INFO. | AUTHORITY |
|---|---|---|---|
| SALES DEPT PRINTER | \<x-ORG-name\> | *** COMPANY | +r+w |
| SALES DEPT PRINTER | \<x-ORG-name\> | *** CORPORATION | +r−w |
| SALES DEPT PRINTER | \<x-ORG-group-name\> | --- SALES DEPT | +r+w |
| SALES DEPT PRINTER | \<x-ORG-group-name\> | --- PROD. DEPT | +r−w |
| SALES DEPT PRINTER | \<x-ORG-group-name\> | --- GEN AFFAIRS DEPT | −r−w |
| SALES DEPT PRINTER | \<x-ORG-title\> | SECT MANAGER | −r−w |
| SALES DEPT PRINTER | \<x-ORG-title\> | DEPT MANAGER | +r+w |

52-1

52-2

52-3

EP 1 542 086 A2

## FIG.53

EP 1 542 086 A2

```
<idx:access_permission
 xmlns:sec_1="urn:schemas-bmlinks-jp:service:bmlinks-sec-ext">
  <requesting-user-name>Yamada Taroh</requesting-user-name>          53-1
  <x-id-extention>
    <x-ORG-name> *** COMPANY </x-ORG-name>
    <x-ORG-group-name> --- SALES DEPT </x-ORG-group-name>          53-2
    <x-ORG-title> DEPT. MANAGER </x-ORG-title >
  </x-id-extention>
  <access-target>
    <requested-operation>create_job</requested-operation>          53-3
    <parameters enc:arrayType="idx:parameters[1]">
      <parameter>duplex</parameter>
    </parameters>
</idx: access_permission >
```

53 {

# FIG.54

EP 1 542 086 A2

```
<idx:access_permissionResponse
 xmlns:sec_1="urn:schemas-bmlinks-jp:service:bmlinks-sec-ext">
    <permissions enc:arrayType="idx:permissions[1]">
     <permission>
        <parameter>color</parameter> //PRINT COLOR
        <value>black-and-white</value > //MONO CHRO
        <allowed>MUST</allowed > //MANDATORY
     </permission>
     <permission>
        <parameter>duplex</parameter> //PRINT COLOR
        <value>horizontal</value > //LATERAL, DOUBLE SIDE PRINT
        <allowed>MUST</allowed > //MANDATORY
     </permission>
     <permission>
        <parameter>layout</parameter> //LAYOUT
        <value>2</value > //2up
        <allowed>MUST</allowed > //MANDATORY
     </permission>
     <permission>
        <parameter>pages/parameter> //NO. OF PAGES
        <value>6</value > //6 PAGES
        <allowed>Max</allowed > //MAX. NO. OF ALLOWABLE PAGES
     </permission>
</idx: access_permission >
```

54

54-1

## FIG.55

```
<bm:create_job xmlns:bm="urn:schemas-bmlinks-jp:service:bmlinks-1-2">
  <requesting-user-name>Yamada Taroh</requesting-user-name>
  <job-instruction>
    <job-instruction-params>
      <job-name>sample-job</job-name>
      <optional-attributes-fidelity>false</optional-attributes-fidelity>
      <copies>2</copies>
      <finishings enc:arrayType="bm:finishing[1]">
        <finishing>staple</finishing>
      </finishings>
      <color>color</color>              CONDITION 1
      <duplex>none</duplex>             CONDITION 2
      <document-format>image/tiff</document-format>
    </job-instruction-params>
  </job-instruction>
</bm:create_job>
```

55

EP 1 542 086 A2

FIG.56

EP 1 542 086 A2

```
<bm:create_job xmlns:bm="urn:schemas-bmlinks-jp:service:bmlinks-1-2">
  <requesting-user-name>Yamada Taroh</requesting-user-name>
  <job-instruction>
    <job-instruction-params>
      <job-name>sample-job</job-name>
      <optional-attributes-fidelity>false</optional-attributes-fidelity>
      <copies>2</copies>
      <finishings enc:arrayType="bm:finishing[1]">
        <finishing>staple</finishing>
      </finishings>
      <color>black-and-white</color>       CONDITION 1
      <duplex>horizontal</duplex>          CONDITION 2
      <document-format>image/tiff</document-format>
    </job-instruction-params>
  </job-instruction>
</bm:create_job>
```

56

**FIG.57**

EP 1 542 086 A2

```
                          ┌─────────┐
                          │  START  │
                          └─────────┘
                               │
                               ▼          S1501
                        ╱──────────────╲      NO
                       ╱  AUTH. INFO.   ╲──────────────────────────────┐
                       ╲   EXISTS ?     ╱                              │
                        ╲──────────────╱                              │
                               │ YES                                   ▼        S1531
                               ▼          S1502               ╱──────────────╲      NO
                    ┌──────────────────┐                     ╱    ACCESS       ╲────────┐
                    │   AUTH. REQUEST  │                     ╲  CONTROL IS     ╱        │
                    └──────────────────┘                      ╲    DONE ?     ╱         │
                               │                               ╲─────────────╱          │
                               ▼          S1503                       │ YES             │
                YES     ╱──────────────╲      NO                      ▼       S1532     │
         ┌─────────────╱   AUTH. IS    ╲───────────┐          ╱──────────────╲     YES │
         │             ╲   GRANTED ?   ╱           │         ╱  IT IS LISTED ?╲────────┤
         │              ╲──────────────╱           │          ╲──────────────╱         │
         │                                         │                 │ NO              │
         ▼   S1511                                 ▼  S1521          ▼                 │
  ┌──────────────────┐                    ┌──────────────────┐   ┌───────────┐        │
  │ ACCESS AUTHORITY │                    │   POLICY INFO.   │   │ REJECTION │        │
  │     REQUEST      │                    │  SUPPLY REQUEST  │   └───────────┘        │
  └──────────────────┘                    └──────────────────┘                       │
         │                                         │                                  │
         ▼   S1512                                 ▼  S1522                           │
  ╱──────────────╲   NO                   ┌──────────────────┐                        │
 ╱   AUTHORITY    ╲────────┐              │   POLICY INFO.   │                        │
 ╲   MATCHES ?    ╱        │              │  SUPPLY ANSWER   │                        │
  ╲──────────────╱         ▼              └──────────────────┘                        │
         │ YES      ┌───────────┐                  │                                  │
         │          │ REJECTION │                  ▼  S1523                           │
         │          └───────────┘         ┌──────────────────┐                        │
         │                                │ COMMAND IS REVISED│                        │
         │                                └──────────────────┘                        │
         │                                         │                                  │
         └─────────────────┬───────────────────────┘                                  │
                           ▼          S1541                                           │
                  ┌──────────────────┐                                                │
                  │   COMMAND IS     │◄──────────────────────────────────────────────┘
                  │    EXECUTED      │
                  └──────────────────┘
                           │
                           ▼
                       ┌────────┐
                       │  END   │
                       └────────┘
```

# FIG.58

```
                    START

S1601                          S1602
STAPLE        YES      REVISION IS    NO
EXISTS ?               POSSIBLE ?

   NO                     YES        S1603
                                              REJECTION
                      STAPLE REVISION

S1611                          S1612
PRINT COLOR   YES      REVISION IS    NO
EXISTS ?               POSSIBLE ?

   NO                     YES        S1613
                                              REJECTION
                    PRINT COLOR REVISION

S1621                          S1622
PRINT SIDE    YES      REVISION IS    NO
EXISTS ?               POSSIBLE ?

   NO                     YES        S1623
                                              REJECTION
                    PRINT SIDE REVISION

S1631                          S1632
LAYOUT EXISTS ?  YES   REVISION IS    NO
                       POSSIBLE ?

   NO                     YES        S1633
                                              REJECTION
                      LAYOUT REVISION

S1641                          S1642
NO. OF PAGES  YES      REVISION IS    NO
EXISTS ?               POSSIBLE ?

   NO                     YES        S1643
                                              REJECTION
                       REVISION OF
                       NO. OF PAGES

    END
```

**FIG.59**

EP 1 542 086 A2

```
                          ┌─────────┐
                          │  START  │
                          └─────────┘
                               │
                               ▼              S1701
                          ╱─────────╲
                         ╱ AUTH. INFO.╲      YES
                        ╱  INSERTION IS ╲──────────────────┐
                        ╲    DONE ?     ╱                   │
                         ╲─────────────╱                    │
                               │ NO                         │
                               ▼              S1711          │
      ADVANCE RECEIVING   ╱─────────╲     FOLLOW-UP RECEIVING │
      ┌───────────────────  SETTING OF ─────────────────┐    │
      │                  ╱ AUTH. INFO. INSERT ╲          │    │
      │                  ╲   PROCESSING   ╱               │    │
      │        S1721      ╲      ?      ╱                 │    │
      ▼   ╱─────────╲      ╲──────────╱                  │    │
  YES ╱  ADVANCE  ╲ NO     │ NONE                        │    │
  ┌───  RECEIVING IS ───┐   │                             │    │
  │   ╲  DONE ?   ╱    │   │                             │    │
  │    ╲─────────╱     │   │                             │    │
  │               S1723 ▼   │                        S1731 ▼   │
  │          ┌──────────────┐│                   ┌──────────────┐│
  │          │ AUTH. INFO.  ││                   │ AUTH. INFO.  ││
  │          │RECEIVE PROCESSING│                │RECEIVE PROCESSING│
  │          └──────────────┘│                   └──────────────┘│
  │  S1722          S1724 ▼   │                        S1732 ▼   │
┌──────────────┐┌──────────────┐│                 ┌──────────────┐│
│ AUTH. INFO.  ││ AUTH. INFO.  ││                 │ AUTH. INFO.  ││
│INSERT PROCESSING││INSERT PROCESSING│             │INSERT PROCESSING│
└──────────────┘└──────────────┘│                 └──────────────┘│
      │               │         │                                 │
      └───────────────┴─────────┤                                 │
                                ▼          S1751                   │
                      ┌──────────────────┐                        │
                      │ PROCESSING OF FIG. 60 │                   │
                      └──────────────────┘                        │
                                │          S1741                   │
                                ▼                                  │
                      ┌──────────────────┐                        │
                      │  COMMAND IS SENT │◄───────────────────────┘
                      └──────────────────┘
                                │
                                ▼
                          ┌─────────┐
                          │   END   │
                          └─────────┘
```

**FIG.60**

EP 1 542 086 A2

START
(FROM STEP S1751 OF FIG. 59)

S1801
AUTH. INFO. EXISTS ? — NO

YES — S1802
AUTH. REQUEST

S1803
AUTH. IS GRANTED ?

YES — S1811
ACCESS AUTHORITY REQUEST

S1812
AUTHORITY MATCHES ? — NO → REJECTION

YES

NO — S1821
POLICY INFO. SUPPLY REQUEST

S1822
POLICY INFO. SUPPLY ANSWER

S1823
COMMAND IS REVISED

S1831
ACCESS CONTROL IS DONE ? — NO

YES — S1832
IT IS LISTED ? — YES

NO
REJECTION

END
(TO STEP S1751 OF FIG. 59)

# FIG.61

EP 1 542 086 A2

# FIG.62

18  16  17  19

24

22

23

20

15

13

24

15  14

# FIG.63

3

**HOST**

APPLICATION  31

PRINTER DRIVER  32

1

**PRINTER**

PRINTER ENGINE  33

MEMORY UNIT  34

PRINTER CONTROLLER  35

# FIG.64

EP 1 542 086 A2

```
                                                                    32
┌──────────────────────────────────────────────────────────────────────┐
│  PRINTER DRIVER                                                         │
│                   41                                              42    │
│  ┌────────────────────┐  ┌──────────────────────────────────────────┐ │
│  │ UI SETTING UNIT    │  │ GRAPHIC OPERATION UNIT                    │ │
│  │                    │  │                                      44   │ │
│  │               43   │  │  ┌─────────────────────────────────────┐ │ │
│  │  ┌──────────────┐  │  │  │      OBJECT SEPARATION UNIT         │ │ │
│  │  │ CONCENTRATION│  │  │  └─────────────────────────────────────┘ │ │
│  │  │ SETTING UNIT │  │  │   45            44            46          │ │
│  │  └──────────────┘  │  │  ┌────────┐ ┌──────────┐ ┌────────────┐  │ │
│  │                    │  │  │ IMAGE  │ │ GRAPHIC  │ │ CHARACTER  │  │ │
│  └────────────────────┘  │  │PROCESS.│ │PROCESSING│ │ PROCESSING │  │ │
│                          │  │ UNIT   │ │   UNIT   │ │    UNIT    │  │ │
│                          │  └────────┘ └──────────┘ └────────────┘  │ │
│                          │                                      48   │ │
│                          │  ┌─────────────────────────────────────┐ │ │
│                          │  │  CONCENTRATION COMPENSATION UNIT    │ │ │
│                          │  └─────────────────────────────────────┘ │ │
│                          │                                      49   │ │
│                          │  ┌─────────────────────────────────────┐ │ │
│                          │  │    INK JET IMAGE CREATION UNIT      │ │ │
│                          │  └─────────────────────────────────────┘ │ │
│                          └──────────────────────────────────────────┘ │
└──────────────────────────────────────────────────────────────────────┘
```

# FIG.65

(a)
PRINT IMAGE

(b)
OBJECT SEPARATION

(c)
OBJECT INFO. ARRANGEMENT

ABC

IMAGE

ABC

IMAGE

KIND OF OBJECT: CHARACTER
COLOR: RGB (255, 0, 0)

ABC

KIND OF OBJECT: GRAPHIC (CIRCLE)
COLOR: RGB (0, 255, 0)

KIND OF OBJECT: IMAGE
COLOR: RGB (0, 0, 255)

IMAGE

EP 1 542 086 A2

# FIG.66

**(a)**
DRAWING COMMAND
FROM HIGH-ORDER MODULE

**(b)**
SEPARATION
AND ARRANGEMENT

**(c)**
PROCESSING ON
OBJECT BASIS

GRAPHIC:
LINE DRAWING
COMMAND 1

WRITE BLACK LINE
WITH THICKNESS OF N
FROM STARTING POINT
$(x1, y1)$ TO $(x2, y2)$

GRAPHIC:
LINE DRAWING
COMMAND 1

GRAPHIC:
LINE DRAWING
COMMAND 2

GRAPHIC:
LINE DRAWING
COMMAND 3

CONCENTRATION
PROCESSING

TEXT:
CHARACTER DRAWING
COMMAND 1

WRITE BLACK
CHARACTERS "ABCDE"
FROM STARTING POINT
$(x3, y3)$

GRAPHIC:
LINE DRAWING
COMMAND 2

GRAPHIC:
LINE DRAWING
COMMAND 3

TEXT:
CHARACTER DRAWING
COMMAND 1

CONCENTRATION
PROCESSING

IMAGE:
DRAWING COMMAND 1

IMAGE:
DRAWING COMMAND 1

CONCENTRATION
PROCESSING

EP 1 542 086 A2

## FIG.67A

CONCENTRATION 100%

## FIG.67B

CONCENTRATION 70%

## FIG.68

CONCENTRATION ADJUST LEVEL

56a ◯ AUTO

56b ● OPTION

54 ☐ SPECIFY ON SHEET CLASS BASIS

PPC ▼

55

53a ☑ TEXT (CHARACTER) 57a 70%

53b ☑ GRAPHICS (LINE) 57b 70%

53c ☑ GRAPHICS (FILL) 57c 70%

53d ☑ IMAGE 57d 70%

☑ CONCENTRATION ADJUST MODE

51

☐ CONC. ADJUSTMENT IS ENABLED IN DUPLEX MODE

52

58 OK

59 CANCEL

## FIG.69

| | PRINT SIDE | CONC. ADJUST OFF | ON AUTO | ON OPTION |
|---|---|---|---|---|
| SINGLE SIDE | PRINT SIDE | 100/100/100/100 | 100/70/70/70 | PER SETTING VALUE |
| DOUBLE SIDE | 1ST SIDE | 100/100/100/100 | 85/70/70/70 | DITTO |
| DOUBLE SIDE | 2ND SIDE | 100/100/100/100 | 100/70/70/70 | DITTO |

# FIG.70

| | |
|---|---|
| OBJECT SEPARATION | S1 |
| CONC. PARAMETER INFO. OF EACH OBJECT IS RECEIVED FROM CONC. SETTING UNIT | S2 |
| COLOR INFO. (RGB) IS COMPUTED BASED ON CONC. PARAMETER INFO. OF EACH OBJECT | S3 |
| BIT MAP IS CREATED BASED ON COLOR INFO. PAGE IMAGE IS CREATED. | S4 |
| DATA IS CONVERTED TO HEAD INFO. AND COMPRESSION PROCESSING IS DONE | S5 |
| DATA IS SENT | S6 |
| PRINTING | S7 |

## FIG.71A

CONCENTRATION 100%

## FIG.71B

CONCENTRATION 70%

# FIG.72A

CONCENTRATION 100%

# FIG.72B

CONCENTRATION 70%